(19) Europäisches Patentamt
European Patent Office
Office européen des brevets

(11) **EP 1 815 267 B1**

(12) **EUROPÄISCHE PATENTSCHRIFT**

(45) Veröffentlichungstag und Bekanntmachung des Hinweises auf die Patenterteilung:
**10.06.2015 Patentblatt 2015/24**

(21) Anmeldenummer: **05819140.4**

(22) Anmeldetag: **15.11.2005**

(51) Int Cl.:
***G01S 13/76*** (2006.01)

(86) Internationale Anmeldenummer:
**PCT/EP2005/055996**

(87) Internationale Veröffentlichungsnummer:
**WO 2006/051119 (18.05.2006 Gazette 2006/20)**

(54) **SYMMETRISCHES MEHRWEGVERFAHREN ZUR BESTIMMUNG DES ABSTANDES ZWEIER SENDEREMPFÄNGER**

SYMMETRICAL MULTIPATH METHOD FOR DETERMINING THE DISTANCE BETWEEN TWO TRANSCEIVERS

PROCEDE SYMETRIQUE A TRAJETS MULTIPLES POUR DETERMINER LA DISTANCE ENTRE DEUX EMETTEURS-RECEPTEURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.11.2004 US 628494 P**
**15.11.2004 DE 102004055651**

(43) Veröffentlichungstag der Anmeldung:
**08.08.2007 Patentblatt 2007/32**

(73) Patentinhaber: **Nanotron Technologies GmbH**
**10555 Berlin (DE)**

(72) Erfinder:
• **MENZER, Lars**
**Santa Cruz, California 95060 (US)**

• **IANELLI, Zbigniew**
**13355 Berlin (DE)**
• **HACH, Rainer**
**14163 Berlin (DE)**

(74) Vertreter: **Eisenführ Speiser**
**Patentanwälte Rechtsanwälte PartGmbB**
**Anna-Louisa-Karsch-Strasse 2**
**10178 Berlin (DE)**

(56) Entgegenhaltungen:

| | |
|---|---|
| WO-A-03/077432 | WO-A1-03/036833 |
| DE-A1- 10 161 507 | US-A- 5 959 568 |
| US-A1- 2001 053 174 | US-B1- 6 483 454 |

**Beschreibung**

TECHNOLOGISCHE HINTERGRUND ODER ERFINDUNG

1. Gebiet der Erfindung.

Die Erfindung betrifft ein Verfahren zur Bestimmung des räumlichen Abstandes zweier drahtlos kommunizierender Senderempfänger von -einander innerhalb einer Reichweite der Größenordnung von 10 km. Weiterhin betrifft die -Erfindung ein System mindestens zweier drahtlos kommunizierender Senderempfänger, das zur Bestimmung des räumlichen Abstandes der Senderempfänger von einander innerhalb einer Reichweite der Größenordnung von 10 km ausgebildet ist. Schließlich betrifft die Erfindung einen Senderempfänger zur Durchführung des erwähnten Verfahrens.

2. Stand der Technik

Zur Entfernungsmessung von mobilen und stationären Objekten wird auf drei unterschiedliche Medien zurückgegriffen: Funk, Infrarot und Ultraschall. Dabei wird hauptsächlich das sogenannte Impulslaufzeitveifahren verwendet. Die Laufzeit übertragener Impulse wird durch Messung der Ankunftszeit (Time of Arrival = TOA) und Vergleich mit der Startzeit der Impulse bestimmt. Mit der bekannten Ausbreitungsgeschwindigkeit im Medium wird dann aus der Impulslaufzeit, die im Rahmen dieser Anmeldung auch als Signallaufzeit bezeichnet wird, die Entfernung berechnet.

Ein anderes Verfahren zur Entfernungsmessung misst die Signalstärke (Receive Signal Strength = RSS) empfangener Impulse und schätzt daraus die Entfernung ab. Die Signalstärke wird durch Störungen, Abschwächung und Reflektionen stark beeinflusst. Erfahrungsgemäß weist dieses Verfahren eine zu große Ungenauigkeit und Unzuverlässigkeit für die Entfernungsmessung auf.

Ein weiteres Verfahren, mit dem ebenfalls die Entfernung berechnet werden kann, ist die Positionsbestimmung durch Winkelbestimmung (Angel of Arrival = AOA) und Triangulation. Die Entfernungsbestimmung eines Objekts erfordert jedoch zwei kooperierende Einrichtungen mit bekannter Entfernung zueinander. Die Winkelmessung ist verhältnismäßig aufwendig (spezielle Antennen, zeitlicher Aufwand) und bedingt durch Störungen, Abschwächung und Reflektionen ungenau. Bei nicht vorhandener Sichtverbindung ist die Winkelmessung je nach verwendetem Medium stark eingeschränkt oder nicht mehr möglich. Erfahrungsgemäß weist auch dieses Verfahren eine zu große Ungenauigkeit und Unzuverlässigkeit für die Entfernungsmessung auf.

Infrarot- und Ultraschallverfahren nach dem Impulslaufzeitverfahren weisen ebenfalls eine beträchtliche Reihe von Nachteilen auf. Die Reichweite der Systeme ist nicht sehr groß, gewöhnliche Umwelteinflüsse wie Tageslicht, Schallquellen oder Reflektionen stören diese stark und Signalabschwächungen z. B. durch starken Rauch oder Dunst führen bereits zum Ausfall dieser Systeme. Auf Grund der genannten Nachteile sind diese Verfahren für die präzise und zuverlässige Entfernungsmessung nicht geeignet

Impulslaufzeitverfahren auf Basis von Funksignalen (englisch radio communication signals) sind gegen umweltbedingte Störungen weniger empfindlich und weisen erfahrungsgemäß die größte Genauigkeit auf.

Klassische Radarsysteme werden, was den Aufwand, die Störsicherheit und die eindeutige Identifikation von Objekten betrifft, als nachteilig eingeschätzt. Die Zuverlässigkeit und Genauigkeit hängt stark von den Reflektionseigenschaften des zu messenden Objektes und den Ausbreitungsbedingungen der Radarwellen ab. Es wird zusätzlich zum Impulslaufzeitverfahren das Winkelbestimmungsverfahren angewandt, welches die bereits genannten Nachteile aufweist. Die Übertragung von beliebigen Daten ist mit den klassischen Radarsystemen nicht möglich.

Weitverbreitete Systeme, welche die Entfernungsmessung nach dem Impulslaufzeitverfahren zur Positionsbestimmungen anwenden, sind die satellitengestützten Ortungssysteme. Dazu zählt beispielsweise das unter der Bezeichnung Global Positioning System (GPS) bekannte Ortungssystem. Die satellitengestützten Systeme weisen eine Reihe von Nachteilen auf. Der Aufbau und Betrieb der Infrastruktur ist sehr aufwendig und teuer. Die Verfügbarkeit ist bei eingeschränkter Sichtverbindung zu den Satelliten durch Abschwächung stark reduziert (z. B. enge Schluchten, Wald) und durch Abschattung nicht mehr gegeben (z. B. in Gebäuden). Zudem ist nur die eigene Positionsbestimmung möglich, nicht aber die Positionsbestimmung entfernter Objekte. Um die Entfernung zu einem entfernten Objekt zu bestimmen, bedarf es eines zusätzlichen Systems zur Nachrichtenübertragung, da dies über die Satelliten nicht möglich ist. Nur durch eine zweite Positionsbestimmung und Austausch der Positionsdaten ist eine Entfernungmessung möglich. Die Genauigkeit wird zudem als nicht ausreichend genau eingeschätzt, da sich die Fehler zweier Positionsbestimmungen bei der Entfernungsberechnung (1-3 m bei differentiellem GPS) addieren können. Weiterhin zeichnen sich die Geräte zur Positionsbestimmung durch zu lange Messzeiten von bis zu mehreren Minuten aus, was die Entfernungsbestimmung mobiler Objekte zu ungenau oder nicht mehr möglich macht Eine Übertragung von beliebigen Daten ist, wie bereits erwähnt, über die satellitengestützten Systeme nicht möglich. Zudem besteht eine Abhängigkeit vom Betreiber, der die Genauigkeit und Verfügbarkeit einschränken sowie für die Nutzung Gebühren erheben kann.

Eine weitere Möglichkeit der Entfernungsmessung ist die Positionsbestimmung von Mobilfunkteilnehmern mit Hilfe mobiler Endgeräte, z. 8. Mobiltelefonen für den Betrieb nach dem GSM-Standard. Allerdings wird die erreichbare Genauig-Genauigkeit der Positionsbestimmung von bestenfalls 60 m als sehr nachteilig eingeschätzt. Auch hier besteht eine Abhängigkeit vom Betreiber, der voranging für die Nutzung Gebühren erhebt.

Bei weiteren bekannten Verfahren und Systemen, die die Rundlaufzeit einer Folge von Funkimpulsen zwischen zwei Senderempfängern messen (aktives Impulsradar, vgl. z. B. US 6,483,454 B1), sind eine Reihe von Nachteilen vorhanden. Bei den bekannten Rundlaufzeitverfahren nach dem TOA-Prinzip (Time of Arrival), auch Zwei-Wege-Verfahren genannt, besteht eine sehr große Abhängigkeit der Genauigkeit der Positionsbestimmung von der Genauigkeit der Taktgeneratoren zur Zeitmessung. Bei gleichzeitiger Übertragung von Daten ergeben sich zur reinen Impulslaufzeit im Medium relativ lange Rundlaufzeitabstände, die durch die Übertragungzeit der Datenrahmen bedingt sind. Ein typisches Verhältnis ist 1:10.000. Sehr präzise Taktgeneratoren mit einer Genauigkeit von besser als $\pm$ 1 ppm und damit kostenintensive Bauteile sind notwendig um eine hohe Genauigkeit zu erzielen. Bei Einsatz kostengünstiger Taktgeneratoren ($\pm$ 50 ppm), wäre nur eine unzureichende Genauigkeit (ca. 10 m) erzielbar.

Die Erhöhung der Genauigkeit wird aus diesem Grund auch durch verkürzte Rundlaufzeitabstände erreicht. Dies hat allerdings zur Folge, dass weniger bis gar keine zusätzlichen Daten übertragen werden können und spezielle Nachrichtenprotokolle verwendet werden müssen. Standardisierte Nachrichtenprotokolle können nicht verwendet werden, was in Bezug auf Wiederverwendbarkeit oder Erweiterungsfähigkeit von Standards einen weiteren wesentlichen Nachteil dieser Verfahren darstellt.

Die erzielbare Genauigkeit ist bei den bekannten Verfahren weiterhin abhängig von der kleinsten Einheit der Zeitmessung. Für eine Erhöhung der Genauigkeit werden daher sehr kleine Zeiteinheiten verwendet, was den Einsatz sehr schneller Taktgeneratoren und Zeitzähler notwendig macht (30 cm Entfernung entspricht 1 ns Zeiteinheit bzw. 1 GHz Taktfrequenz). Derart schnellere Zeitzähler werden aber als sehr nachteilig eingeschätzt, da dies mit Erhöhung des Energieverbrauchs und der Kosten einer Realisierung einhergeht.

US 2001/053174 A1 beschreibt ein Verfahren zur Abstandsbestimmung im Bereich bis 1000 m, bei dem zwischen zwei Senderempfängem in zwei wechselseitigen Rundläufen Bits ausgetauscht werden. Anhand von Sende-, Empfangs-, Antwort- und Rundlaufzeiten wird ein Abstand zwischen den beiden Senderempfängern ermittelt.

ZUSAMMENFASSUNG DER ERFINDUNG

Aufgabe der Erfindung ist es, ein Verfahren zur Abstandsbestimmung anzugeben, dass sich innerhalb einer Reichweite der Größenordnung von 10 km durch eine im Vergleich mit bekannten Verfahren erhöhte Genauigkeit der Abstandsmessung auszeichnet und dabei zugleich den Einsatz von herkömmlichen Quarz-Taktgeneratoren mit einem Fehler von bis $\pm$ 50 ppm ermöglicht

Eine weitere Aufgabe der Erfindung ist es, ein Verfahren zur Abstandsbestimmung anzugeben, dass sich innerhalb einer Reichweite der Größenordnung von 10 km durch eine im Vergleich mit bekannten Verfahren erhöhte Genauigkeit der Abstandsmessung auszeichnet und dabei die Verwendung von Taktgeneratoren mit vergleichsweise geringen Frequenzen im Bereich von etwa 100 MHz zur Zeitmessung in den beteiligten Senderempfängem ermöglicht.

Eine weitere Aufgabe der Erfindung ist es, ein Verfahren zur Abstandsbestimmung anzugeben, dass sich innerhalb einer Reichweite der Größenordnung von 10 km durch eine im Vergleich mit bekannten Verfahrenerhöhte Genauigkeit der Abstandsmessung auszeichnet und dabei zugleich einen geringen Energiebedarf auf Seiten der beteiligten Senderempfänger erzeugt.

Eine weitere Aufgabe der Erfindung ist es, ein Verfahren zur Abstandsbestimmung anzugeben, dass sich innerhalb einer Reichweite der Größenordnung von 10km durch eine im Vergleich mit bekannten Verfahren erhöhte Genauigkeit der Abstandsmessung auszeichnet und dabei zugleich eine kostengünstige Herstellung der zur Durchführung des Verfahrens erforderlichen Senderempfänger ermöglicht

Eine weitere Aufgabe der Erfindung ist es, ein Verfahren zur Abstandsbestimmung anzugeben, dass in Verbindung mit bekannten, standardisierten Nachrichtenprotokollen wie Bluetooth, WLAN oder ZigBee verwendet werden kann, ohne dass die Sicherungsschicht dieser Protokolle (Schicht 2 nach dem ISO/OSI-Referenzmodell) modifiziert werden muss.

Gemäß einem ersten Aspekt der Erfindung wird ein Verfahren zur Bestimmung des räumlichen Abstandes zweier drahtlos kommunizierender Senderempfänger von einander innerhalb einer Reichweite der Größenordnung von 10 km bereit gestellt. Bei dem Verfahren der Erfindung initiieren (Engl.: set off) beide Senderempfänger jeweils mindestens einen Signalrundlauf, wobei ein Signalrundlauf die nachfolgend beschriebenen Schritte umfasst:

a) Senden mindestens eines Anfragedatenrahmens, der eine Sequenz von mindestens zwei Signalimpulsen mit vorbestimmtem Impulszeitabstand enthält, von einem den Signalrundlauf initiierenden ersten Senderemprtänger zu einem zweiten Senderempfänger an einem Anfrage-Sendezeitpunkt,

b) Empfangen des Anfragedatenrahmens beim zweiten Senderempfänger an einem Anfrage-Empfangszeitpunkt,

c) Senden eines Antwortdatenrahmens, der eine Sequenz von mindestens zwei Signalimpulsen mit vorbestimmtem Impulszeitabstand enthält, vom zweiten Senderempfänger zum ersten Senderempfänger an einem Antwort-Sendezeitpunkt, der einen jeweiligen Antwortzeitabstand vom Anfrage-Empfangszeitpunkt hat, und Erfassen (Engl: Detect) des jeweiligen Antwortzeitabstandes,

d) Empfangen des Antwortdatenrahmens beim den Signalrundlauf initiierenden ersten Senderempfänger und Erfassen eines dem Empfang des Antwortdatenrahmens zugeordneten Antwort-Empfangszeitpunktes relativ zum Anfrage-Sendezeitpunkt,

Weiterhin umfasst das erfindungsgemäße Verfahren eine Auswertung mit den Schritten:

e) Ermitteln (Engl: Ascertain) eines Rundlaufzeitabstandes zwischen dem jeweiligen Anfrage-Sendezeitpunkt und dem jeweiligen Antwort-Empfangszeitpunkt für jeden Signalrundlauf, wobei dieser Schritt jederzeit nach dem betreffenden Signalrundlauf durchgeführt werden kann,

f) Ermitteln einer Signallaufzeit zwischen den zwei Senderempfängern anhand der ermittelten Rundlaufzeitabstände und der Antwortzeitabstände und

g) Ermitteln des räumlichen Abstandes zwischen dem ersten und zweiten Senderempfänger durch Multiplikation der Signallaufzeit mit einer vorbekannten Ausbreitungsgeschwindigkeit der Signalimpulse.

Bei dem erfindungsgemäßen Verfahren werden die Signalrundläufe so durchgeführt, dass die Antwortzeitabstände entweder identisch sind oder eine Differenz, im Falle der Durchführung mehr als eines von jedem Senderempfänger initiierten Signalrundlaufes eine mittlere Differenz aufweisen, deren Betrag maximal 200 Mikrosekunden ist.

Das erfindungsgemäße Verfahren zeichnet sich zum einen durch seine Eigenschaft als symmetrisches Mehrwegeverfahren aus. Dabei wirken zwei Symmetrieaspekte in bisher unbekannter Weise vorteilhaft zusammen. Eine erster Symmetrieaspekt des erfindungsgemäßen Verfahrens ist die Kombination eines ersten Signalrundlaufes, bei dem der erste Senderempfänger Start- und Zielpunkt ist, mit einem zweiten Signalrundlauf, der den zweiten Senderempfänger als Start- und Zielpunkt hat Die beiden Senderempfänger können jeweils auch mehrere Signalrundläufe initiieren. Das erfindungsgemäße symmetrische Mehrwegeverfahren macht die Abstandsbestimmung wesentlich unempfindlicher gegen Schwankungen der Umgebungstemperatur und der Versorgungsspannung als herkömmliche Verfahren zur Abstandsbestimmung. Weiterhin beeinträchtigen geringfügige Abweichungen der Leistungsparameter von Schaltkreisen, die in den beteiligten Senderempfängern verwendet werden (sogenannte Exemplarstreuungen), die Genauigkeit der Abstandsbestimmung nicht wesentlich.

Das erfindungsgemäße Verfahren zeichnet sich darüber hinaus durch einen zweiten Symmetrieaspekt aus, indem die Antwortzeitabstände beim ersten Senderempfänger und beim zweiten Senderempfänger entweder identisch sind oder eine Differenz aufweisen, deren Betrag maximal 200 $\mu$s ist. Ein Antwortzeitabstand ist die Zeitdifferenz zwischen einem Empfangszeitpunkt eines Anfragedatenrahmens und dem Aussenden eines Antwortdatenrahmens in Antwort auf den empfangenen Anfragedatenrahmen bei einem Senderempfänger. Der Antwortzeitabstand ist bedingt durch die Bearbeitungszeit beim Senderempfänger, etwa im Zusammenhang mit der Prüfung des Anfragedatenrahmens. Weiterhin ist der Antwortzeitabstand bedingt durch die Länge eines empfangenen Anfragedatenrahmens und durch Protokollvorschriften, die beispielsweise die Einhaltung eines Mindest- und eines maximalen Antwortzeitabstandes vorschreiben können. Schwankungen der Antwortzeitabstände werden durch schaltungsbedingte Verzögerungen der Realisierungen der Senderempfänger verursacht.

Buchstäblich identische Antwortzeitabstände sind technisch kaum möglich, weil kleinste Abweichungen der Antwortzeitabstände bei entsprechender Messgenauigkeit stets nachzuweisen sind. "Identisch" meint im Zusammenhang dieser Anmeldung gleiche Werte der Antwortzeitabstände im Rahmen der Messgenauigkeit, die einer jeweiligen konkreten Implementierung angemessen ist Es kann beispielsweise in einer Implementierung des erfindungsgemäßen Verfahrens nur eine relativ geringe Genauigkeit der Ortsbestimmung im Bereich von $\pm$ 2m gefordert sein. In einem solchen Fall ist für einen Vergleich der Antwortzeitabstände eine geringere Genauigkeit der Messgenauigkeit angemessen als bei einer geforderten Genauigkeit von $\pm$ 50cm. Im Rahmen einer solchen reduzierten Genauigkeit können Antwortzeitabstände als identisch bewertet werden, die bei höherer Messgenauigkeit eine geringfügige Differenz aufweisen. Dabei ist zu beachten, dass diese Erläuterung nur zur Auslegung des Begriffs "identisch" dienen soll. Ein Vergleich von Antwortzeitabständen ist bei der Durchführung des erfindungsgemäßen Verfahrens nicht erforderlich. Ein solcher Vergleich kann zum Nachweis einer Benutzung des erfindungsgemäßen Verfahrens dienen. Es ist auch denkbar, dass im Rahmen eines Ausführungsbeispiels ein solcher Vergleich vorgenommen wird.

Mit dem erfindungsgemäßen Verfahren wird eine Abstandsbestimmung bei einer Entfernung von 10 km mit einem durch Quarztoleranzen verursachten Fehler von nur $\pm$ 150 cm ermöglicht. Andere Fehlerquellen sind bei dieser Angabe nicht beirücksichtigt

Bei einem bevorzugten Ausführungsbeispiel, bei dem die Differenz der Antwortzeitabstände maximal 20 Mikrosekunden beträgt, kann unter Berücksichtigung aller Fehlerquellen, die neben dem durch Quarztoleranzen bedingten Fehler die Genauigkeit des Verfahrens der Erfindung beeinträchtigen können, in der Praxis bei der Abstandsbestimmung einer Entfernung von 10 km eine Genauigkeit von ca. $\pm$ 100 cm, für eine Entfernung von 1 km sogar $\pm$ 50 cm oder besser erreicht werden.

Für die im Verhältnis zur Einfachheit der erforderlichen technischen Mittel erzielte überraschend hohe Genauigkeit des erfindungsgemäßen Verfahrens ist die Kombination des Merkmals der von beiden Senderempfängern initiierten Signalrundläufe mit dem Merkmal identischer oder nur im Rahmen einer Differenz von maximal 200 $\mu$s (im bevorzugten Ausführungsbeispiel maximal 20 Mikrosekunden) auftretender Antwortzeitabstände von sehr großer, von der Fachwelt bisher nicht erkannter Bedeutung. Wie weiter unten anhand von Fehlerberechnungen und Ausführungsbeispielen näher dargestellt wird, wird durch dieses Merkmal der Fehler der Abstandsbestimmung gegenüber herkömmlichen Verfahren unempfindlich gegenüber Ungenauigkeiten der Zeitmessung in den an der Abstandsmessung beteiligten Senderempfängern. Es können daher relativ ungenaue Taktgeneratoren zur Zeitmessung eingesetzt werden, ohne dass dadurch die Genauigkeit der Abstandsbestimmung wesentlich verringert wird. Beispielsweise werden kommerziell übliche, sehr kostengünstige Schwingquarze mit einer Taktgenauigkeit von $\pm$ 50 ppm und aus Quarzoszillatortakten mit dieser Genauigkeit abgeleitete Taktgeneratoren eingesetzt, ohne dass durch deren Fehler eine nennenswerte Verschlechterung der Genauigkeit auftritt. Es wird so eine bisher mit derart einfachen Mitteln nicht für möglich gehaltene Genauigkeit der Abstandsbestimmung erzielt

Das erfindungsgemäße Verfahren ermöglicht eine Abstandsbestimmung mit der genannten Genauigkeit in kurzer Zeit Eine Abstandsbestimmung benötigt einen Zeitaufwand von nur ca. 2 ms.

Das erfindungsgemäße Verfahren schreibt keine feste Reihenfolge zwischen dem ersten und dem zweiten Signalrundlauf vor. Bei dem erfindungsgemäßen Verfahren können die Schritte des Ermittelns des jeweiligen Rundlaufzeitabstandes (Schritte e) und f)) entweder unmittelbar nach Abschluss eines jeweiligen Signalrundlaufs durchgeführt werden. Oder es wird gewartet, bis beide Signalrundläufe abgeschlossen sind, bevor mit der Auswertung in den Schritten e) und f) begonnen wird.

Das erfindungsgemäße Verfahren eignet sich für eine gleichzeitige Übertragung beliebiger Daten zwischen mobilen und stationären Senderempfängern, in einem Datenrahmen, der zugleich als Anfragedatenrahmen oder Antwortdatenrahmen die Daten für die Entfernungsmessung in Form mindestens eines Signalimpulses enthält.

Das Verfahren benötigt keine zusätzliche Infrastruktur. Es ist auch in Gebäuden verwendbar. Mit einem geschätzten Energiebedarf von etwa 360 $\mu$J pro Abstandsbestimmung im Falle einer Realisierung in einem integrierten Schaltkreis zeigt sich ein weiterer wesentlicher Vorteil der Erfindung. Denn aufgrund dieses geringen Energiebedarfs eignet sie sich zum Einsatz von batteriebetrieben Senderempfängern mit hoher Betriebsdauer.

Die Signalverarbeitung beim erfindungsgemäßen Verfahren ist besonders einfach. Zur Abstandsbestimmung werden lediglich Grundrechenarten herangezogen. Die Abstandsbestimmung kann daher in einer einfachen arithmetischen Einheit oder in wenigen Taktzyklen auf einem Mikroprozessor ausgeführt werden. Sie ist daher auch sehr schnell, insbesondere unmittelbar nach Durchführung der Signalrundläufe verfügbar.

Das erfindungsgemäße Verfahren eignet sich ebenfalls zur hochpräzisen und schnellen Positionsbestimmung, zur Geschwindigkeitsmessung und zur Beschleunigungsmessung, wie weiter unten näher erläutert wird.

Das erfindungsgemäße Verfahren kann in Kommunikationsnetzwerken eingesetzt werden. Eine Verwendung geeigneter Nachrichtenprotokolle erlaubt eine sehr hohe Anzahl von Stationen auf begrenztem Raum, ohne die Zuverlässigkeit des erfindungsgemäßen Verfahrens zu gefährden. Die Verwendung bekannter Nachrichtenprotokolle ermöglicht die Fähigkeit, eine Abstandsbestimmung adhoc vorzunehmen, ohne dass eine vorherige Aushandlung von Verfahrensparametern notwendig ist.

Vorschriften bekannter standardisierter Nachrichtenprotokolle wie eine Prüfsummenberechnung und Verschlüsselung können die Zuverlässigkeit und Sicherheit des erfindungsgemäßen Verfahrens weiter erhöhen, wie weiter unten näher erläutert wird.

Das erfindungsgemäße Verfahren kann durch eine Kombination mehrerer erfindungsgemäßer Abstandsmessungen zwischen mehr als zwei Senderempfängern über eine oder mehrere Zwischenstationen zu entfernten Stationen bei hoher Präzision eine Abstandsbestimmung auch über größere Entfernungen ermöglichen.

Das erfindungsgemäße Verfahren kann überall dort eingesetzt werden, wo eine Kenntnis über einen Abstand oder eine Position oder eine Positionsveränderung von Personen, Tieren oder stationären und mobilen Objekten erforderlich ist. Ein Einsatz ist beispielsweise im Bereich drahtloser Datenübertragungsnetzwerke, der Gebäudeautomatisierung, der industriellen Automatisierung, der Material- und Warenlogistik, der Fahrzeug- und Personennavigation oder der Nah- und Femerkundung möglich. Weitere Anwendungsbeispiele werden im Rahmen der Beschreibung bevorzugter Ausführungsbeispiele genannt.

Neben dem Begriff Rundlaufzeitabstand wird im Rahmen dieser Anmeldung mit gleicher Bedeutung auch der Begriff Rundlaufzeit bezeichnet. Auch wird neben dem Begriff Antwortzeitabstand der Begriff Antwortzeit mit gleicher Bedeutung verwendet. Wesentlich ist, dass es sich hierbei nicht um Zeitpunkte handelt, sondern um Zeitdifferenzen. Der Rundlaufzeitabstand ist die Dauer eines Signalrundlaufes, also der Zeitabstand (die Zeitdifferenz) zwischen einem Anfrage-Sendezeitpunkt und einem Antwort-Empfangszeitpunkt innerhalb eines Signalrundlaufes. Der Antwortzeitabstand ist die Zeitdifferenz zwischen einem Anfrage-Empfangszeitpunkt und einem Antwort-Sendezeitpunkt innerhalb eines Signalrundlaufes.

Nachfolgend werden zusätzliche Merkmale von Ausführungsbeispielen des erfindungsgemäßen Verfahrens beschrieben. Auch in den Ansprüchen sind Ausführungsbeispiele des erfindungsgemäßen Verfahrens angegeben. Die Ausführungsbeispiele können, soweit sich nichts Gegenteiliges unmittelbar und eindeutig aus der Beschreibung oder den Ansprüchen ergibt, auch in Kombination mit einander realisiert werden.

Bei einem bevorzugten Ausführungsbeispiel wird ein vom zweiten Senderempfänger initiierter Signalrundlauf jeweils zeitlich nach einem vom ersten Senderempfänger durchgeführter Signalrundlauf ausgeführt. Wesentlich ist, dass der zweite Senderempfänger einen Signalrundlauf initiiert, nachdem er den Antwortdatenrahmen an den ersten Senderempfänger gesandt hat. Es versteht sich, dass die Bezeichnung "zweiter" und "erster" Senderempfänger bei diesem Ausführungsbeispiel austauschbar ist Dieses Verfahren sieht keinen oder einen nur geringen zeitlichen Überlapp der Signalrundläufe vor. Ein geringer zeitlicher Überlapp der Signalrundläufe kann dadurch entstehen, dass der zweite Senderempfänger einen Signalrundlauf durch Aussenden eines entsprechenden zweiten Anfragedatenrahmens initiiert, bevor der erste Senderempfänger zuvor ausgesandten ersten Antwortdatenrahmen empfangen hat. Da ein Abstand von 10km einer Signallaufzeit von 30 Mikrosekunden entspricht, ist mit einem solchen Überlapp jedoch keine wesentliche Beschleunigung des Verfahrens erzielbar.

Das Verfahren dieses Ausführungsbeispiels wird im Rahmen dieser Anmeldung auch als doppelseitiges Zwei-Wege-Verfahren bezeichnet. Bei Ausführung mehrerer Signalrundläufe wird es als Mehrfach-doppelseitiges Zwei-Wege-Verfahren bezeichnet

Bei einem hierzu alternativen Ausführungsbeispiel sind die von beiden Senderempfängern initiierten Signalrundläufe an einander gekoppelt. Der zweite Senderempfänger mit dem Senden des zugleich einen Signalrundlauf initiiert, wobei der Antwortdatenrahmen, der einem vom ersten Senderempfänger initiierten ersten Signalrundlauf zugeordnet ist, zugleich den Anfragedatenrahmen eines vom zweiten Senderempfänger initiierten zweiten Signalrundlaufs bildet. Dadurch bildet bei diesem Ausführungsbeispiel Schritt c) eines vom ersten Senderempfänger initiierten Signalrundlaufs zugleich Schritt a) eines vom zweiten Senderempfänger initiierten Signalrundlaufs. Diese Verfahrensführung kann beispielsweise als Standardmerkmal vereinbart sein. Sie kann auch durch Aussendung eines besonderen, kombinierten Anfrage- und Antwortdatenrahmens kenntlich gemacht werden, der auf Empfängerseite entsprechend interpretiert und behandelt wird. Ein solcher Datenrahmen wird in dieser Anmeldung stets als "kombinierter Anfrage- und Antwortdatenrahmen" bezeichnet, um eine Verwechslung mit der ebenfalls verwendeten Kurzschreibweise "Anfrage- und Antwortdatenrahmen" zu vermeiden, die als "Anfragedatenrahmen und Antwortdatenrahmen" zu verstehen ist. Der Vollständigkeit halber wird angemerkt, dass eine andere hier verwendete Kurzschreibweise, "Start- oder Antwortdatenrahmen", als "Anfragedatenrahmen oder Antwortdatenrahmen" zu interpretieren ist.

Das vorliegende Ausführungsbeispiel bietet den Vorteil einer besonders hohen Verfahrensökonomie. Der Abstand zwischen dem ersten und dem zweiten Senderempfänger wird nicht vier Mal, sondern nur drei Mal durchlaufen. Es werden weniger Schritte zur Abstandsbestimmung benötigt. Diese ökonomische Verfahrensführung ist mit keinerlei Einbuße an Messgenauigkeit verbunden. Damit einher geht ein verringerter Energiebedarf für die Abstandsmessung, weil hierfür weniger Datenrahmen übersandt werden müssen.

Im einzelnen umfassen die zwei Signalrundläufe dieses Ausführungsbeispiels die nachfolgend einzeln aufgeführten Schritte.

Der erste Signalrundlauf hat die Schritte:

a1) Senden mindestens eines ersten Anfragedatenrahmens, der eine Sequenz von mindestens zwei Signalimpulsen mit vorbestimmtem Impulszeitabstand enthält, von einem den Signalrundlauf initiierenden ersten Senderempfänger zu einem zweiten Senderempfänger an einem ersten Anfrage-Sendezeitpunkt,

b1) Empfangen des ersten Anfragedatenrahmens beim zweiten Senderempfänger an einem ersten Anfrage-Empfangszeitpunkt.

c1/a2) Senden eines ersten Antwortdatenrahmens, der eine Sequenz von mindestens zwei Signalimpulsen mit vorbestimmtem Impulszeitabstand enthält, vom zweiten Senderempfänger zum ersten Senderempfänger an einem ersten Antwort-Sendezeitpunkt, der einen jeweiligen Antwortzeitabstand vom ersten Anfrage-Empfangszeitpunkt hat und der zugleich den zweiten Anfrage-Sendezeitpunkt bildet,

d1/b2) Empfangen des ersten Antwortdatenrahmens beim den Signalrundlauf initiierenden ersten Senderempfänger und Erfassen eines dem Empfang des ersten Antwortdatenrahmens zugeordneten ersten Antwort-Empfangszeitpunktes relativ zum ersten Anfrage-Sendezeitpunkt.

Dabei bilden die Schritte c1) und d1) zugleich die ersten zwei Schritte des zweiten Signalrundlaufs, die daher zugleich auch als Schritte a2) und b2) bezeichnet werden können. An diese schließen sich zum Abschluss des zweiten Signalrundlaufs die folgenden Schritte an:

c2) Senden eines zweiten Antwortdatenrahmens, der eine Sequenz von mindestens zwei Signalimpulsen mit vorbestimmtem Impulszeitabstand enthält, vom ersten Senderempfänger zum zweiten Senderempfänger an einem zweiten Antwort-Sendezeitpunkt, der einen jeweiligen Antwortzeitabstand vom ersten Antwort-Empfangszeitpunkt hat,

d2) Empfangen des zweiten Antwortdatenrahmens beim den Signalrundlauf initiierenden zweiten Senderempfänger und Erfassen eines dem Empfang des zweiten Antwortdatenrahmens zugeordneten zweiten Antwort-Empfangszeitpunktes relativ zum ersten Antwort-Sendezeitpunkt, der, wie oben erwähnt, in diesem Ausführungsbeispiel zugleich den zweiten Anfrage-Sendezeitpunkt bildet.

Das vorliegende Ausführungsbeispiel wird im Rahmen dieser Anmeldung auch als symmetrisches Drei-Wege-Verfahren oder kurz als Drei-Wege-Verfahren bezeichnet. Nähere Einzelheiten dieses Ausführungsbeispiels werden ebenfalls im Zusammenhang mit der detaillierten Beschreibung bevorzugter Ausführungsbeispiele erläutert. Es kann ebenfalls durch Fortführung der Signalrundläufe erweitert werden, was eine höhere Genauigkeit der Abstandsbestimmung ermöglicht.

Wird jeweils nur ein vom ersten Senderempfänger und ein vom zweiten Senderempfänger initiierter Signalrundlauf durchgeführt, wird die Signallaufzeit $T_{prop}$ zwischen dem ersten und zweiten Senderempfänger gemäß der Formel

$$\text{Formel 1: } T_{prop} = \frac{T_{roundA1} - T_{replyB1} + T_{roundB2} - T_{replyA2}}{4}$$

bestimmt Diese Formel wird verwendet, wenn der erste und zweite Signalrundlauf getrennt, oder, wie im zuletzt beschriebenen Ausführungsbeispiel, gekoppelt durchgeführt werden. Sie ist also auf ein Doppelseitiges Zwei-Wege-Verfahren ebenso anwendbar wie auf ein Drei-Wege-Verfahren.

Bei einem weiteren bevorzugten Ausführungsbeispiel des erfindungsgemäßen Verfahrens initiiert jeder Senderempfänger mindestens zwei Signalrundläufe, bis der Abstand zwischen dem ersten und zweiten Senderempfänger von einer Anzahl Anfrage- und Antwortdatenrahmen durchlaufen worden ist, die mindestens acht und ein Vielfaches von vier ist. Das , was bedeutet, dass mindestens vier und Vielfache von zwei Anfragedatenrahmen sowie mindestens vier und Vielfache von zwei Antwortdatenrahmen übertragen werden. Bei diesem Ausführungsbeispiel kann jeder Senderempfänger 2, 3, 4,..,n Signalrundläufe initiieren. Es sind dann entsprechend 4 Anfrage- und 4 Antwort-, 6 Anfrage- und 6 Antwort-, 8 Anfrage- und 8 Antwort-, 10 Anfrage- und 10 Antwortrahmen usw. möglich. Die Summe aller Rahmen ist immer ein Vielfaches von 4. Bei diesem Ausführungsbeispiel

- werden zu den vom ersten Senderempfänger initiierten Signalrundläufen zusätzliche Rundlaufzeitabstände $T_{roundAi}$ mit i= 3, 5, 7,.., (n-2) von $T_{roundA3}$ bis $T_{roundA(n-2)}$ ermittelt, wobei n>3 eine ungerade Zahl ist, und

- werden zu den vom zweiten Senderempfänger initiierten Signalrundläufen zusätzliche Rundlaufzeitabstände $T_{round\,Bk}$ mit k= 4, 6, 8,.., (n-1) von $T_{round\,B4}$ bis $T_{roundB(n-1)}$ ermittelt,

- wobei Antwortzeitabstände $T_{replyAk}$, k= 2, 4, 6, 8, .., (n-1) von $T_{replyA2}$ bis $T_{replyA(n-1)}$, und $T_{replyBi}$, i = 1, 3, 5, 7, ..,(n-2). von $T_{replyB1}$ bis $T_{replyB(n-2)}$ auftreten, die eine mittlere Differenz gemäß der Formel

$$\text{Formel 2: } \Delta T_{Re\,plyAVG} = \frac{T_{replyA2} - T_{replyB1} + .. + T_{replyA(n-1)} - T_{replyB(n-2)}}{\frac{n-1}{2}}$$

aufweisen, deren Betrag maximal 200, bevorzugt jedoch maximal nur 20 Mikrosekunden ist. Diese formel bildet die einfache Differenz der Antwortzeitabstände im Fall nur je eines von jedem Senderempfänger initiierten Signalrundlaufes auf den Fall einer Vielzahl von Signalrundläufen ab.

Bei diesem Ausführungsbeispiel werden von beiden Senderempfängem nicht nur ein, sondern mehrere Signalrundläufe initiiert. Es handelt sich hierbei also um die schon oben erwähnte Variante eines mehrfach-doppelseitigen Zwei-Wege-Verfahrens. Die Signalrundläufe werden also nicht gekoppelt, sondern unabhängig von einander durchgeführt. Die Signallaufzeit zwischen dem ersten und dem zweiten Senderempfänger kann bei diesem Ausführungsbeispiel daher anhand der Vielzahl der ermittelten Rundlaufzeitabstände und der erfassten Antwortzeitabstände mit erhöhter Genauigkeit bestimmt werden, was die Präzision der Abstandsbestimmung erhöht. Einzelheiten der Berechnung der Signallaufzeit werden weiter unten im Rahmen der detaillierten Beschreibung bevorzugter Ausführungsbeispiele erläutert.

Bei dem vorliegenden Ausführungsbeispiel wird die erfindungsgemäße Forderung nach einer Differenz der Antwortzeitabstände von maximal 200 (bevorzugt 20) Mikrosekunden entweder durch die Forderung ersetzt, dass eine mittlere Differenz gemäß der obenstehenden Formel einen Betrag aufweist, der maximal 200 (bevorzugt 20) Mikrosekunden ist. Diese Bedingung ist äquivalent mit der bei einer jeweils einmaligen Durchführung des ersten und zweiten Signalrundlaufs geforderten Maximaldifferenz von 200 (bevorzugt 20) Mikrosekunden. In einer Verfahrensvariante werden beide Bedingungen zugleich erfüllt.

Es ist anzumerken, dass beim vorliegenden Ausführungsbeispiel in der Vielzahl von Signalrundlauf-Paaren bei einem Paar Antwortzeitabstände auftreten können, deren Differenz einen Betrag von mehr als 200 oder, im bevorzugten Ausführungsbeispiel, mehr als 20 Mikrosekunden aufweist. Dies wird dann jedoch durch eine geringere Differenz anderer Antwortzeitabstände bei anderen Signalrundlauf-Paaren ausgeglichen und bildet daher eine Ausnahme. Wesentlich für die Genauigkeit der Abstandsbestimmung ist vorliegend die mittlere zeitliche Differenz der Antwortzeitabstände.

Auch bei der gekoppelten Durchführung der Signalrundläufe im Rahmen eines Ausführungsbeispiels, das ein symmetrisches n-Wege-Verfahren bildet, können die Signalrundläufe zur Erhöhung der Präzision der Abstandsbestimmung mehrfach ausgeführt werden. Bei dieser Ausführungsform

- initiiert jeder Senderempfänger mindestens zwei Signalrundläufe, bis der Abstand zwischen dem ersten und zweiten Senderempfänger von einer ungeraden Anzahl n>3 Anfrage- und Antwortdatenrahmen ) (also eine ungerade Anzahl n>3 der Summe aller übertragenen Rahmen) durchlaufen worden ist, wobei alle zusätzlichen Rundlaufzeitabstände ermittelt und alle zusätzlichen Antwortzeitabstände erfasst werden,

- werden nach wiederholter Durchführung der ersten Signalrundlauf-Schrittfolge zusätzliche Rundlaufzeitabstände $T_{roundAi}$ mit i= 3, 5, 7,...,(n-2), von $T_{roundA3}$ bis $T_{roundA(n-2)}$ ermittelt und

- nach wiederholter Durchführung der zweiten Signalrundlauf-Schrittfolge zusätzliche Rundlaufzeitabstände $T_{roundBk}$, mit k = 4, 8, 8,..., (n-1), von $T_{roundB4}$ bis $T_{roundB(n-1)}$ ermittelt,

- wobei Antwortzeitabstände $T_{replyAk}$, k= 2, 4, 6, 8,...,(n-1) von $T_{replyA2}$ bis $T_{replyA(n-1)}$, $T_{replyBi}$, i= 1, 3, 5, 7,...,(n-2) von $T_{replyB1}$ bis $T_{replyB(n-2)}$ auftreten, die eine mittlere Differenz gemäß der Formel

$$\text{Formel 3: } \Delta T_{ReplyAVG} = \frac{T_{replyA2} - T_{replyB1} + .. + T_{replyA(n-1)} - T_{replyB(n-2)}}{\frac{n-1}{2}}$$

aufweisen, deren Betrag maximal 200, bevorzugt maximal 20 Mikrosekunden ist. Dieses Ausführungsbeispiel ermöglicht, wie schon oben im Fall der mehrfachen entkoppelten Durchführung von Signalrundlauf-Paaren im Rahmen des mehrfach-doppelseitigen Zwei-Wege-Verfahrens beschrieben, eine präzisere Abstandsbestimmung und wird ebenfalls im Rahmen der detaillierten Beschreibung bevorzugter Ausführungsbeispiele weiter unten näher erläutert. Oie Anfragedatenrahmen sind auch gleichzeitg Antwortdatenrahmen (Überlappung), so dass in diesem Ausführungsbeispiel immer eine ungerade Anzahl von Rahmen übertragen wird.

Bei den genannten Ausführungsbeispielen, die eine mehrfache Durchführung des ersten und zweiten Signalrundlaufs vorsehen, wird die Signallaufzeit $T_{prop}$ gemäß der Formel

Formel
4

$$T_{prop} = \frac{T_{roundA1} - T_{replyB1} + T_{roundB2} - T_{replyA2} + .. + T_{roundA(n-2)} - T_{replyB(n-2)} + T_{roundB(n-1)} - T_{replyA(n-1)}}{2(n-1)}$$

$$n = 2k + 1, k \in N > 1$$

ermittelt

Bei einem weiteren Ausführungsbeispiel werden die Signalrundläufe zeitlich überlappend ausgeführt, wobei die Anfrage- und Antwortdatenrahmen eines vom ersten Senderempfänger initiierten Signalrundlaufes auf einem anderen Übertragungskanal übertragen werden als die Anfrage- und Antwortdatenrahmen eines vom zweiten Senderempfänger initiierten Signalrundlaufes. Auf diese Weise kann das erfindungsgemäße Verfahren schneller durchgeführt werden.

Verschiedene Ausführungsbeispiele des erfindungsgemäßen Verfahrens betreffen Varianten der Auswertung im Rahmen der Abstandsermittlung. Die nachfolgend beschriebenen Varianten können jeweils mit allen vorstehend beschriebenen Ausführungsbeispielen kombiniert werden. In einer ersten Variante ermittelt nur der erste, in einer zweiten Variante nur der zweite Senderempfänger den räumlichen Abstand. Der jeweils andere Senderempfänger übermittelt zuvor den auf seiner Seite ermittelten Rundlaufzeitabstand und den dort aufgetretenen Antwortzeitabstand. In einer dritten Variante ermitteln beide Senderempfänger den räumlichen Abstand und übertragen einander zuvor die jeweils ermittelten Rundlaufzeitabstände und aufgetretenen Antwortzeitabstände.

In einer vierten Variante ermittelt ein dritter Senderempfänger den räumlichen Abstand zwischen dem ersten und zweiten Senderempfänger, und übertragen der erste und zweite Senderempfänger die ermittelten Rundlaufzeitabstände und Antwortzeitabstände zuvor alternativ oder zusätzlich an den dritten Senderempfänger. Dabei muss es sich nicht notwendigerweise um eine gezielte Übertragung an den dritten Senderempfänger handeln. Diese Variante kann auch so durchgeführt werden, dass der dritte Senderempfänger die Übermittlung der Rundlauf-. und Antwortzeitabstände zwischen erstem und zweitem Senderempfänger "mithört", wobei ihm somit die Rundlauf- und Antwortzeitabstände von beiden Senderempfänger mitgeteilt werden.

Denkbar ist auch, dass allein die Sende- und Empfangszeitpunkte zwischen den genannten Senderempfängem übertragen werden und anschließend die Rundlauf und Antwortzeiten ermittelt werden.

Bei einem weiteren Ausführungsbeispiel enthalten die übermittelten Anfrage- und Antwortdatenrahmen mehr als zwei Signalimpulse und werden auf Seiten eines jeweiligen Empfängers die Empfangszeitpunkte von mehr als zwei Signalimpulsen eines jeweiligen Anfrage- oder Antwortdatenrahmens erfasst.

Die Erfassung der Empfangs- und Sendezeitpunkte der einzelnen Datenrahmen verwendet einen einheitlichen Referenzzeitpunkt im Datenrahmen, bezüglich dessen Zeitpunkte bestimmt werden. Beispielsweise wird der erste Signalimpuls, in einem anderen Beispiel der letzte Signalimpuls, in einem weiteren Beispiel ein beliebiger anderer Signalimpuls innerhalb jedes Datenrahmens als Referenzpunkt vereinbart oder festgelegt. Die Anzahl der Signalimpulse der einzelnen Datenrahmen kann dabei immer verscheiden sein, solange der Referenzzeitpunkt in allen Datenrahmen existiert.

Bei einem weiteren Ausführungsbeispiel sendet der jeweilige Sender eines Anfrage- oder Antwortdatenrahmens Signalimpulse des Datenrahmens zu Sendezeitpunkten aus, die relativ zu einem Zeitraster, das durch den senderseitig vorbestimmten Impulszeitabstand im auszusendenden Datenrahmen definiert ist, derart verschoben sind, dass die Signalimpulse im Mittel zu den durch das Zeitraster vorgegebenen Rasterzeitpunkten ausgesendet werden. Ein derartiges Vorgehen wird nachfolgend auch als Dithering bezeichnet. Auf diese Weise kann die Genauigkeit der Abstandsbestimmung weiter erhöht werden, wie unten im einzelnen erläutert wird.

Dithering kann alternativ oder, besonders bevorzugt, zusätzlich auf Seiten eines jeweiligen Empfängers zur Erhöhung der Präzision der Abstandsbestimmung verwendet werden. Der Empfänger eines Anfrage- oder Antwortdatenrahmens verschiebt dabei Signalimpulse des empfangenen Datenrahmens relativ zu einem Zeitraster, das durch den Impulszeitabstand der empfangenen Signalimpulse definiert ist, derart, dass die verschobenen Signalimpulse im Mittel mit dem senderseitig vorbestimmten Impulszeitabstand empfangen werden.

Dabei ist vorzugsweise eine Streuung der Zeitverschiebung eines Signalimpulses des Datenrahmens auf Seiten des jeweiligen Senders oder des jeweiligen Empfängers größer ist als die Genauigkeit einer Zeitmessung auf Seiten des Empfängers. Im Falle eines sowohl vom jeweiligen Sender als auch vom jeweiligen Empfänger erzeugten Ditherings ist die Streuung der Summe derZeitverschiebungen eines Signalimpulses auf Seiten des jeweiligen Senders und des jeweiligen Empfängers größer ist als die Genauigkeit einer Zeitmessung auf Seiten des Empfängers..

Bei Verwendung des Ditherings auf Seiten des Senders werden bei dem jeweiligen Empfänger eines Datenrahmens vorzugsweise die Empfangszeitpunkte einer Mehrzahl in einem empfangenen Anfrage- oder Antwortdatenrahmen enthaltener Signalimpulse relativ zu einem durch den Impulszeitabstand der empfangenen Signalimpulse und einen vereinbarten Referenzpunkt im Anfrage- oder Antwortdatenrahmen definierten Zeitraster erfasst und abgespeichert.

Dabei ermittelt der jeweils empfangende Senderempfänger nach Erfassung der Empfangszeitpunkte einen mittleren Empfangszeitpunkt bezüglich des Zeitrasters.

Bei einem weiteren Ausführungsbeispiel der Erfindung ermittelt der jeweilige Empfänger bei der Bestimmung eines Empfangszeitpunktes eines Signalimpulses denjenigen Zeitpunkt, bei dem ein detektierter Signalimpuls einen maximalen Signalgewinn oder einen maximalen Wert einer Korrelation mit einem vorbestimmten Signalmuster aufweist

Dabei startet der jeweilige Empfänger nach einer Bestimmung eines Empfangszeitpunktes eines Datenrahmens und vor einer nachfolgenden Bestimmung eines Empfangszeitpunktes eines nächsten Datenrahmens einen von ihm zur Bestimmung von Sende- und Empfangszeitpunkten verwendeten Taktgenerator oder Oszillator neu.

Alternativ moduliert der jeweilige Empfänger während des Empfangs eines Datenrahmens einen von ihm zur Bestimmung von Sende- und Empfangszeitpunkten der Signalimpulse verwendeten Taktgenerator oder Oszillator in seiner Frequenz gemäß einer pseudozufälligen Sequenz.

Bei einem weiteren Ausführungsbeispiel werden durch eine Mehrwegeausbreitung der Signalimpulse hervorgerufene Fehler reduziert, in dem der Empfänger bei Vorliegen einer auf eine Mehrwegeausbreitung eines einzelnen Signalimpulses zurückgehenden Impulsfolge im Empfangssignal als Empfangszeitpunkt des Signalimpulses den frühesten Zeitpunkt innerhalb eines vorbestimmten Zeitfensters ermittelt, bei dem das Empfangssignal einen maximalen Wert annimmt.

Bei einem weiteren Ausführungsbeispiel vereinbaren der erste und zweite Senderempfänger die Werte der Antwortzeitabstände vor Aussendung eines Anfragedatenrahmens.

Um die Abstandsbestimmung bei einer mehrfachen Durchführung der Abstandsbestimmung für Dritte unzugänglich zu machen, vereinbaren der erste und zweite Senderempfänger vor Aussendung eines Anfragedatenrahmens der ersten Durchführung eine Folge von unterschiedlichen Werten von Antwortzeitabständen und halten bei nachfolgenden Durchführungen jeweils den nächsten in der Folge vorgegebenen Antwortzeitabstand ein. Dabei variieren der erste und zweite Senderempfänger den Antwortzeitabstand vorzugsweise in Abhängigkeit von einer unbekannten pseudozufälligen Zahlenfolge.

Eine weitere Erhöhung der Geheimhaltung wird erzielt, indem der erste und zweite Senderempfänger während der Vereinbarung der Antwortzeitabstände oder der Folge von Antwortzeitabständen einander geheim verschlüsselte Nachrichten übertragen.

Vorzugsweise messen der erste und der zweite Senderempfänger den jeweils von ihnen verwendeten Antwortzeitabstand. Die gemessenen Antwortzeitabstände werden zur Abstandsbestimmung herangezogen. Auf diese Weise wird die Genauigkeit des Verfahrens der Erfindung sichergestellt.

Bei einem weiteren bevorzugten Ausführungsbeispiel des erfindungsgemäßen Verfahrens werden die zur Abstandsbestimmung verwendeten Signalimpulse zugleich als Informationssymbole verwendet

Besonders bevorzugt ist weiterhin die Einbettung des erfindungsgemäßen Verfahrens in bekannte Übertragungsprotokolle der Schicht 2 des OSI-Referenzmodells. Vorzugsweise wird dabei ein international standardisiertes Übertragungsprotokoll verwendet, das in weit verbreiteter Verwendung ist.

Bei einem weiteren besonders bevorzugten Ausführungsbeispiel werden die Signalimpulse durch Chirpimpulse gebildet. Dabei werden Chirpimpulse mit steigendendem oder fallendem Frequenzgang verwendet. Zur weiteren Erhöhung der Genauigkeit der Abstandsbestimmung ist es vorteilhaft, zwei komplementäre Typen von Chirpimpulse zu verwenden, die eine identische Mittenfrequenz und Impulsdauer, jedoch einen gegenläufigen und um die Mittenfrequenz symmetrischen, beim einen Chirpimpuls-Typ steigenden und beim anderen Chirpimpuls-Typ fallenden Frequenzgang während der Impulsdauer aufweisen, wobei zur Abstandsbestimmung die komplementären Chirpimpuls-Typen in einem Anfrageoder Antwortdatenrahmen in jeweils gleicher Anzahl verwendet werden. Dabei betrifft die Forderung der Symmetrie um die Mittenfrequenz die komplementären Chirpimpuls-Typen im Vergleich, nicht den einzelnen Chirpimpuls-Typ.

Bei einem weiteren Ausführungsbeispiel wird ein Kalibrierungslauf durchgeführt, indem der erste oder der zweite oder beide Senderempfänger vor einem ersten Signalrundlauf im Rahmen der Abstandsbestimmung zum jeweils anderen Senderempfänger jeweils mindestens einen Signalrundlauf zur Bestimmung des Abstandes von einem oder von je einem mit vorbekanntem Abstand zum jeweiligen Senderempfänger angeordneten Kalibrier-Sender-Empfänger durchführen, der zusätzlich einen dem jeweiligen Senderempfänger bekannten oder jeweils zu übermittelnden Antwortzeitabstand verwendet. Die Abstandsbestimmung vom Kalibrier-Senderempfänger folgt dem erfindungsgemäßen Verfahren. Bei diesem Ausführungsbeispiel werden der so ermittelte und der vorbekannte räumliche Abstand zum Kalibrier-Senderempfänger verglichen. Das Vergleichsergebnis wird im Rahmen der nachfolgenden Abstandsbestimmung zur Fehlerkorrektur verwendet.

Bei diesem Ausführungsbeispiel werden vorzugsweise vor Durchführung einer Abstandsbestimmung oder im Zeitabstand der Größenordnung einer Sekunde davor oder danach entweder eine aktuelle Temperatur am Ort eines jeweiligen Senderempfängers oder eine aktuelle Versorgungsspannung eines jeweiligen Senderempfängers oder sowohl die Temperatur als auch die Versorgungsspannung ermittelt.

Dabei speichern der erste oder der zweite oder beide Senderempfänger vor oder während der Durchführung der Kalibrierung das Vergleichsergebnis zur Ermittlung von für den jeweiligen Senderempfänger charakteristischen Fehlerdaten als Funktion entweder der Temperatur am Ort eines jeweiligen Senderempfängers oder als Funktion der aktuellen Versorgungsspannung eines jeweiligen Sender empfängers oder als Funktion beider genannter Parametern ab. Weiterhin werden die ermittelten Fehlerdaten zur Bestimmung einer für den jeweiligen Senderempfänger individuellen temperatur- und versorgungsspannungsabhängigen Fehlerkorrekturfunktion oder einer entsprechenden Fehlerkorrekturtabelle herangezogen, die im jeweiligen Senderempfänger abgespeichert werden. Schließlich werden im Rahmen einer nachfolgenden Abstandsbestimmung ermittelte Abstandswerte durch Anwendung der Fehlerkorrekturfunktion oder durch Heranziehung eines in der Fehlertabelle enthaltenen Korrekturwertes korrigiert. Wenn die Entfernung nur auf Seiten eines einzigen Senderempfängers berechnet wird, muss der Korrekturwert zusätzlich zu den Signalrundlauf- und Antwortzeitabständen übertragen werden. Alternativ können die Signalrundlauf- und Antwortzeitabstände bereits vor der Übermittlung korrigiert werden.

Das erfindungsgemäße Verfahren kann in weiteren Ausführungsbeispielen auch zur Geschwindigkeits- und Beschleunigungsmessung verwendet werden. Zur Geschwindigkeitsbestimmung wird vorzugsweise die Abstandsbestimmung nach einem vorbestimmbaren oder dynamisch veränderbaren Messzeitabstand wiederholt. Dabei bedeutet die dynamische Veränderbarkeit des Messzeitabstands, dass der Messzeitabstand während der Durchführung der Geschwindigkeitsmessung geändert werden kann. Auf diese Weise kann bei einer sich häufig ändernden Geschwindigkeit die Häufigkeit der Abstandsmessungen erhöht werden, um einen genaueren Verlauf der Geschwindigkeit beider Senderempfänger relativ zueinander zu bestimmen. Die Bestimmung eines Geschwindigkeitswertes erfolgt durch Bildung einer Abstandsdifferenz nach einander ermittelter Abstandswerte zwischen dem ersten und zweiten Senderempfänger und anschließende Bildung eines Quotienten aus der Abstandsdifferenz und dem Messzeitabstand die Geschwindigkeit der Senderempfänger relativ zu einander.

Bei einer Beschleunigungsmessung mit einem vorbestimmbaren oder dynamisch veränderbaren Geschwindigkeits-Messzeitabstand zwei Geschwindigkeitswerte ermittelt.

Durch Bildung einer Geschwindigkeitsdifferenz nach einander ermittelter Geschwindigkeitswerte und anschließende Bildung des Quotienten aus der Geschwindigkeitsdifferenz und dem Messzeitabstand wird die Beschleunigung der Senderempfänger relativ zu einander ermittelt.

Bei einem weiteren Ausführungsbeispiel wird die Anzahl der von jedem Senderempfänger initiierten Signalrundläufe in Abhängigkeit von einer vorbestimmten Genauigkeit der Abstandsbestimmung gewählt.

Dabei wird in einem weiteren Ausführungsbeispiel die Anzahl der Signalrundläufe in zusätzlicher Abhängigkeit von einer vorbestimmten Obergrenze der Zeitdauer der Durchführung der Abstandsbestimmung gewählt.

Gemäß einem zweiten Aspekt der Erfindung wird als Weiterbildung der erfindungsgemäßen Abstandsbestimmung ein Verfahren zur Bestimmung der Position eines ersten Senderempfängers relativ zu mindestens einem zweiten Senderempfänger innerhalb eines Abstandsbereiches der Größenordnung von 10 km bereitgestellt, bei zur Bestimmung des Abstandes zwischen dem ersten und dem oder jedem zweiten Senderempfänger ein Verfahren nach einem der vorstehenden Ansprüche verwendet wird.

Die Vorteile des erfindungsgemäßen Positionsbestimmungsverfahrens ergeben sich aus denen des Abstandsbestimmungsverfahrens des ersten Aspekts der Erfindung. Ausführungsbeispiele des Positionsbestimmungsverfahren weisen die zusätzlichen Merkmale der in dieser Anmeldung beschriebenen Ausführungsbeispiele des erfindungsgemäßen Abstandsbestimmungsverfahrens entweder einzeln oder in Kombination auf.

Dabei erfolgt auf der Basis der Abstandsbestimmung die Bestimmung der Positionen eines Senderempfängers, wie bei Verfahren zur Positionsbestimmung allgemein üblich, durch Tri- oder Multilateration mit Senderempfängern bekannter Positionen.

Durch Einflüsse von Temperatur, Versorgungsspannung und Exemplarstreuungen als auch der Mehrwegeausbreitung kann es zu Fehlern der Impulslaufzeiten kommen, die bei der Lateration ein mehrdeutiges Ergebnis der Position ergeben würden. Das erfindungsgemäße Abstandsbestimmungsverfahren kann diese Fehler reduzieren. Durch Verwendung zusätzlicher, redundanter Senderempfänger mit bekannter Position und anderer bekannter Verfahren der Verbesserung der Genauigkeit der Positionsbestimmung können genauere Positionskoordinaten ermittelt werden.

Dabei sind auch Fehler kompensierbar, die durch eine ungleichmäßige Verteilung der Ausbreitungseigenschaften des Mediums (inhomogene Mehrwegausbreitung) entstehen, da die Abstandsmesswerte bei der Positionsbestimmung auffällig werden und entsprechend gewichtet berücksichtigt werden können. Die somit verbesserte Präzision der Positionskoordinaten von Senderempfängern kann dann wiederum zur verbesserten Berechnung der Entfernung zwischen zwei Senderempfängem verwendet werden.

Gemäß einem dritten Aspekt der Erfindung wird ein Senderempfänger für eine drahtlose Kommunikation zur Bestimmung des räumlichen Abstandes zu einem zweiten Senderempfänger innerhalb eines Abstandsbereiches der Größenordnung von 10 km mit dem Verfahren nach Anspruch 1 angegeben.

Der Senderempfänger hat eine Sendeeinheit, die ausgebildet ist, einen ersten Signalrundlauf durch Aussenden eines ersten Anfragedatenrahmens, der eine Sequenz von mindestens zwei Signalimpulsen mit vorbestimmtem Impulszeitabstand enthält, an einem ersten Anfrage-Sendezeitpunkt zu einem zweiten Senderempfänger zu initiieren.

Weiterhin hat der erfindungsgemäße Senderempfänger eine Empfangseinheit, die ausgebildet ist, den Empfang eines in Antwort auf den ersten Anfragedatenrahmen vom zweiten Senderempfänger übersandten ersten Antwortdatenrahmens zu überwachen und einen dem Empfang des ersten Antwortdatenrahmens zugeordneten ersten Antwort-Empfangszeitpunkt relativ zum ersten Anfrage-Sendezeitpunkt zu erfassen.

Erfindungsgemäß ist die Sendeeinheit zusätzlich ausgebildet,

- nach Empfang eines einen zweiten Signalrundlauf initiierenden zweiten Anfragedatenrahmens vom zweiten Senderempfänger einen zweiten Antwortdatenrahmen, der eine Sequenz von mindestens zwei Signalimpulsen mit vorbestimmtem Impulszeitabstand enthält, mit einem Antwortzeitabstand von einem zugeordneten zweiten Anfrage-Empfangszeitpunkt des zweiten Anfragedatenrahmens an den zweiten Senderempfänger auszusenden,

- nach Empfang eines einen ersten Signalrundlauf initiierenden ersten Anfragedatenrahmens von einem zweiten Senderempfänger einen ersten Antwortdatenrahmen, der eine Sequenz von mindestens zwei Signalimpulsen mit vorbestimmtem Impulszeitabstand enthält, mit einem Antwortzeitabstand relativ zu einem zugeordneten ersten Anfrage-Empfangszeitpunkt des ersten Anfragedatenrahmens an den zweiten Senderempfänger auszusenden, und

- auf den Empfang des ersten Anfragedatenrahmens vom zweiten Senderempfänger hin einen zweiten Signalrundlauf durch Aussenden eines zweiten Anfragedatenrahmens, der eine Sequenz von mindestens zwei Signalimpulsen mit vorbestimmtem Impulszeitabstand enthält, an den zweiten Senderempfänger an einem zweiten Anfrage-Sendezeitpunkt zu initiieren,

Die Empfangseinheit ist erfindungsgemäß zusätzlich ausgebildet, den Empfang eines in Antwort auf den zweiten Anfragedatenrahmen vom zweiten Senderempfänger übersandten zweiten Antwortdatenrahmens zu überwachen und einen dem Empfang des zweiten Antwortdatenrahmens zugeordneten zweiten Antwort-Empfangszeitpunkt relativ zum zweiten Anfrage Sendezeitpunkt zu erfassen,

Der erfindungsgemäße Senderempfänger ist schließlich ausgebildet, den ersten und den zweiten Antwortdatenrahmen mit einem vorbestimmten Wert des Antwortzeitabstandes relativ zum jeweiligen Anfrage-Empfangszeitpunkt mit einer zeitlichen Präzision auszusenden, bei der die Antwortzeitabstände auf Seiten des ersten und zweiten Senderempfängers in den zur Abstandsbestimmung durchgeführten Signalrundläufen entweder identisch sind oder eine Differenz, im Falle der Durchführung mehr als eines von jedem Senderempfänger initiieren Signalrundlaufes eine mittlere Differenz aufweisen, deren Betrag maximal 200, in einem bevorzugten Ausführungsbeispiel maximal 20 Mikrosekunden ist.

Die Einhaltung der beschriebenen Präzision des vorbestimmten Antwortzeitabstands erfordert keine Neukonstruktion von Taktgeneratoren oder Oszillatoren zur Generierung des Antwortzeitabstandes. Im Gegenteil, beispielsweise werden kommerziell übliche, sehr kostengünstige Schwingquarze mit einer Taktgenauigkeit von $\pm$ 50 ppm oder $\pm$ 20 ppm oder aus Quarzoszillatortakten abgeleitete Taktgeneratoren eingesetzt, ohne dass durch deren Fehler eine nennenswerte Verschlechterung der Genauigkeit auftritt. Es wird so eine bisher mit derart einfachen Mitteln nicht für möglich gehaltene Genauigkeit der Abstandsbestimmung erzielt. Die Einhaltung der beschriebenen Präzision erfordert jedoch, dass zur Abstandsbestimmung zwei Senderempfänger gemäß der vorliegenden Erfindung verwendet werden.

Das erfindungsgemäße Verfahren beruht auf der Kompensation von Fehlern, die durch Schwingquarze verursacht werden, durch eine symmetrische Abstandsmessung, die von beiden beteiligten Senderempfängem veranlasst wird. In einer Variante des erfindungsgemäßen Verfahrens, die insbesondere die für die Abstandsmessung benötigte Energie und Kanalbandbreitereduziert, wird das erfindungsgemäße Verfahren vor einer Abstandsbestimmung, die lediglich einen einzelnen Signalrundlauf umfasst, durchgeführt. Bei diesem Verfahren wird zusätzlich ein Taktgeneratorfehler beider Senderempfänger ermittelt. Zur Ermittlung des Taktgeneratorfehlers können die Rundlaufmessungen des erfindungsgemäßen Verfahrens herangezogen werden. Für eine nachfolgende Abstandsbestimmung, die mindestens einen der beiden Senderempfänger der vorherigen Abstandsmessung betrifft, wird abweichend von der erfindungsgemäßen Verfahrensführung nur ein einziger Signalrundlauf initiiert. Anschließend wird ein Auswerteschritt zur Bestimmung des Abstandes aufgrund dieses einzelnen Signalrundlaufes durchgeführt. Im Auswerteschritt dieser nachfolgenden Abstandsbestimmung wird eine Verfälschung auf der Grundlage des einzigen Signalrundlaufes vorläufig ermittelten Abstandswertes aufgrund des zuvor ermittelten Taktgeneratorfehlers des betreffenden Senderempfängers für die endgültige Ermittlung des Abstandswertes herausgerechnet. Eine Taktdrift kann also mit dem zuvor berechnetten und gespeicherten Wert beseitigt werden. Auf diese Weise wird es ermöglicht, dass bei einer Serie von Abstandsbestimmungen nicht alle Abstandsbestimmungen von beiden Senderempfängern Rundlaufmessungen initiierte Signalrundläufe enthalten müssen, was zusätzlich zur Energieeinsparung auch eine Einsparung genutzter Kanalbandbreite mit sich bringt.

Dieses Ausführungsbeispiel hat zwar eine geringere Genauigkeit als die durchgehende Wiederholung des erfindungsgemäßen Verfahrens. Diese reduzierte Genauigkeit kann jedoch in einer Vielzahl von Anwendungen ausreichend sein. Das Verfahren erfordert die Einrichtung und Pflege einer Datenbank von Kristalloder Taktgeneratorfehlern in einer der Senderempfänger-Stationen (beispielsweise einer zentralen Ranging-Station). Anwendungen mit vielen Netzknoten und hoher Netzauslastung, bei denen die genutzte Bandbreite und die Batterielebensdauer von Bedeutung ist, werden vielfach eine zentrale oder koordinierende Einheit enthalten, die die Funktion der Ranging-Station übernehmen wird. Diese Ranging-Station wird üblicherweise auch die Anwendung mit einer Datenbank benötigter Informationen enthalten, beispielsweise eine Anwendung zum Verfolgen (tracking) von Senderempfängern. Solche Stationen sind nicht in gleichem Maße einem Kostendruck unterworfen, wie mobile Geräte.

Da sich Kristallfehler aufgrund von Temperaturvariationen ändern können, führt die koordinierende Ranging-Station bevorzugt eine regelmäßige Aktualisierung der Datenbank mit Kristallfehlern durch. Alternativ kann eine solche Aktualisierung auch durch in einem mobilen Gerät gemessene Temperaturänderungen veranlasst werden. Zu berücksichtigen ist jedoch, dass die Temperaturänderungen typischerweise nur langsam erfolgen und kaum den gesamten für Schwingquarze relevanten Temperaturbereich von - 40°C bis 85°C innerhalb einer kurzen Zeit durchlaufen werden. Daher müssen Kristallfehlermessungen mit dem erfindungsgemäßen Verfahren nur relativ selten durchgeführt werden, und sind die in der Datenbank gespeicherten Fehlerwerte meist für eine längere Zeit gültig.

Typischerweise wird das Protokoll zur Durchführung eines Ranging zusammen mit anderen Funktionen, wie beispielsweise Sicherheitsfunktionen, auf einer höheren Protokollschicht angesiedelt sein. Dies begünstigt eine reibungslose Kooperation zwischen der Ranging-Funktionalität und einer Anwendung, wie beispielsweise der Tracking-Anwendung, bei der Pflege der Datenbank.

Nachfolgend werden Ausführungsbeispiele des erfindungsgemäßen Senderempfängers beschrieben. Es wird darauf hingewiesen, dass auch in den Ansprüchen Ausführungsbeispiele des Senderempfängers genannt sind. Weiterhin ergeben sich weitere Ausführungsbeispiele des Senderempfängers durch Implementierung der zusätzlichen Merkmale der oben beschriebenen Ausführungsbeispiele des erfindungsgemäßen Verfahrens zur Abstandsbestimmung sowie des erfindungsgemäßen Verfahrens zur Positionsbestimmung. Die Umsetzung der dort beschriebenen Verfahrensmerkmale in elektronischen Schaltungen kann mittels bekannter Methoden des Hardware- oder Software-Designs erfolgen. Weiterhin ist anzumerken, dass die hier beschriebenen Ausführungsbeispiele sowohl einzeln als auch in Kombination miteinander realisiert werden können, soweit aus der Beschreibung oder den Ansprüchen nichts gegenteiliges hervorgeht

Bei einem bevorzugten Ausführungsbeispiel hat der Senderempfänger eine Auswerteeinheit, die mit der Sende- und der Empfangseinheit verbunden ist und ausgebildet ist zum Ermitteln eines Rundlaufzeitabstandes zwischen dem Anfrage-Sendezeitpunkt eines von der Sendeeinheit ausgesandten ersten oder zweiten Anfragedatenrahmens und dem Antwort-Empfangszeitpunkt eines vom zweiten Senderempfänger her empfangenen ersten oder zweiten Antwortdatenrahmens.

Bei diesem Ausführungsbeispiel hat die Auswerteeinheit vorzugsweise eine Datenverbindung zum zweiten Senderempfänger und ist zusätzlich ausgebildet über die Sendeeinheit einen erfassten Antwortzeitabstand und einen ermittelten Rundlaufzeitabstand an den zweiten Senderempfänger zu übertragen oder über die Empfangseinheit einen erfassten Antwortzeitabstand und einen ermittelten Rundlaufzeitabstand auf Seiten des zweiten Senderempfängers zu empfangen und eine Signallaufzeit $T_{prop}$ zwischen dem ersten und dem zweiten Senderempfänger anhand des oder der ermittelten Rundlaufzeitabstände und der Antwortzeitabstände zu ermitteln und den räumlichen Abstand zwischen dem ersten und zweiten Senderempfänger durch Multiplikation der Signallaufzeit $T_{prop}$ mit einer vorbekannten Ausbreitungsgeschwindigkeit der Signalimpulse zu bestimmen.

Bei einem weiteren Ausführungsbeispiel des erfindungsgemäßen Senderempfängers ist die Sendeeinheit ausgebildet, den zweiten Anfragedatenrahmen zur Initiierung des zweiten Signalrundlaufes nach dem ersten Antwortdatenrahmen an den zweiten Senderempfänger zu senden.

In einem anderen Ausführungsbeispiel ist die Sendeeinheit ausgebildet, am zweiten Anfrage-Sendezeitpunkt mit dem vorbestimmten Antwortzeitabstand relativ zu einem zugeordneten Empfangszeitpunkt des ersten Anfragedatenrahmens an den zweiten Senderempfänger einen kombinierten Anfrage- und Antwortdatenrahmen auszusenden, der in einem einzigen Datenrahmen sowohl die Funktion eines ersten Antwortdatenrahmens als auch die Funktion eines zweiten Anfragedatenrahmens vereint, und bei dem die Empfangseinheit ausgebildet ist, den Empfang eines in Antwort auf den kombinierten Anfrage- und Antwortdatenrahmen vom zweiten Senderempfänger übersandten zweiten Antwortdatenrahmens zu überwachen und einen dem Empfang des zweiten Antwortdatenrahmens zugeordneten zweiten Antwort-Empfangszeitpunkt relativ zum zweiten Anfrage-Sendezeitpunkt zu erfassen.

Bei einem weiteren Ausführungsbeispiel ist die Sendeeinheit ausgebildet, Anfragedatenrahmen und Antwortdatenrahmen mit jeweils mehr als zwei Signalimpulsen auszusenden, und bei dem die Empfangseinheit ausgebildet ist, die Empfangszeitpunkte von mehr als zwei Signalimpulsen eines jeweiligen Anfrage- oder Antwortdatenrahmens zu erfassen.

Bei diesem Ausführungsbeispiel ist die Sendeeinheit vorzugsweise ausgebildet, Signalimpulse eines Datenrahmens zu Sendezeitpunkten auszusenden, die relativ zu einem Zeitraster, das durch den senderseitig vorbestimmten Impulszeitabstand im auszusendenden Datenrahmen definiert ist, derart verschoben sind, dass die Signalimpulse im Mittel zu den durch das Zeitraster vorgegebenen Rasterzeitpunkten ausgesendet werden.

Dabei ist die Empfangseinheit vorzugsweise ausgebildet, Signalimpulse eines empfangenen Datenrahmens relativ zu einem Zeitraster, das durch den Impulszeitabstand der empfangenen Signalimpulse definiert ist, derart zu verschieben, dass die verschobenen Signalimpulse im Mittel mit dem senderseitig vorbestimmten Impulszeitabstand empfangen werden. Vorzugsweise ist die Empfangseinheit ausgebildet, nach Erfassung der Empfangszeitpunkte der Signalimpulse einen mittleren Empfangszeitpunkt bezüglich des Zeitrasters zu ermitteln.

Bei einem Ausführungsbeispiel mit besonders präziser Bestimmung von Empfangszeitpunkten ist die Empfangseinheit ausgebildet, denjenigen Zeitpunkt zu ermitteln und als Empfangszeitpunkt eines Signalimpulses zu erfassen, bei dem ein detektierter Signalimpuls einen maximalen Signalgewinn oder einen maximalen Wert einer Korrelation mit einem vorbestimmten Signalmuster aufweist.

Bei einem weiteren Ausführungsbeispiel ist die Empfangseinheit ausgebildet, nach einer Bestimmung eines Anfrage- oder Antwort-Empfangszeitpunktes eines Anfrage- oder Antwortdatenrahmens und vor einer nachfolgenden Bestimmung eines Anfrage- oder Antwort-Empfangszeitpunktes eines nächsten Anfrage- oder Antwortdatenrahmens einen zur Bestimmung von Sende- und Empfangszeitpunkten verwendeten Taktgenerator oder Oszillator neu zu starten.

Vorzugsweise ist die Empfangseinheit ausgebildet, ein Empfangssignal auf das Vorliegen einer auf eine Mehrwegeausbreitung eines einzelnen Signalimpulses zurückgehenden Impulsfolge zu prüfen und bei Vorliegen einer solchen Impulsfolge als Empfangszeitpunkt des Signalimpulses den frühesten Zeitpunkt innerhalb eines vorbestimmten Zeitfensters zu ermitteln, bei dem das Empfangssignal einen maximalen Wert annimmt

In einem anderen Ausführungsbeispiel ist der Senderempfänger ausgebildet, mit dem zweiten Senderempfänger die Werte der Antwortzeitabstände vor Aussendung eines Anfragedatenrahmens zu vereinbaren.

Ein besonders bevorzugtes Ausführungsbeispiel des erfindungsgemäßen Senderempfängers ist der ausgebildet, den Antwortzeitabstand zu messen.

Ein weiteres Ausführungsbeispiel des erfindungsgemäßen Senderempfängers ist ausgebildet, mit dem zweiten Senderempfänger eine Folge von unterschiedlichen Werten von Antwortzeitabständen zu vereinbaren und bei Durchführung jeder nachfolgenden Abstandsbestimmung jeweils den nächsten in der Folge vorgegebenen Antwortzeitabstand einzuhalten.

Besonders bevorzugt ist ein Senderempfänger, bei dem die Sendeeinheit ausgebildet ist, die zur Abstandsbestimmung verwendeten Signalimpulse zugleich als Informationssymbole zu verwenden.

Weiterhin ist die Sendeeinheit besonders bevorzugt ausgebildet, erzeugte Signalimpulse in Form von Chirpimpulsen auszusenden und die Empfangseinheit ausgebildet ist, aus empfangenen Chirpimpulsen senderseitig erzeugte Signalimpulse zu rekonstruieren.

Dabei ist es vorteilhaft, wenn die Sendeeinheit ausgebildet ist, zwei komplementäre Typen von Chirpimpulsen auszusenden, die eine identische Mittelfrequenz und Impulsdauer, jedoch einen gegenläufigen und um die Mittenfrequenz symmetrischen, beim einen Chirpimpuls-Typ steigenden und beim anderen Chirpimpuls-Typ fallenden Frequenzgang während der Impulsdauer aufweisen, wobei zur Abstandsbestimmung die komplementären Chirpimpuls-Typen in einem Anfrage- oder Antwortdatenrahmen in jeweils gleicher Anzahl verwendet werden. Ein bevorzugtes Ausführungsbeispiel eines Senderempfängers mit Auswerteeinheit ist ausgebildet, die Abstandsbestimmung nach einem vorbestimmbaren oder dynamisch veränderbaren Messzeitabstand zu wiederholen, und bei dem die Auswerteeinheit ausgebildet ist, durch Bildung einer Abstandsdifferenz nach einander ermittelter Abstandswerte zwischen dem ersten und zweiten Senderempfänger und anschließende Bildung eines Quotienten aus der Abstandsdifferenz und dem Messzeitabstand die Geschwindigkeit der Senderempfänger relativ zu einander zu ermitteln.

Zur Beschleunigungsmessung ist ein weiteres Ausführungsbeispiel des erfindungsgemäßen Senderempfängers ausgebildet, mit einem vorbestimmbaren oder dynamisch veränderbaren Geschwindigkeits-Messzeitabstand zwei Geschwindigkeitswerte zu ermitteln, und bei dem die Auswerteeinheit ausgebildet ist, durch Bildung einer Geschwindigkeitsdifferenz nach einander ermittelter Geschwindigkeitswerte und anschließende Bildung des Quotienten aus der Geschwindigkeitsdifferenz und dem Messzeitabstand die Beschleunigung der Senderempfänger relativ zu einander zu ermitteln.

Gemäß einem vierten Aspekt der Erfindung wird eine Anordnung zur Bestimmung des räumlichen Abstandes zwischen einem ersten erfindungsgemäßen Senderempfänger und einem zweiten erfindungsgemäßen Senderempfänger innerhalb eines Abstandsbereiches der Größenordnung von 10 km bereitgestellt.

Die Vorteile der erfindungsgemäßen Anordnung ergeben sich aus den oben beschriebenen Vorteilen des erfindungsgemäßen Verfahrens. Ausführungsbeispiele der erfindungsgemäßen Anordnung, soweit sie nicht nachfolgend und in den Patentansprüchen näher beschrieben sind, entsprechen den Ausführungsbeispielen des erfindungsgemäßen Senderempfängers.

Nachfolgend werden die zusätzlichen Merkmale weiterer Ausführungsbeispiele der erfindungsgemäßen Anordnung beschrieben.

Bei einem bevorzugten Ausführungsbeispiel der erfindungsgemäßen Anordnung haben beide Senderempfänger eine Auswerteeinheit, die mit der jeweiligen Sendeeinheit und der jeweiligen Empfangseinheit der Senderempfänger verbunden ist und ausgebildet ist, zum Ermitteln eines Rundlaufzeitabstandes zwischen dem Sendezeitpunkt eines von der Sendeeinheit ausgesandten ersten oder zweiten Anfragedatenrahmens und dem Empfangszeitpunkt eines vom zweiten Senderempfänger her empfangenen ersten oder zweiten Antwortrahmens.

Ein weiteres Ausführungsbeispiel der erfindungsgemäßen Anordnung hat einen dritten Senderempfänger, der eine Abstandsbestimmungseinheit mit einer Datenverbindung zum ersten und zum zweiten Senderempfänger aufweist. Der dritte Senderempfänger ist ausgebildet, eine Datenverbindung zum ersten und zum zweiten Senderempfänger zur Übertragung von Rundlaufzeitabständen und Antwortzeitabständen an den dritten Senderempfänger. Weiterhin ist die Abstandsbestimmungseinheit ausgebildet, und

- zum Ermitteln einer Signallaufzeit zwischen dem ersten und dem zweiten Senderempfänger anhand des oder der ermittelten Rundlaufzeitabstände und der Antwortzeitabstände und

- zum Berechnen des räumlichen Abstand zwischen dem ersten und zweiten Senderempfänger durch Multiplikation der Signallaufzeit $T_{prop}$ mit einer vorbekannten Ausbreitungsgeschwindigkeit der Signalimpulse.

Bei einem weiteren Ausführungsbeispiel der erfindungsgemäßen Anordnung sind der erste und zweite Senderempfänger ausgebildet, den ersten und zweiten Signalrundlauf mindestens zwei Mal durchzuführen, bis der Abstand zwischen dem ersten und zweiten Senderempfänger von einer Anzahl Anfrage- und Antwortdatenrahmen durchlaufen worden ist, die ein Vielfaches von vier ist, sowie alle zusätzlichen Rundlaufabstände zu ermitteln und Antwortzeitabstände zu erfassen, wobei der erste und zweite Senderempfänger ausgebildet sind, Antwortzeitabstände $T_{replyAk}$, k= 2, 4, 6, 8,..,(n-1) von $T_{replyA2}$ bis $T_{replyA(n-1)}$, und $T_{replyB1}$, i =1, 3, 5, 7, ...,(n-2) von $T_{replyB1}$ bis $T_{replyB(n-2)}$ zu verwenden, die eine mittlere Differenz gemäß der Formel

$$\Delta T_{Re\,plyAVG} = \frac{T_{replyA2} - T_{replyB1} + .. + T_{replyA(n-1)} - T_{replyB(n-2)}}{\frac{n-1}{2}}$$

aufweisen, deren Betrag maximal 200, bevorzugt maximal 20 Mikrosekunden ist. Die Auswerteeinheit des ersten Senderempfängers ist hierbei ausgebildet, nach wiederholter Durchführung der ersten Signalrundlauf-Schrittfolge zusätzliche Rundlaufzeitabstände $T_{roundAi}$ mit i= 3, 5, 7,...,(n-2) von $T_{roundA3}$ bis $T_{roundA(n-2)}$ zu ermitteln, wobei n eine ungerade Zahl ist.

Bei diesem Ausführungsbeispiel ist die Auswerteeinheit des zweiten Senderempfängers weiterhin ausgebildet, nach wiederholter Durchführung der zweiten Signalrundlauf-Schrittfolge zusätzliche Rundlaufzeitabstände $T_{roundBk}$ mit k= 4, 6, 8,..., (n-1) von $T_{roundB4}$ bis $T_{roundB(n-1)}$ zu ermitteln.

Bei einem weiteren Ausführungsbeispiel der erfindungsgemäße Anordnung, bei die Senderempfänger zur Durchführung eines symmetrischen Drei-Wege-Verfahrens ausgebildet sind, ist jeder Senderempfänger vorzugsweise ausgebildet, mindestens zwei Signalrundläufe zu initiieren, bis der Abstand zwischen dem ersten und zweiten Senderempfänger von einer ungeraden Anzahl n>3 Anfrage- und Antwortdatenrahmen durchlaufen worden ist, sowie alle zusätzlichen Rundlaufabstände zu ermitteln und Antwortzeitabstände zu erfassen.

Bei dieser Anordnung werden

- nach wiederholter Durchführung der ersten Signalrundlauf-Schrittfolge zusätzliche Rundlaufzeitabstände $T_{roundAi}$ mit i= 3, 5, 7,...,(n-2), von $T_{roundA3}$ bis $T_{roundA(n-2)}$ ermittelt und

- nach wiederholter Durchführung der zweiten Signalrundlauf-Schrittfolge zusätzliche Rundlaufzeitabstände $T_{roundBk}$, mit k = 4, 8, 8,..., (n-1), von $T_{roundB4}$ bis $T_{roundB(n-1)}$ ermittelt,

- wobei Antwortzeitabstände $T_{replyAk}$, k= 2, 4, 6, 8,...,(n-1) von $T_{replyA2}$ bis $T_{replyA(n-1)}$, $T_{replyBi}$, i= 1, 3, 5, 7,..., (n-2) von $T_{replyB1}$ bis $T_{replyB(n-2)}$ auftreten, die eine mittlere Differenz gemäß der Formel

$$\Delta T_{Re\,plyAVG} = \frac{T_{replyA2} - T_{replyB1} + .. + T_{replyA(n-1)} - T_{replyB(n-2)}}{\frac{n-1}{2}}$$

aufweisen, deren Betrag maximal 200, bevorzugt maximal 20 Mikrosekunden ist.

Bei einem weiteren Ausführungsbeispiel der erfindungsgemäßen Anordnung ist ein zusätzlicher Kalibrier-Senderempfänger mit Auswerteeinheit vorgesehen, der mit vorbekanntem Abstand zum ersten oder zweiten Senderempfänger angeordnet ist und der einen dem bekannten oder jeweils zu übermittelnden Antwortzeitabstand verwendet

Bei diesem Ausführungsbeispiel sind der erste oder der zweite oder beide Senderempfänger ausgebildet, vor einem ersten Signalrundlauf im Rahmen der Abstandsbestimmung zum jeweils anderen Senderempfänger mindestens ein Signalrundlaufpaar zur Abstandsbestimmung vom Kalibrier-Sender-Empfänger durchführen.

Weiterhin sind der erste oder zweite Senderempfänger ausgebildet, den so ermittelten und den vorbekannten räumlichen Abstand zum Kalibrier-Sender Empfänger zu vergleichen und das Vergleichsergebnis im Rahmen der nachfolgenden Abstandsbestimmung zur Fehlerkorrektur zu verwenden.

Bei einem bevorzugten Ausführungsbeispiel der erfindungsgemäßen Anordnung sind der erste oder der zweite Senderempfänger oder beide Senderempfänger ausgebildet, während der Durchführung einer Abstandsbestimmung oder im Zeitabstand der Größenordnung einer Sekunde davor oder danach entweder eine aktuelle Temperatur am Ort eines jeweiligen Senderempfängers oder eine aktuelle Versorgungsspannung eines jeweiligen Senderempfängers oder sowohl die aktuelle Temperatur als auch die aktuelle Versorgungsspannung zu messen.

Durch die Verwendung von temperaturunempfindlichen Bauteilen, die insbesondere für die Detektierung der Impulse im Empfänger verwendet werden, können die negativen Einflüsse der Umgebungstemperatur oder Herstellungstoleranzen vermieden werden.

In der Praxis werden zur Kompression eines Impulses oft mechanische Oberflächenwellenfilter eingesetzt, die eine starke Temperaturabhängigkeit zeigen. Zudem existieren bei diesen Bauteilen exemplarabhängige Eigenschaften, die durch die mechanischen Toleranzen der Herstellung bedingt sind und unterschiedliches zeitliches Verhalten hervorrufen. Die zeitlichen Fehler würden zu großen Ungenauigkeiten bei der Entfernungsmessung führen.

Bevorzugt wird daher das Wirkprinzip dieser analogen Bauteile beim erfindungsgemäßen Senderempfänger in digitalen elektronischen Schaltungen verwirklicht, die wesentlich weniger Abhängigkeit von Temperatur und Herstellungstoleranzen aufweisen. Beispielsweise lässt sich die Kompression eines Chirpimpulses, welcher zur Übertragung von Informationssymbolen eingesetzt wird, im Empfänger mit einem einen digitalen Korrelator als elektronischer Schaltung realisieren.

Bei einem Ausführungsbeispiel einer erfindungsgemäßen Anordnung zur Bestimmung des räumlichen Abstandes zwischen einem ersten Senderempfänger und einem zweiten Senderempfänger gemäß der Erfindung ist in einem der Senderempfänger eine Datenbankeinheit vorgesehen, die ausgebildet ist, Taktgeneratorfehler von Senderempfängern anhand einer zuvor durchgeführten Abstandsbestimmung zu ermitteln und abzuspeichern. Der erste und der zweite Senderempfänger sind ausgebildet, nach Ermittlung ihrer Taktgeneratorfehler folgende Abstandbestimmungen abweichend von der erfindungsgemäßen Verfahrensführung mit nur einem einzigen Signalrundlauf und mit .einem Auswerteschritt durchzuführen. Die Auswerteeinheit der Senderempfänger ist ausgebildet, im Auswerteschritt eine Verfälschung eines nach dem einzigen Signalrundlauf vorläufig ermittelten Abstandswertes unter Zugriff auf den zuvor in der Datenbankeinheit abgespeicherten Taktgeneratorfehlers des beteiligten Senderempfängers für die endgültige Ermittlung des Abstandswertes herauszurechnen. Mit dieser Anordnung wird die zuvor erläuterte Verfahrensführung realisiert, bei der das erfindungsgemäße Verfahren in regelmäßigen Abständen durchgeführt wird, und zwischenzeitlich ein einfacheres Abstandsbestimmungsverfahren mit nur einem einzigen Signalrundlauf durchgeführt wird.

KURZE BESCHREIBUNG DER FIGUREN

FIG. 1 zeigt eine schematische Darstellung eines Ausführungsbeispiels des erfindungsgemäßen Verfahrens in Form eines 3-Wege-Verfahrens.

FIG. 2 zeigt ein Zeitdiagramm zur Erläuterung des zeitlichen Ablaufs des 3-Wege-Verfahrens der Figur 1.

FIG. 3 zeigt ein zweites Ausführungsbeispiel der Erfindung in Form eines verallgemeinerten n-Wege-Verfahrens, bei dem der Abstand zwischen zwei Senderempfängern von einer ungeraden Anzahl von Datenrahmen durchlaufen wird.

FIG. 4 zeigt ein Zeitdiagramm zur Erläuterung des zeitlichen Ablaufs des n-Wege-Verfahrens der Figur 4.

FIG. 5 zeigt ein drittes Ausführungsbeispiel des erfindungsgemäßen Verfahrens zur Abstandsbestimmung in Form eines doppelseitigen Zwei-Wege-Verfahrens.

FIG. 6 zeigt ein Zeitdiagramm zur Erläuterung des zeitlichen Ablaufs des doppelseitigen Zwei-Wege-Verfahrens der Figur 6.

FIG. 7 zeigt eine schematische *Darstellung zur Erläuterung eines vierten Ausführungsbeispiels, bei dem durch Wiederholung von Signalrundläufen ein mehrfach-doppelseitiges Zwei-Wege-Verfahren durchgeführt wird.

FIG. 8 zeigt ein Zeitdiagramm zur Erläuterung des zeitlichen Ablaufs des mehrfach-doppelseitigen Zwei-Wege-Verfahrens der Figur 8.

FIG. 9 zeigt ein Zeitdiagramm zur Erläuterung eines fünften Ausführungsbeispiels, bei dem senderseitig ein Dithering vorgenommen wird.

FIG. 10    zeigt ein Zeitdiagramm zur Erläuterung des empfängerseitigen Verhaltens bei senderseitigem Dithering gemäß Figur 10.

FIG. 11    zeigt anhand eines Blockschaltbildes ein Beispiel einer Anordnung von zwei Senderempfängern mit inhärent umgesetztem Dithering.

FIG. 12    zeigt eine Zeitdiagramm zur Erläuterung des zeitlichen Ablaufes der Übertragung eines Impulses bei Verwendung der Senderempfänger-Anordnung der Fig. 11.

FIG. 13    zeigt zur weiteren Erläuterung der Senderempfänger-Anordnung der Fig. 11 ein Zeitdiagramm zur Erläuterung der Zeitauflösung der einzelnen Messungen.

FIG. 14    zeigt anhand eines Blockschaltbildes eine in einem integrierten Schaltungsbaustein implementierte Ausführungsvariante eines erfindungsgemäßen Senderempfängers mit externen Abstandsberechnungs- und Anwendungsmodul.

FIG. 15    zeigt in einem Blockschaltbild ein Ausführungsbeispiel eines Senderempfängers mit einem integriertes Abstandsberechnungsmodul, auszeichnet.

FIG. 16    zeigt in einem Blockschaltbild ein Ausführungsbeispiel eines Senderempfängers, der sich durch ein integriertes Abstandsberechnungs- und Anwendungsmodul auszeichnet.

FIG. 17    zeigt in einem Blockschaltbild ein Ausführungsbeispiel eines Senderempfängers mit einer Implementierung der Messung des Rundlaufzeitabstandes und des Antwortzeitabstandes.

FIG. 18    zeigt in einem Blockschaltbild ein Ausführungsbeispiel eines Senderempfängers, der eine Messung des Rundlaufzeitabstandes und zusätzlich eine Messung des Fehlers der Rundlaufzeitabstandes implementiert.

FIG. 19    zeigt in einem Blockschaltbild ein Ausführungsbeispiel eines Senderempfängers, der eine Steuerung zur Generierung des Antwortzeitabstandes und zusätzlich eine Messung des Fehlers der Antwortzeitabstandes implementiert.

Fig. 20    zeigt ein Blockschaltbild eines Senderempfängers, der ein Averaging-Verfahren implementiert

BESCHREIBUNG BEVORZUGTER AUSFÜHRUNGSFORMEN

Nachfolgend werden eine Anzahl bevorzugter Ausführungsbeispiele mit Bezug auf die genannten Figuren näher beschrieben.

1. Drei-Wege-Verfahren zur Abstandsbestimmung

Nachfolgend wird als erstes Ausführungsbeispiel der Erfindung anhand der Figurren 1 und 2 ein 3-Wege-Verfahren zur Abstandsbestimmung zweier Senderempfänger beschrieben. Bei diesem Ausführungsbeispiel sind der oben beschriebene erste und zweite Signalrundlauf gekoppelt. Es wird zunächst der zeitliche Ablauf der Signalrundläufe beschrieben. Anschließend wird im Einzelnen auf die Genauigkeit der Abstandsmessung nach diesem Ausführungsbeispiel eingegangen.

1.1 Signalrundläufe im Drei-Wege-Verfahren

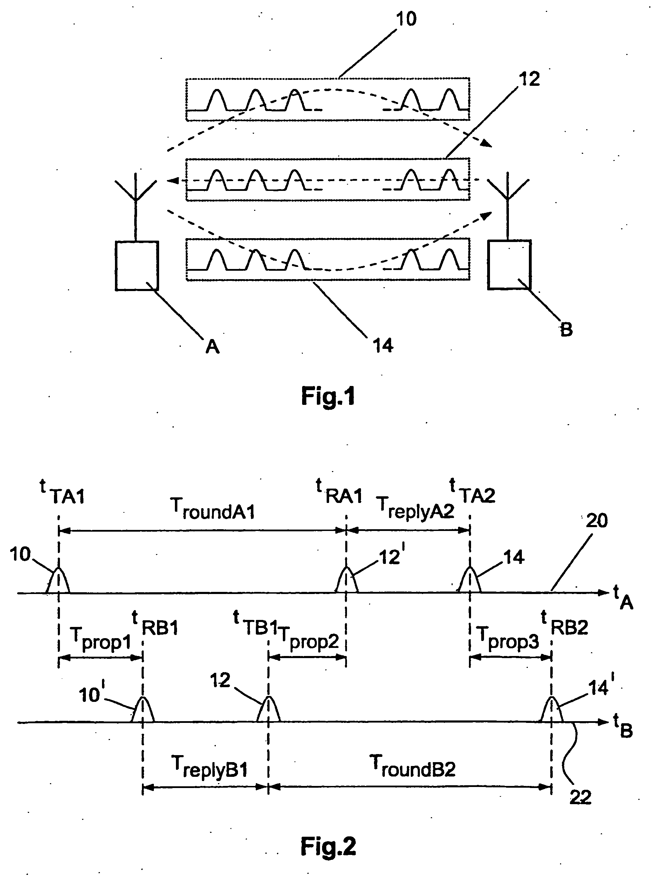

Figur 1 zeigt eine schematische Darstellung des 3-Wege-Verfahrens zur Abstandsbestimmung zwischen einem ersten Senderempfänger A und einem zweiten Senderempfänger B. Die Bezeichnung 3-Wege-Verfahren wurde gewählt, weil im Rahmen der Abstandsbestimmung insgesamt drei Datenrahmen übertragen werden.
Der Senderempfänger A überträgt einen ersten Datenrahmen 10 an den zweiten Senderempfänger B. Der Datenrahmen 10 besteht aus einer Sequenz von Signalimpulsen mit bekannter Frequenz der Signalimpulse.
Der Datenrahmen 10 wird vom Senderempfänger B empfangen, geprüft und bei erfolgreicher Prüfung durch Aussenden eines zweiten Datenrahmens 12 zum ersten Senderempfänger A beantwortet. Der Aufbau des zweiten Datenrahmens entspricht dem des ersten Datenrahmens. Dies bedeutet nicht, dass die Datenrahmen 10 und 12 identisch sein müssen. Sie weisen lediglich für die Zwecke der Abstandsbestimmung eine Sequenz von Signalimpulsen mit bekannter Impulsfrequenz auf. Es können mit den Datenrahmen jeweils unterschiedliche weiter Nachrichten übertragen werden.

Der erste Senderempfänger A prüft den empfangenen zweiten Datenrahmen 12 und sendet nach erfolgreicher Prüfung einen dritten Datenrahmen 14 zum zweiten Senderempfänger B. Anhand des zeitlichen Verlaufs dieser drei Übertragungsschritte zwischen dem ersten und zweiten Senderempfänger kann der Abstand zwischen den beiden Senderempfängern ermittelt werden, wie nachfolgend anhand von Figur 2 näher erläutert wird.

Figur 2 zeigt ein Zeitdiagramm zur Erläuterung des zeitlichen Ablaufs des 3-Wege-Verfahrens der Figur 1. Im Diagramm der Figur 2 sind zwei Zeitachsen 20 und 22 dargestellt, die den zeitlichen Verlauf der Sende- und Empfangsaktivitäten des ersten Senderempfängers A auf der Zeitachse 20 und des zweiten Senderempfängers B auf der Zeitachse 22 darstellen. Zur Vereinfachung der Darstellung wird von jedem Datenrahmen der Figur 1 in figur 2 lediglich ein Signalimpuls gezeigt Dies entspricht insofern den tatsächlichen Verhältnissen, als zur Bestimmung von Sende- und Empfangszeitpunkten ein Referenzpunkt innerhalb des Datenrahmens vereinbart sein muss. Ein geeigneter Referenzpunkt ist der Zeitpunkt der maximalen Amplitude eines bestimmten Signalimpulses des Datenrahmens, beispielsweise des ersten Signalimpulses (Rahmenanfang) oder des letzten Signalimpulses (Rahmenende). Es kann zwischen den Senderempfängern A und B auch ein anderer Referenzpunkt vereinbart werden.

Zu einem Zeitpunkt $T_{TA1}$ sendet der erste Senderempfänger A den ersten Datenrahmen 10 an den zweiten Senderempfänger B. Dieser empfängt den ersten Oatenrahmen 10 in Form eines Empfangssignals 10' nach einer durch den Abstand zwischen den Senderempfängern A und 8 und die Ausbreitungsgeschwindigkeit des Mediums bedingten Signallaufzeit $T_{prop}$. Empfangene Datenrahmen wie der Datenrahmen 10' werden als solche im Rahmen dieser Beschreibung der Klarheit halber vom gesendeten Datenrahmen allein deswegen durch einen Hochstrich unterschieden, weil es sich hierbei um Empfangssignale handelt, die sich aufgrund von Mehrfachausbreitung, Signalabschwächungen und ähnlichen bekannten Effekten vom jeweils ausgesendeten Datenrahmen unterscheiden können. Im Idealfall unterscheiden sich ein gesendeter und ein empfangener Datenrahmen nicht

Der zweite Senderempfänger B sendet nach Prüfung des empfangenen Datenrahmens 10' den zweiten Datenrahmen 12 an den ersten Senderempfänger A. Der Zeitabstand zwischen dem Empfangszeitpunkt $T_{RB1}$ des ersten Datenrahmens 10' und dem Sendezeitpunkt $T_{TB1}$ des zweiten Datenrahmens 12 ist der Antwortzeitabstand $T_{replyB}$. Der erste Senderempfänger A empfängt den zweiten Datenrahmen 12 nach der Signallaufzeit $T_{prop}$ in Form eines Empfangssignals 12' zu einem Empfangszeitpunkt $T_{RA1}$. Der Zeitabstand zwischen dem ersten Sendezeitpunkt $T_{TA1}$ und dem Empfangszeitpunkt $T_{RA1}$ auf Seiten des Senderempfängers A bildet einen ersten Rundlaufzeitabstand $T_{roundA1}$.

Der erste Senderempfänger A antwortet auf den Empfang des zweiten Datenrahmens 12 mit dem dritten Datenrahmen 14. Dabei vergeht zwischen dem Eingang des Empfangssignals 12' zum Zeitpunkt $T_{RA1}$ und dem Aussenden des dritten Datenrahmens 14 zum Zeitpunkt $T_{TA2}$ ein Zeitabstand $T_{replyA2}$. Nach einer Signallaufzeit $T_{prop}$ erreicht der dritte Datenrahmen 14 den zweiten Senderempfänger B zu einem Empfangszeitpunkt $T_{RB2}$.

Zwischen dem Aussenden des zweiten Datenrahmens 12 und dem Empfang des dritten Datenrahmens 14 beim zweiten Senderempfänger B findet also ein zweiter Signalrundlauf statt, der insgesamt eine Zeitdauer $T_{roundB2}$ benötigt.

Ein wesentliches Merkmal des vorliegenden Verfahrens ist, dass der erste Signalrundlauf beim ersten Senderempfänger A beginnt und endet, während der zweite Signalrundlauf beim zweiten Senderempfänger B beginnt und endet. Weiterhin ist eine wesentliches Merkmal des hier beschriebenen Ausführungsbeispiels, dass die Antwortzeitabstände $T_{replyB1}$ und $T_{replyA2}$ identisch sind oder eine Differenz aufweisen, deren Betrag maximal 20 µs ist. Die Antwortzeitabstände können bedingt sein durch Antwortzeiten, die in Übertragungsprotokollen festgelegt sind, durch die Länge bzw. Dauer der übertragenen Datenrahmen sowie durch geräteinterne Verzögerungen, welche durch die Rahmenprüfung oder anderweitige Prozesse innerhalb eines Senderempfängers entstehen.

Aus den Rundlaufzeitabständen $T_{roundA1}$ und $T_{roundB2}$ wird nach Abzug der bekannten Antwortzeiten eine mittlere Signallaufzeit im Übertragungsmedium ermittelt Hierzu wird folgende Formel herangezogen:

**Formel 5:**
$$T_{prop} = \frac{T_{roundA1} - T_{replyB1} + T_{roundB2} - T_{replyA2}}{4}$$

Aus der gemäß Formel (6) ermittelten mittleren Signallaufzeit $T_{prop}$ wird anhand einer bekannten Ausbreitungsgeschwindigkeit der Datenrahmen im Übertragungsmedium zwischen den Senderempfängern A und B der Abstand d wie folgt ermittelt:

**Formel 6:** $d = c T_{prop}$.

Bei der vorstehenden Beschreibung wurde angenommen, dass der Abstand zwischen den Senderempfängern A und B sich während der Messung nicht ändert. Dies ist in guter Näherung auch bei bewegten Senderempfängern eine gültige Annahme. Auch wird zur Vereinfachung der Darstellung von fehlerlosen Rundlaufzeitabständen $T_{round}$ und Antwortzeitabständen $T_{reply}$ ausgegangen. In der Praxis rechnet man natürlich mit fehlerbehafteten Werten und ermittelt das erfindungsgemäße Verfahren den Abstand trotz fehlerhafter Werte mit der oben erläuterten Genauigkeit Hier gemachte Angaben zur Genauigkeit basieren auf einer Fehleranalyse, die fehlerhafte Rundlauf- und Antwortzeitabstände berücksichtigt.

1.2 Genauigkeit der Abstandsbestimmung

Zum Zwecke der nachfolgenden Darstellung werden die in der oben stehenden Formel (2) verwendeten Symbole ohne Änderung ihrer Bedeutung in ihren Indizes vereinfacht. Die vereinfachte Formel (2') lautet mit gleicher Bedeutung wie Formel 2:

$$\text{Formel 6': } T_{prop} = \frac{T_{roundA} - T_{replyB} + T_{roundB} - T_{replyA}}{4}$$

Taktgeneratoren beider Senderempfänger A und B, die zur Messung der Rundlaufzeitabstände und Bestimmung der Antwortzeiten verwendet werden, weisen in aller Regel aufgrund von Realisierungsvarianten der Schaltungen, Temperatureinflüssen, Herstellungstoleranzen und Alterung Fehler auf.

Dadurch kommt es zu einer Abweichung der Taktfrequenz der Taktgeneratoren von ihrer Nominalfrequenz. Durch die Nominalfrequenzabweichungen an beiden Senderempfängern werden fehlerbehaftete Rundlaufzeitabstände ($T_{roundA}'$, $T_{roundB}'$) gemessen. Zusätzlich werden fehlerbehaftete Antwortzeiten ($T_{replayA}'$, $T_{replyB}'$) generiert. Daraus ergibt sich für die errechnete Impulslaufzeit bzw. die daraus berechnete Entfernung der relative Fehler $E_{tAB}$ gemäß der nachstehenden Formel 7:

$$\text{Formel 7: } T_{prop}(1 + E_{tAB}) = \frac{T_{roundA}' - T_{replyB}' + T_{roundB}' - T_{replyA}'}{4}$$

Die Nominalfrequenzabweichungen werden als relative Abweichungen bzw. Zeitfehler ($E_{tA}$ und $E_{tB}$) der gemessenen oder generierten Zeiten von den tatsächlichen Zeitabständen gemäß Formel 8 bis Formel 11 folgendermaßen dargestellt:

$$\text{Formel 8: } T_{roundA'} = T_{roundA}(1 + E_{tA})$$

$$\text{Formel 9: } T_{replyA'} = T_{replyA}(1 + E_{tA})$$

$$\text{Formel 10: } T_{roundB'} = T_{roundB}(1 + E_{tB})$$

$$\text{Formel 11: } T_{replyB'} = T_{replyB}(1 + E_{tB})$$

Der Fehler der Impulslaufzeit bzw. der Entfernung ($E_{tAB}$) wird wie folgt bestimmt:

$$\text{Formel 12: } E_{tAB} = \tfrac{1}{2} E_{tA} + \tfrac{1}{2} E_{tB} + \frac{T_{replyA} - T_{replyB}}{4T_{prop}}(E_{tB} - E_{tA})$$

Um die Einflüsse der Impulslaufzeit bzw. der Entfernung besser abschätzen zu können, wird von folgenden zwei Fällen der Nominalfrequenzabweichungen (Zeitfehler) ausgegangen.

a) Die relativen Zeitfehler sind beide gleich groß (EtA = EtB).

b) Die relativen Zeitfehler sind im Betrag gleich groß, allerdings mit unterschiedlichem Vorzeichen (EtA = - EtB).

Im Fall a) entspricht der relative Fehler der Entfernung dem arithmetischen Mittel der relativen Zeitfehler gemäß der nachstehenden Formel 13:

$$\text{Formel 13:} \quad E_{tAB} = \tfrac{1}{2} E_{tA} + \tfrac{1}{2} E_{tB}$$

Letztere sind in der Praxis sehr klein. Beispielsweise weisen kommerziell übliche und sehr preiswerte Schwingquarze einen Fehler von weniger als ± 0,005 % über einen Temperaturbereich von - 40 bis 85 °C auf. Daher ergibt sich ein sehr kleiner Fehler der Entfernungsmessung. Die Präzision der Entfernungsmessung ist in diesem Fall außerdem unabhängig von den absoluten Rundlauf- und Antwortzeiten - die Zeitfehler wirken sich nur auf die Impulslaufzeit aus.

Im Fall b) ist der relative Fehler im wesentlichen abhängig vom Verhältnis der Antwortzeitdifferenz ($T_{replyA}$ - $T_{replyB}$) -zu der vierfachen Impulslaufzeit (siehe Formel 14).

$$\text{Formel 14:} \quad E_{tAB} = \frac{T_{replyA} - T_{replyB}}{4 T_{prop}} (2 E_{tA})$$

An dieser Stelle zeigt sich ein wesentlicher Vorteil der erfindungsgemäßen Verfahrensführung: Durch die erfindungsgemäße Einhaltung von sehr kleinen Antwortzeitdifferenzen wird die Präzision der Entfernungsmessung verbessert. Die Präzision der Entfernungsmessung ist im Fall identischer Antwortzeitabstände unabhängig von den absoluten Rundlauf- und Antwortzeitabständen. Der Idealfall identischer Zeitabstände wird durch die Einhaltung einer maximalen Differenz der Antwortzeitabstände von maximal 20 Mikrosekunden hinreichend genau angenähert. Während die obere Grenze von 20 Mikrosekunden das derzeit bevorzugte Ausführungsbeispiel darstellt, ist darauf hinzuweisen, dass mit dem erfindungsgemäßen Verfahren auch bei Einhaltung einer Differenz der Antwortzeitabstände von maximal 200 Mikrosekunden noch eine für viele Anwendungsfälle hinreichend genaue Entfernungsmessung durchgeführt werden kann.

Zur Verdeutlichung der Gültigkeit dieser Feststellungen wurde anhand eines Beispielsystems der Einfluss der Antwortzeitdifferenzen auf die Präzision der Entfernungsmessung an Hand von konkreten Zahlenwerten für unterschiedliche Entfernungen ($d_{AB}$) und unterschiedliche Antwortzeitdifferenzen ($\Delta T_{reply}$ = $T_{replyA}$ - $T_{replyB}$) berechnet. Es wurden bei einer Gruppe von Konstellationen mit verschiedenen Paaren von relativen Zeitfehlerwerten ($E_{tA}$, $E_{tB}$), die im Intervall $E_{tA}$ = -50..0..50 ppm und $E_{tB}$ = -50..0..50 ppm liegen, die Fehler der Entfernungsmessung anhand von formel 15 berechnet. Anschließend wurde das Paar mit dem jeweils größten Fehler der Entfernungsmessung $\Delta_{dAB}$ ermittelt Diese jeweils maximalen Fehler der Entfernungsmessung $\Delta_{dAB}$ sind in der nachfolgenden Tabelle in Abhängigkeit vom Abstand zwischen dem ersten und zweiten Senderempfänger sowie von der Differenz der Antwortzeitabstände $\Delta T_{reply}$ dargestellt.

| $d_{AB}$ | $\Delta T_{reply}$ = 20 ns | $\Delta T_{reply}$ = 200 ns | $\Delta T_{reply}$ = 2 μs | $\Delta T_{reply}$ = 20 μs | $\Delta T_{reply}$ = 200 μs |
|---|---|---|---|---|---|
| 10 cm | ± 0.015 cm | ± 0.15 cm | ± 1.5 cm | ± 15 cm | ± 150 cm |
| 1 m | ± 0.015 cm | ± 0.15 cm | ± 1.5 cm | ± 15 cm | ± 150 cm |
| 10 m | ± 0.05 cm | ± 0.15 cm | ± 1.5 cm | ± 15 cm | ± 150 cm |
| 100 m | ± 0.5 cm | ± 0.5 cm | ± 1.5 cm | ± 15 cm | ± 150 cm |
| 1 km | ± 5 cm | ± 5 cm | ± 5 cm | ± 15 cm | ± 150 cm |
| 10 km | ± 50 cm | ± 50 cm | ± 50 cm | ± 50 cm | ± 150 cm |

Die vorstehende Tabelle zeigt, dass das erfindungsgemäße Verfahren bis zur Differenz der Antwortzeitabstände $\Delta T_{reply}$ von 20 μs und einem Abstand zwischen den Senderempfängern A und B von 10 km eine erstaunlich genaue Abstandsbestimmung mit einem durch Quarztoleranzen verursachten Fehler von nur ± 50 cm ermöglicht. Jedoch wird auch bei einer Differenz der Antwortzeitabstände $\Delta T_{reply}$ von 200 μs und einem Abstand zwischen den Senderempfängern A und B von 10 km oder weniger eine für viele Anwendungsfälle ausreichende Genauigkeit erzielt. Die Genauigkeit von ± 150 cm reicht beispielsweise in der Regel aus festzustellen, in welchem Raum eines Gebäudes sich eine Person befindet. Wenn beispielsweise Protokollvorschriften die Einhaltung der bevorzugten Differenz der Antwortzeitabstände von 20 Mikrosekunden erschweren, können zur Erhöhung der Genauigkeit der Entfernungsmessung auch Taktgeneratoren mit engeren Toleranzen verwendet werden, bei denen die relativen Zeitfehlerwerte ($E_{tA}$, $E_{tB}$) beispielsweise im Intervall $E_{tA}$ = -20..0..20 ppm und $E_{tB}$ = -20..0..20 ppm liegen. Derartige Taktgeneratoren sind jedoch in Anbetracht der Gesamtkosten eines Senderempfängersystems kaum teurer.

2. n-Wege-Verfahren

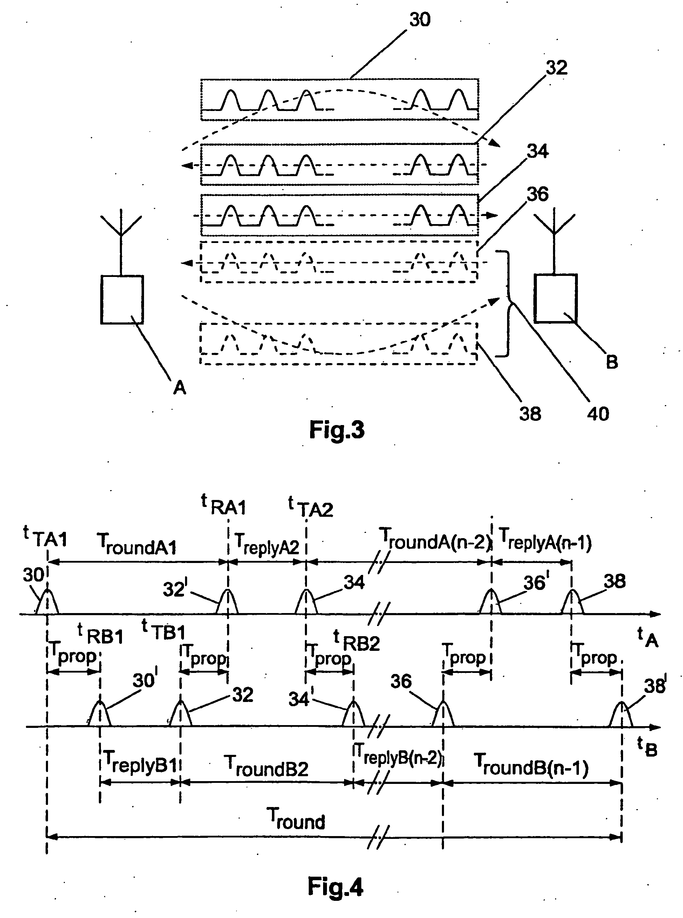

Nachfolgend wird anhand der Figuren 3 und 4 als zweites Ausführungsbeispiel eine Verallgemeinerung des oben beschriebenen 3-Wege-Verfahrens beschrieben. Bei dem hier beschriebenen n-Wege-Verfahren wird der Abstand zwischen zwei Senderempfängern von einer ungeraden Anzahl n Datenrahmen durchlaufen.
Zunächst wird der Ablauf des Verfahrens geschildert. Anschließend wird die Genauigkeit dieses n-Wege-Verfahrens mathematisch abgeleitet.

2.1 Signalrundläufe im n-Wege-Verfahren

Das n-Wege-Verfahren stellt im wesentlichen eine Verallgemeinerung des unter 1. beschriebenen 3-Wege-Verfahrens dar.
Ein Datenrahmen 30 wird von einem ersten Senderempfänger A ausgesendet und von einem zweiten Senderempfänger B empfangen. Dieser Datenrahmen wird dort geprüft und nach erfolgreichem Abschluss der Prüfung mit einem Antwortzeitabstand ein zweiter Datenrahmen 32 zum ersten Senderempfänger A gesendet.
Der erste Senderempfänger A prüft den zweiten Datenrahmen 32 und sendet einen dritten Datenrahmen, ebenfalls mit einer Verzögerung eines Antwortzeitabstandes zum zweiten Senderempfänger B. Auf diese Folge von Datenrahmen können beliebig viele Datenrahmenpaare übertragen werden. Exemplarisch sind in Figur 3 die Datenrahmen 34, 36, und 38 dargestellt. Dabei werden insgesamt n Datenrahmen übertragen. Die Datenrahmen 36 und 38 sind n Fig. 3 durch eine geschweifte Klammer als Datenrahmenpaar 40 zusammengefasst und gestrichelt gezeichnet, um zu symbolisieren, dass eine mehrfache Wiederholung der Aussendung solcher Datenrahmenpaare im Rahmen des vorliegenden Ausführungsbeispiels stattfinden kann. Die Antwortzeitabstände $T_{replyAk}$, k= 2,4,6,8,...(n-1) von $T_{replyA2}$ bis $T_{replyA(n-1)}$, und $T_{replyBi}$, i = 1,3,5,7,..,(n-2) von $T_{replyB1}$ bis $T_{replyB(n-2)}$ weisen eine mittlere Differenz gemäß der Formel

$$\Delta T_{\mathrm{ReplyAVG}} = \frac{T_{replyA2} - T_{replyB1} + .. + T_{replyA(n-1)} - T_{replyB(n-2)}}{\frac{n-1}{2}}$$

auf, deren Betrag maximal 20 Mikrosekunden ist. In einer Variante dieses Verfahrens sind zusätzlich die Antwortzeitabstände $T_{replyA2}$ und $T_{replyB1}$ entweder identisch oder eine weisen Differenz auf, deren Betrag maximal 20 Mikrosekunden ist.
Aus der Messung der Rundlaufzeit dieser Nachrichtenfolge wird ähnlich dem 3-Wege-Verfahren die gesamte Impulslaufzeit im Übertragungsmedium ermittelt
Figur 4 zeigt in analoger Darstellung zu Figur 2 den zeitlichen Ablauf des Verfahrens wiederum unter Darstellung nur eines Impulses für jeden Datenrahmen.
Die Berechnung der des arithmetischen Mittelwertes der Signallaufzeit $T_{prop}$ erfolgt anhand der nachstehenden Formel:

**Formel 15:**

$$T_{prop} = \frac{T_{roundA1} - T_{replyB1} + T_{roundB2} - T_{replyA2} + .. + T_{roundA(n-2)} - T_{replyB(n-2)} + T_{roundB(n-1)} - T_{replyA(n-1)}}{2(n-1)}$$

$$n = 2k + 1, k \in N > 1$$

Aus der Signallaufzeit $T_{prop}$ kann wiederum die Entfernung berechnet werden.
Da die Gesamtrundlaufzeit $T_{round}$ beim n-Wege-Verfahren ebenfalls nicht direkt gemessen wird, werden wieder die direkt gemessenen Teil-Rundlaufzeitabstände ($T_{roundA1}$, $T_{roundB2}$, .., $T_{roundA(n-2)}$, $T_{roundB(n-1)}$) verwendet. Die Antwortzeiten ($T_{replyA2}$, $T_{replyB1}$, ..., $T_{replyA(n-1)}$, $T_{replyB(n-2)}$) beider Senderempfänger müssen dabei bekannt sein.

2.2 Genauigkeit des n-Wege-Verfahrens

Wird die Summe der Differenzen der Antwortzeiten ($T_{replyA2}$, $T_{replyB1}$, ..., $T_{replyA(n-1)}$, $T_{replyB(n-2)}$) erfindungsgemäß sehr klein gehalten oder ist sie gleich Null ($T_{replyA2}$-$T_{replyB1}$+..+$T_{replyA(n-1)}$-$T_{reply(n-2)}$→0), wird durch dieses symmetrische n-Wege-Verfahren wie beim oben beschriebenen 3-Wege-Verfahren der Vorteil einer unerwartet hohen Genauigkeit der Entfernungsmessung erzielt. Dies wird nachfolgend näher erläutert.

Durch die oben unter 1.2 schon erläuterten relativen Zeitfehler auf Seiten der Senderempfänger A und B ergibt sich für die ermittelte Impulslaufzeit bzw. die daraus berechnete Entfernung der relative Fehler $E_{tAB}$ gemäß Formel 16:

**Formel 16:**

$$T_{prop}(1+E_{tAB}) = \frac{T_{roundA1}' - T_{replyB1}' + T_{roundB2}' - T_{replyA2}' + .. + T_{roundA(n-2)}' - T_{replyB(n-2)}' + T_{roundB(n-1)}' - T_{replyA(n-1)}'}{2(n-1)}$$

Bei Berücksichtigung der Fehler $E_{tA}$ und $E_{tB}$ gemäß Formel 17 bis Formel 20

$$\text{Formel 17:} \quad T_{roundAn}' = T_{roundAn}(1+E_{tA}), \quad n = 2k+1, \quad k \in N$$

$$\text{Formel 18:} \quad T_{replyAn}' = T_{replyAn}(1+E_{tA}), \quad n = 2k, \quad k \in N > 0$$

$$\text{Formel 19:} \quad T_{roundBn}' = T_{roundBn}(1+E_{tB}), \quad n = 2k, \quad k \in N > 0$$

$$\text{Formel 20:} \quad T_{replyBn}' = T_{replyBn}(1+E_{tB}), \quad n = 2k+1, \quad k \in N$$

kann der Fehler der Signallaufzeit bzw. der Entfernung bestimmt werden:

**Formel 21:**

$$E_{tAB} = \tfrac{1}{2} E_{tA} + \tfrac{1}{2} E_{tB} + \frac{T_{replyA2} - T_{replyB1} + .. + T_{replyA(n-1)} - T_{replyB(n-2)}}{2(n-1)T_{prop}} (E_{tB} - E_{tA})$$

Die Summe der Antwortzeitdifferenzen

$$\left( T_{replyA2} - T_{replyB1} + .. + T_{replyA(n-1)} - T_{reply(n-2)} = \sum \Delta T_{reply} \right)$$

ergibt geteilt durch deren Anzahl ($\frac{n-1}{2}$) einen Mittelwert $\Delta T_{replyAVG}$ für die Antwortzeiten gemäß der nachstehenden Formel 22:

$$\text{Formel 22:} \quad \frac{\sum \Delta T_{reply}}{\frac{n-1}{2}} = \Delta T_{replyAVG}$$

Dadurch lässt sich der Fehler der Signallaufzeit folgendermaßen vereinfacht darstellen (Formel 23):

$$\text{Formel 23:} \quad E_{tAB} = \tfrac{1}{2} E_{tA} + \tfrac{1}{2} E_{tB} + \frac{\Delta T_{replyAVG}}{4 T_{prop}} (E_{tB} - E_{tA})$$

Zur Abschätzung der Fehlereigenschaften werden wieder zwei Fälle der Zeitfehler betrachtet. Identisch zum 3-Wege-Verfahren entspricht der relative Fehler der Entfernung dem arithmetischen Mittel der relativen Fehler $E_{tA}$ und $E_{tB}$ (siehe Formel 13), falls beide Fehler gleich groß sind ($E_{tA} = E_{tB}$). Ähnlich zum 3-Wege-Verfahren ist bei betragsgleichen Fehlern mit unterschiedlichen Vorzeichen ($E_{tA} = - E_{tB}$) der Fehler im wesentlichen abhängig vom Verhältnis des Mittelwertes der Antwortzeitdifferenzen zu der vierfachen Signallaufzeit gemäß Formel 24:

$$\text{Formel 24:} \qquad E_{tAB} = \frac{\Delta T_{replyAVG}}{4T_{prop}}(E_{tB} - E_{tA})$$

Die Präzision der Entfernungsmessung ist beim n-Wege-Verfahren verglichen mit dem 3-Wege-Verfahren ebenfalls unabhängig von den absoluten Rundlauf- und Antwortzeitabständen. Der Fehler wird mit zunehmender Entfernung kleiner.

In praktischen Realisierungen von Senderempfängern können die Antwortzeitdifferenzen, wie bereits erwähnt, sehr klein gehalten, aber bedingt durch Abtastfehler der digitalen Systemkomponenten oft nicht vermieden werden. Werden jedoch die Antwortzeiten bei einer n-Wege-Messung gleichmäßig variiert bzw. gestreut, wird der Mittelwert der Antwortzeitdifferenzen sehr klein ($\Delta_{TreplyAVG} \to 0$), da auch negative Differenzen auftreten können. Dies wird in praktischen Realisierungen dadurch angenähert, dass die Abtastfehler zufällig auftreten. Tendenziell ist der Mittelwert der Differenzen der Antwortzeitabstände wesentlich kleiner als die Differenz Antwortzeitabstände beim 3-Wege-Verfahren:

$$\Delta T_{replyAVG} < \left| T_{replyA} - T_{replyB} \right|.$$

(vergleiche Formel und Formel 23). Damit fällt der relative Fehler der Entfernung kleiner aus als beim 3-Wege-Verfahren, und das n-Wege-Verfahren erweist sich somit als ebenfalls genau für die Entfernungsmessung.

3. Doppelseitiges Zwei-Wege-Verfahren

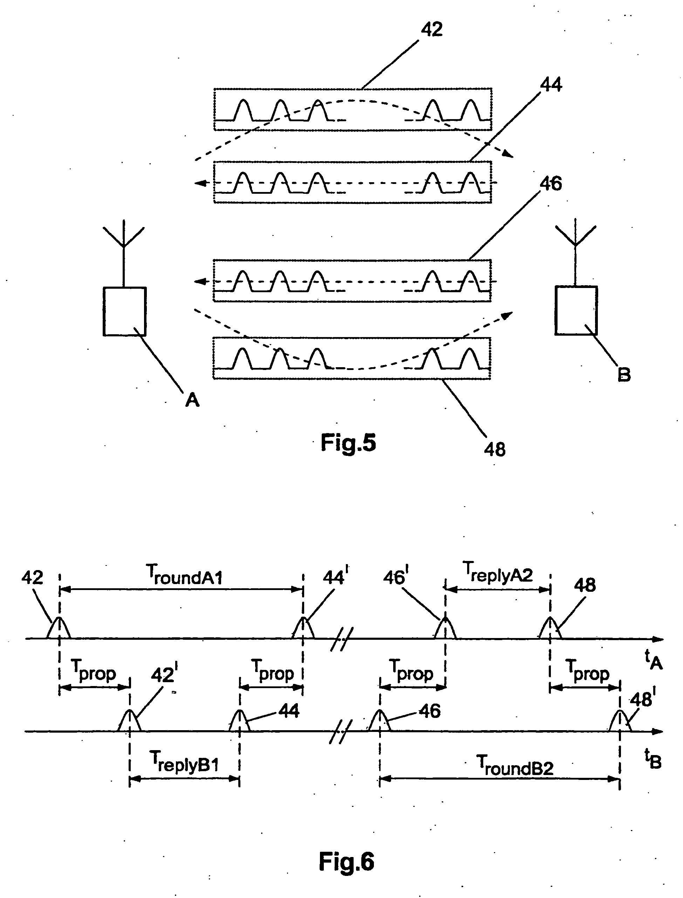

Anhand der Figuren 5 und 6 wird nachfolgend als drittes Ausführungsbeispiel des erfindungsgemäßen Verfahrens zur Abstandsbestimmung ein doppelseitiges Zwei-Wege-Verfahren beschrieben.

3.1 Signalrundläufe beim doppelseitigen Zwei-Wege-Verfahren

Zur Durchführung eines ersten Signalrundlaufs wird ein erster Datenrahmen 42 von einem ersten Senderempfänger A ausgesendet und von einem zweiten Senderempfänger B in Form eines empfangenen Datenrahmens 42' empfangen.

Dieser empfangene Datenrahmen 42' wird auf Seiten des Senderempfängers 42 geprüft und bei Erfolg mit einem Antwortzeitabstand zum Empfang des ersten Datenrahmens 42' ein erster Folgedatenrahmen in Form eines zweiten Datenrahmens 44 zum ersten Senderempfänger A gesendet. Der Empfang des zweiten Datenrahmens 44 beim ersten Senderempfänger A in Form eines Empfangssignals 44' schließt den ersten Signalrundlauf ab.

Zur Durchführung eines zweiten Signalrundlaufs sendet der zweite Sendeempfänger B einen dritten Datenrahmen 46 an den ersten Senderempfänger A, der wiederum den empfangenen dritten Datenrahmen 46' prüft und einen zweiten Folgedatenrahmen in Form eines vierten Datenrahmens 48 mit einem Antwortzeitabstand zum Empfang des dritten Datenrahmens 46' zum zweiten Sendeempfänger (B) sendet. Der Empfang des ausgesendeten vierten Datenrahmens 48 beim zweiten Senderempfänger B in Form eines Empfangssignals 48' schließt den zweiten Signalrundlauf ab.

Das Verfahren wird so durchgeführt, dass die Antwortzeitabstände $T_{replyA2}$ und $T_{replyB1}$ auf Seiten des ersten und zweiten Senderempfängers entweder identisch sind oder eine Differenz aufweisen, deren Betrag maximal 20 Mikrosekunden ist.

Dieser von beiden Senderempfängern je einmal gestartete Zwei-Wege-Nachrichtenaustausch zur Abstandsbestimmung in zwei unterschiedlichen Signalrundläufen wird als doppelseitiges Zwei-Wege-Verfahren bezeichnet. Dabei können die beiden Signalrundläufe im selben Übertragungskanal nacheinander ausgeführt werden, oder der Austausch kann bei Verwendung von zwei getrennten Nachrichtenkanälen zeitgleich oder zeitlich überlappend erfolgen.

Aus den Messungen der Rundlaufzeitabstände der Nachrichtenfolgen werden nach Abzug der bekannten Antwortzeiten die Impulslaufzeiten im Übertragungsmedium ermittelt.

Die jeweiligen Impulslaufzeiten werden folgendermaßen berechnet (siehe Formel 25 und Formel 26):

$$\text{Formel 25:} \quad T_{propA} = \frac{T_{roundA1} - T_{replyB1}}{2}$$

$$\text{Formel 26:} \quad T_{propB} = \frac{T_{roundB2} - T_{replyA2}}{2}$$

Die berechneten Impulslaufzeiten ($T_{propA}$, $T_{propB}$) werden anschließend gemittelt (siehe Formel 27) und aus der gemittelten Impulslaufzeit wird dann die Entfernung berechnet.

$$\text{Formel 27:} \quad T_{prop} = \frac{T_{propA} + T_{propB}}{2}$$

Die Berechnung kann durch Einsetzten von Formel 25 und Formel 26 in Formel 27 folgendermaßen zusammengefasst werden (siehe Formel 28).

$$\text{Formel 28:} \quad T_{prop} = \frac{T_{roundA} - T_{replyB} + T_{roundB} - T_{replyA}}{4}$$

Die Berechnung gemäß dieser Formel 28 ist somit identisch zum 3-Wege-Verfahren. In gleicher Weise wie dort lässt sich aus der Impulslaufzeit der räumliche Abstand der beiden Senderempfänger A und B berechnen.

3.2 Genauigkeit des doppelseitigen Zwei-Wege-Verfahrens

Da die Berechnung der Impulslaufzeit des doppelseitigen Zwei-Wege-Verfahrens identisch zum 3-Wege-Verfahren ist (vergleiche Formel 28), und die Berücksichtigung der Fehler in gleicher Weise wie beim 3-Wege-Verfahren erfolgen kann (Formel 8 bis Formel 11), ergibt sich für den relativen Fehler der Impulslaufzeit bzw. Entfernung die gleiche Funktion wie beim 3-Wege-Verfahren (siehe Formel 12). Damit ist das doppelseitige Zwei-Wege-Verfahren als Alternative des 3-Wege-Verfahrens mit identischen Fehlereigenschaften einsetzbar, was das wesentliche Merkmal dieses Verfahrens darstellt

4. Mehrfach-doppelseitiges-Zwei-Wege-Verfahren

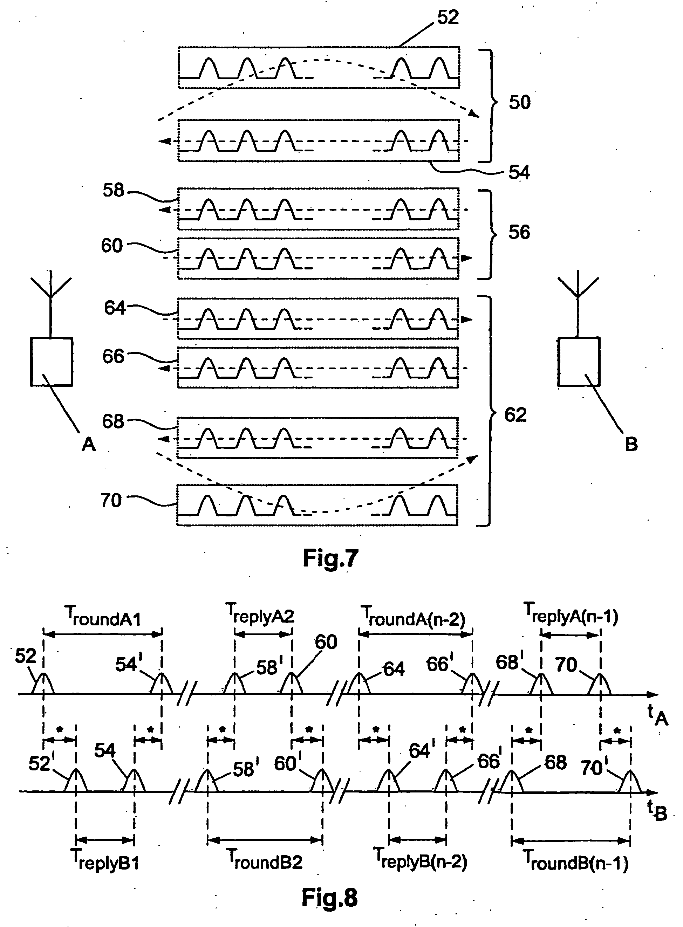

Nachfolgend wird anhand der Figuren 7 und 8 ein viertes Ausführungsbeispiel des erfindungsgemäßen Verfahrens beschrieben, bei dem durch Wiederholung von Signalrundlaufpaaren und ein Mehrfach-doppelseitiges-Zwei-Wege-Verfahren durchgeführt wird.

4.1 Signalrundläufe

Zu Beginn eines ersten Signalrundlaufs 50 wird ein erster Datenrahmen 52 von einem ersten Senderempfänger A ausgesendet und von einem zweiten Senderempfänger B empfangen. Dieser empfangene Datenrahmen 52' wird dort geprüft und bei Erfolg ein Folgedatenrahmen in Form eines zweiten Datenrahmens 54 mit einem Antwortzeitabstand $T_{replyB1}$ zum Empfang des ersten Datenrahmens 52' zum ersten Senderempfänger A gesendet. Der Empfang des zweiten Datenrahmens 54 beim ersten Senderempfänger A beendet den ersten Signalrundlauf 50.
Zu Beginn eines zweiten Signalrundlaufs 56 sendet der zweite Senderempfänger B einen dritten Datenrahmen 58 zum ersten Senderempfänger A. Dieser empfangene Datenrahmen 58' wird dort geprüft und bei Erfolg ein Folgedatenrahmen in Form eines vierten Datenrahmens 60 mit einem Antwortzeitabstand $T_{replyA2}$ zum Empfang des dritten Datenrahmens 58' zum zweiten Senderempfänger B gesendet. Der Empfang des vierten Datenrahmens 60 beim zweiten Senderempfänger B beendet den zweiten Signalrundlauf 56.
Der bis hierher beschriebene doppelseitige Zwei-Wege-Nachrichtenaustausch wird insgesamt n-1-fach ausgeführt. Das Verfahren wird so durchgeführt, dass die Antwortzeitabstände $T_{replyAk}$, k= 2,4,6,8.,,(n-1) von $T_{replyA2}$ bis $T_{replyA(n-1)}$, und $T_{replyBi}$, i = 1,3,5,7..,(n-2) von $T_{replyB1}$ bis $T_{replyB(n-2)}$ auftreten, die eine mittlere Differenz gemäß der Formel

$$\Delta T_{ReplyAVG} = \frac{T_{replyA2} - T_{replyB1} + .. + T_{replyA(n-1)} - T_{replyB(n-2)}}{\frac{n-1}{2}}$$

aufweisen.

Die Signalrundläufe können nacheinander im selben Übertragungskanal stattfinden. Alternativ können bei Verwendung von zwei oder mehreren getrennten Nachrichtenkanälen zwei oder mehr Signalrundläufe zeitgleich oder zeitlich überlappend durchgeführt werden. Bei der sequentiellen Variante ist die Richtung der Zwei-Wege-Nachrichtenfolgen nicht an eine bestimmte Reihenfolge gebunden. Die einzelnen Nachrichtenfolgen sind voneinander unabhängig.

Aus den jeweiligen gemessenen Rundlaufzeitabständen und den bekannten Antwortzeitabständen werden die Impulslaufzeiten von beiden Seiten (siehe Formel 29 und Formel 30) berechnet.

Formel 29: $\qquad T_{propAx} = \dfrac{T_{roundAx} - T_{replyBx}}{2}, \quad x = 2k+1, \quad x < n, \quad k \in N$

Formel 30: $\qquad T_{propBy} = \dfrac{T_{roundBy} - T_{replyAy}}{2}, \quad y = 2k, \quad x < n, \quad k \in N > 0$

Die Impulslaufzeiten ($T_{propAx}$, $T_{propBy}$) werden anschließend gemittelt (siehe Formel 31) und aus der gemittelten Impulslaufzeit wird dann die Entfernung berechnet.

Formel 31: $\qquad T_{prop} = \dfrac{T_{propA1} + T_{propB2} + .. + T_{propA(n-2)} + T_{propB(n-1)}}{(n-1)}$

Die Berechnung kann durch Einsetzen von Formel 29 und Formel 30 in Formel 31 folgendermaßen zusammengefasst werden (siehe Formel 32).

Formel 32:

$$T_{prop} = \frac{T_{roundA1} - T_{replyB1} + T_{roundB2} - T_{replyA2} + .. + T_{roundA(n-2)} - T_{replyB(n-2)} + T_{roundB(n-1)} - T_{replyA(n-1)}}{2(n-1)}$$

$$n = 2k+1, k \in N > 1$$

Die Berechnung ist somit identisch zum oben beschriebenen n-Wege-Verfahren, dessen einer Spezialfall das oben beschriebene 3-Wege-Verfahren ist

Da die Summe der Differenzen der Antwortzeiten ($T_{replyA2}$, $T_{replyB1}$, ..., $T_{replyA(n-1)}$, $T_{replyB(n-2)}$) gemäß der Erfindung bei der Verfahrensführung sehr klein gehalten wird bzw. völlig verschwindet ($T_{replyA2} - T_{replyB1} + .. + T_{replyA(n-1)} - T_{reply(n-2)} \to 0$) kann man von einem symmetrisch mehrfach doppelseitigen Zwei-Wege-Verfahren sprechen.

4.2 Genauigkeit des Mehrfach-doppelseitigen Zwei-Wege-Verfahrens

Da auch hier die Berechnung der Impulslaufzeit des mehrfach-doppelseitigen Zwei-Wege-Verfahrens identisch zum n-Wege-Verfahren ist (vergleiche Formel 32 und Formel 15), und die Berücksichtigung der Fehler in gleicher Weise wie beim n-Wege-Verfahren erfolgen kann (Formel 17 bis Formel 20), ergibt sich für den relativen Fehler der Impulslaufzeit bzw. Entfernung die gleiche Funktion wie beim n-Wege-Verfahren (siehe Formel 22). Damit ist das mehrfach-doppelseitige Zwei-Wege-Verfahren als Ersatz des n-Wege-Verfahrens mit identischen Fehlereigenschaften einsetzbar, was das wesentliche Merkmal dieses Verfahrens darstellt.

5. Dithering und Avering

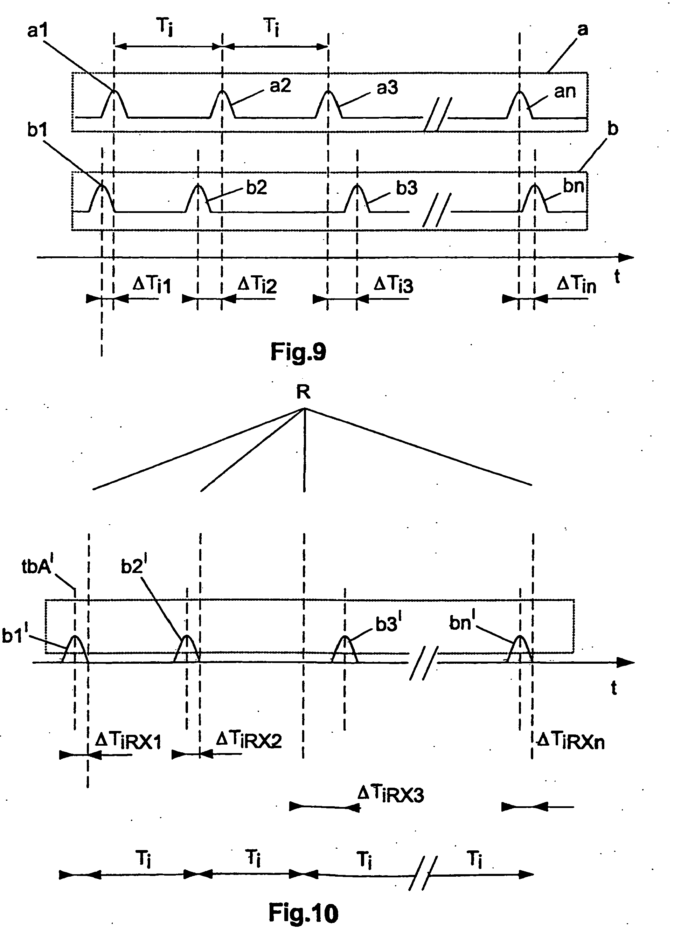

Nachfolgend wird als fünftes Ausführungsbeispiel des erfindungsgemäßen Verfahrens anhand der Figuren 9 bis 13 eine auf alle vorstehend beschriebenen Ausführungsbeispiele anwendbare Methode beschrieben, mit der die Genauigkeit der Abstandsbestimmung weiter erhöht werden kann.

Die Kapazität C eines Übertragungskanals, also die Informationsmenge, die in einer bestimmten Zeit übertragen werden kann, wird durch das Shannon'sche Theorem der Kanalkapazität bestimmt (siehe Formel 33).

$$\text{Formel 33: } C = B \log_2(1 + SNR)$$

Dabei bezeichnet B die Bandbreite des Kanals und SNR das Signal-zu-Rausch-Verhältnis. Dadurch kann in einer bestimmten Zeit $T$ die Informationsmenge $I$ übertragen (siehe Formel 34) werden.

$$\text{Formel 34: } I = BT \log_2(1 + SNR)$$

Die Genauigkeit eines Wertes einer Größe, der als Information übertragen wird, ist proportional zur Informationsmenge, die zur Übertragung des Wertes zur Verfügung steht, beispielsweise in Form verfügbarer Nachkommastellen. Da die zur Verfügung stehende Bandbreite B und Ausgangsleistung, die das Signal-zu-Rausch-Verhältnis SNR bestimmt, aus verschiedenen Gründen wie beispielsweise aufgrund gesetzlicher Regulierungen begrenzt sind, lässt sich die Informationsmenge nur dadurch erhöhen, dass die Zeitdauer der Übertragung T erhöht wird, vgl. Formel 34. Daher ist es naheliegend, zur genauen Ermittlung der Ankunftszeit (ToA = Time of Arrival) eines Datenrahmens die Ankunftszeiten so vieler Impulse wie möglich zu Grunde zu legen und damit die Informationsmenge zu erhöhen.

Mit Bezug auf Fig. 9 besteht ein zu sendender Datenrahmen a aus einer Sequenz von Impulsen a1, a2, a3 bis an mit bekannter Impulsfrequenz, die sich in einer bekannten Impulsperiode $T_i$ widerspiegelt.

Beim dem im vorliegenden Ausführungsbeispiel durchgeführten Dithering sind die Impulsperioden jedoch nicht konstant. Einzel-Impulse b1 bis bn eines nach dem Dithering-Verfahren übertragenen Datenrahmens b weisen jeweils eine zeitliche Abweichung $\Delta T_{ij}$ auf, j=1, 2, ..., n,.

Im Idealfall sind die Abweichungen $\Delta T_{ij}$ völlig gleichmäßig verteilt, und die Summe der Abweichungen ist gleich Null:

$$\text{Formel 35: } \Delta T_{i1} + \Delta T_{i2} + \Delta T_{i3} + .. + \Delta T_{in} \rightarrow 0$$

Nachfolgend wird anhand von Fig. 10 ein in Kombination mit dem Dithering durchgeführtes Averaging beschrieben. Beim Averaging werden Differenzen der Ankunftszeiten $\Delta T_{iRXi}$ einzelner empfangener Impulse b1', b2' bis bn' relativ zu den jeweils nächstliegenden Rasterpunkten eines festgelegten Zeitrasters R gemessen. Das Raster R entspricht der Impulsperiode $T_i$ und besitzt dabei einen festen Bezug (synchron) zum Zeitraster (Taktgenerator) der Empfangseinrichtung eines Senderempfängers.

Dabei wird dem Raster ein beliebiger detektierter Impuls des Datenrahmens als Referenzpunkt (tToA') zugeordnet, und das Raster wird einmal pro Datenrahmen so genau wie möglich auf die Impulssequenz justiert. Die erzielbare Genauigkeit der Justierung ist abhängig vom Zeitraster/Taktgenerator der Empfangseinrichtung.

Da die Abweichungen im Rahmen des Ditherings sehr viel kleiner als die Impulsperiode $T_i$ dimensioniert sind, wird eine eineindeutige Zuordnung der Rasterpunkte zu den detektierten Impulsen gewährleistet. Die Messungen der Abweichungen ($\Delta T_{iRXi}$) werden akkumuliert und anschließend arithmetisch gemittelt siehe Formel 36). Da beim Dithering die Summe aller Abweichungen im Idealfall Null ergibt entspricht der Mittelwert $\Delta T_{iRXAVG}$ der Differenz der genauen Ankunftszeit des Datenrahmens ($t_{ToA}$) zu dem Referenzpunkt ($t_{ToA}'$).

$$\text{Formel 36: } \Delta T_{iRXAVG} = \frac{\Delta T_{iRX1} + \Delta T_{iRX2} + .. + \Delta T_{iRXn}}{n}$$

$$\text{Formel 37: } t_{ToA} = t_{ToA}' - \Delta T_{iRXAVG}$$

Die im folgenden beschriebenen zusätzlichen Verfahrensmerkmale sind besonders geeignet bei der Verwendung eines Dithering- und Averaging-Verfahrens in Verbindung mit dem Verfahren der Erfindung:

a) Da die sendeseitig eingefügten Abweichungen die zur Verfügung bestehende Impulsdauer bestimmt und nur wenig Verlust von Bandbreite mit diesem Verfahren einhergehen soll, betragen die Abweichungen sendersettig nur einen kleinen Bruchteil der Impulsperiode.

b) Das Dithering kann beim Senden, beim Empfangen oder bei beiden Prozessen gleichzeitig eingefügt werden. Letztere Variante trägt insbesondere zur einfachen Verbesserung der Gleichverteilung des Ditherings bei. Dabei ist gleichverteiltes Rauschen der Übertragungsstrecke sowie der Sender- und Empfängerschaltung dem Verfahren förderlich, da es die Gleichverteilung des Ditherings verbessert.

c) Die Differenz aus größter positiver und negativer Abweichung muss größer also die Messauflösung auf der Empfängerseite sein, um eine Verteilung über mindestens zwei unterschiedliche Quantisierungsstufen (Messauflösung) zu erreichen. Die effizienteste Lösung ist daher ein Dithering, bei dem die Differenz der Abweichungen größer ist als die Messauflösung $T_r$ auf der Empfängerseite (siehe Formel 38), aber wesentlich kleiner als die Impulsperiode $T_i$.

$$\text{Formel 38:}\ T_r < \Delta T_{i\,max} - \Delta T_{i\,min} << T_i$$

d) Des weiteren können alle Impulse oder nur ein Teil der Impulse eines Datenrahmens dem Dithering unterworfen werden.

5.2 Senderempfänger mit Dithering/Averaging

In praktischen Ausführungsvarianten von Senderempfängern ist das Dithering bereits inhärent. Aus verschiedenen Gründen, die Vorteile für die Realisierung erbringen, werden digitale Module miteinander verschaltet, die mit unterschiedlichen Taktfrequenzen betrieben werden. Niedrige Taktfrequenzen sind zum Beispiel dort sinnvoll, wo das zeitliche Verhalten mit diesen Taktfrequenzen ausreichend ist, aber den Vorteil des geringen Stromverbrauchs erbringen. Hohe Taktfrequenzen werden dort eingesetzt, wo ein schnelles zeitliches Verhalten der Schaltung erforderlich ist. In der Regel kommen die niedrigeren Taktfrequenzen zum Einsatz, um die Verarbeitung der Daten der Nachrichtenrahmen (Kodierung, Dekodierung) durchzuführen. Diese Taktfrequenzen betragen nur ein kleines vielfaches der Datenrate bzw. der Impulsfrequenz. Für die Synthese und die Detektierung der einzelnen Impulse (Nachrichtensymbole) kommen Taktfrequenzen zum Einsatz, die dem mehrfachen der Bandbreite des Impulses im Basisband oder auf einer Zwischenfrequenz entsprechen müssen, um die gewünschten Eigenschaften der Schaltungen zu ereichen. Werden die Takte aus verschiedenen Quellen abgeleitet, sind die verschiedenen Taktfrequenzen nicht synchronisiert. Die Frequenzen können zudem so dimensioniert werden, dass das kleinste gemeinsame Vielfache gegen unendlich geht. Am Übergang eines Signals von einer Taktdomäne in die andere entsteht dadurch ein Abtastfehler, der eine zufällige Verteilung aufweist. Diese zufälligen Abweichungen erzeugen ein "Jittern" bzw. "Dithern" der gesendeten Impulse und wird allgemein als unerwünschter Effekt betrachtet.

Für die Realisierung eines Ausführungsbeispiels eines erfindungsgemäßen Senderempfängers und einer erfindungsgemäßen Anordnung zur Abstandsbestimmung gereicht jedoch dieser Effekt zum besonderen Vorteil, weil er ohne weitere Maßnahmen das Dithering der Impulse in der Sende- als auch in der Empfangseinrichtung von Senderempfängem realisiert.

Weitere Schaltungsmaßnahmen zur Implementierung des Ditherings sind nicht notwendig, können aber im Rahmen dieser Erfindung zusätzlich realisiert werden.

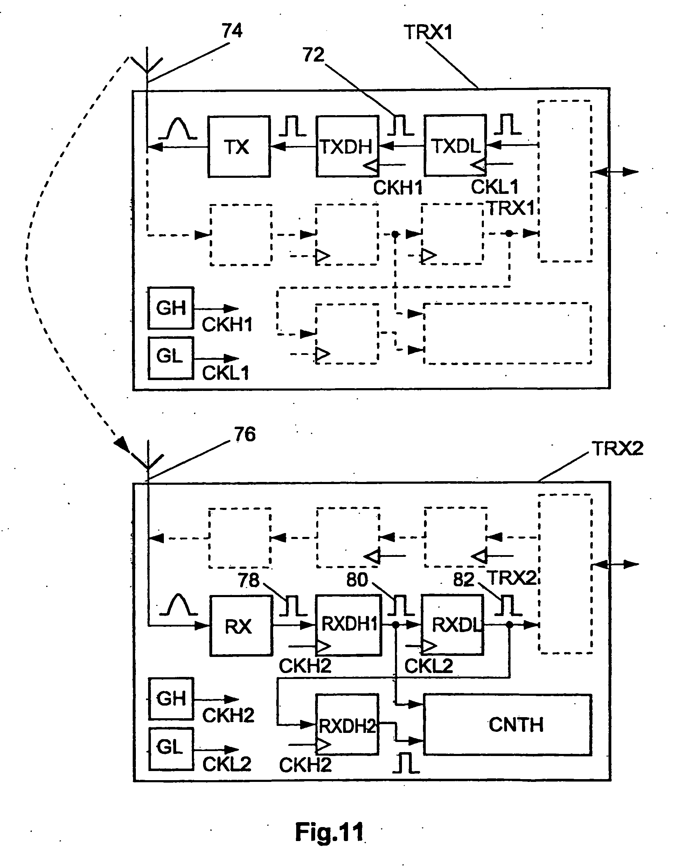

Fig. 11 zeigt ein Beispiel einer Implementierung einer Anordnung von zwei Senderempfängern mit inhärentem Dithering und veranschaulicht die Übertragung eines Nachrichtenrahmens in eine Richtung.

Ein Senderempfänger TRX1 als Sender und der Senderempfänger TRX2 als Empfänger fungieren. Im Senderempfänger TRX1 wird ein Rahmen generiert, also kodiert, und die zu sendenden Signalimpulse (nachfolgend auch kurz als Impulse bezeichnet) werden mit einer Impulsfrequenz von einem Modul TXDL erzeugt und ausgesendet. Ein zu sendender Impuls 72 wird von einem Modul TXDH abgetastet und als digitales Basisbandsignal synthetisiert

Durch ein Modul TX wird das Basisbandsignal in ein analoges Signal umgewandelt, verstärkt und anschließend über eine Antenne 74 abgestrahlt Dabei basiert die Impulsfrequenz auf einer Zeitbasis, die ein Modul GL verwendet. Das Modul GL leitet ein daraus resultierendes Taktsignal CKL1 an das Modul TXDL.

Das Modul TXDH wird jedoch mit einem Taktsignal CKH1 versorgt, das in einem Modul GH erzeugt wird und das auf einer unabhängigen und gegenüber dem Modul GL unsynchronisierten Zeitbasis basiert Dadurch entsteht ein systematischer Abtastfehler, der im statistischen Mittel der Hälfte der Periode von CKH1 entspricht.

Empfangsbezogene Module des Senderempfängers TRX1 sind gestrichelt gezeichnet und werden nicht näher erläutert. Ihre Funktion ergibt sich aus der nachfolgenden Beschreibung der empfangsbezogenen Module eines zweiten Senderempfängers TRX2.

Im zweiten Senderempfänger TRX2 wird ein über dessen Antenne 76 eingestrahlter Impuls in einem Modul RX verstärkt und zu einem Basisbandsignal 78 digitalisiert. In einem Modul RXDH1 wird das Basisbandsignal 78 mit einem Takt CKH2 abgetastet, und es erfolgt die Detektierung eines Impulses, z.B. durch digitale Korrelation.

Durch die digitale Abtastung im Modul RXDH1 entsteht ein weiterer systematischer Abtastfehler, der im statistischen Mittel der Hälfte der Periode des Taktsignals CKH2 entspricht. Durch Abtastung eines detektierten Impulses 80 durch ein Modul RXDL mit einem Takt CKL2 entsteht wiederum ein Abtastfehler, der jedoch bedingt durch eine niedrige Taktfrequenz an CKL2 vermessen wird. Dazu wird erneut ein von einem dem Modul RXDH1 nachgeschalteten Modul RXDL abgetasteter Impuls 82 von einem weiteren Modul RXDH2 mit dem Takt an CKH2 abgetastet, wodurch ein weiterer zeitlicher Abtastfehler des empfangenen Impulses entsteht. Der Abtastfehler des Moduls RXDL wird mit einem Modul CNTH abgezählt.

Die Taktfrequenz des Taktsignals CKL2 basiert auf einer Zeitbasis, die ein Modul GL verwendet, welches das Modul RXDL mit einem Taktsignal versorgt. Die Module RXDH, RXDH2 und CNTH werden mit dem Taktsignal CKH2 versorgt, das in einem Modul GH erzeugt wird und das auf einer zum Modul-GL unabhängigen, unsynchronisierten Zeitbasis basiert. Die Module RXDH und CNTH messen die Ankunftszeit des empfangenen Impulses mit dem Takt CKH2, wodurch die Messgenauigkeit der Ankunftszeit der Periode dieses Taktes entspricht Insgesamt werden die einzelnen Impulse durch Überlagerung der insgesamt drei Abtastfehler systematisch auf der Zeitachse verschoben. Dabei können die Senderempfänger so konstruiert und eingerichtet werden, dass das Verhältnis der Frequenzen CKL1 zu CKH1 bzw. CKL2 zu CKH2 eine möglichst gleichmäßige Verteilung der Abtastfehler erzeugt Die Frequenzen CKH1 und CKH2 sind aus Gründen der konstruktiven Vereinfachung identisch ausgelegt, werden aber in der Phase und Frequenz nicht synchronisiert und können daher zueinander so geringfügig verschoben werden, dass ebenfalls eine möglichst gleichmäßige Verteilung der Abtastfehler entsteht Die Taktfrequenzen von CKL1 und CKL2 sind identisch ausgelegt, aber ebenfalls unsynchronisiert und weisen in der Praxis geringfügige Abweichungen zueinander auf (z.B. Quarztoleranzen), können aber auch zufällig synchron zueinander sein.

Zusätzlich weisen alle Taktfrequenzen in der Praxis unsystematische, zufällige Phasenfehler auf. Wie bereits erwähnt, kann Rauschen in den Senderempfängern und auf der Übertragungstrecke zu weiteren geringfügigen zeitlichen Verschiebungen der Impulse führen.

Alle diese Maßnahmen und Effekte führen zu einer Überlagerung von systematischen und zufälligen Effekten und damit zu einer sehr gut zufällig verteilten Zeitverschiebung der einzelnen Impulse. Zudem führt die Überlagerung zu einem Dithering, welches die Bedingung nach Formel 40 annähert.

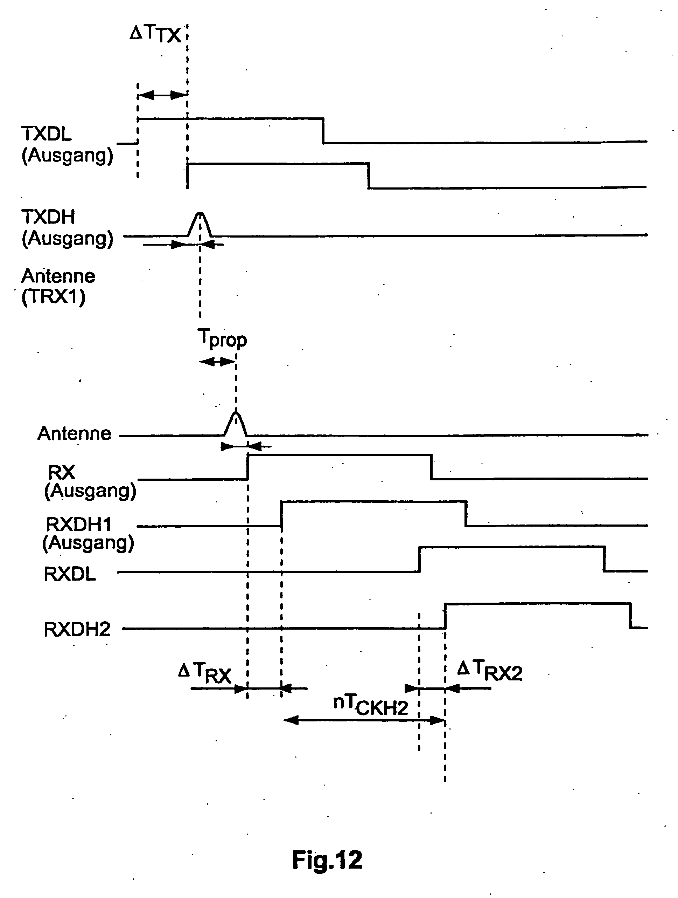

Fig. 12 zeigt den zeitlichen Ablauf der Übertragung eines Impulses bei Verwendung der Senderempfänger-Anordnung der Fig. 11. Die Zeitdifferenzen $\Delta$TTX, $\Delta$TRX1 und $\Delta$TRX2 entsprechen dabei den systematischen Abtastfehlern. Die mit einem Stern (*) gekennzeichneten Zeiten sind von der Phasenkonstellation der verschiedenen Takte unabhängige Verzögerungen, deren Werte bekannt sind.

Eine weitere Verbesserung der Gleichverteilung des Ditherings kann dadurch erzielt werden, dass zwischen der Übertragung von zwei Nachrichtenrahmen die Taktgeneratoren GH neu gestartet werden oder dass die Taktgeneratoren während der Übertragung mit einer pseudozufälligen Sequenz frequenzmoduliert werden. Dabei erfolgt die Frequenzmodulation in einem sehr schmalen Bereich. Zusätzlich können zwischen den Entfernungsmessungen die Taktgeneratoren GL neu gestartet werden.

5.3 Genauigkeit der Abstandsbestimmung bei Verwendung von Dithering und Averaging

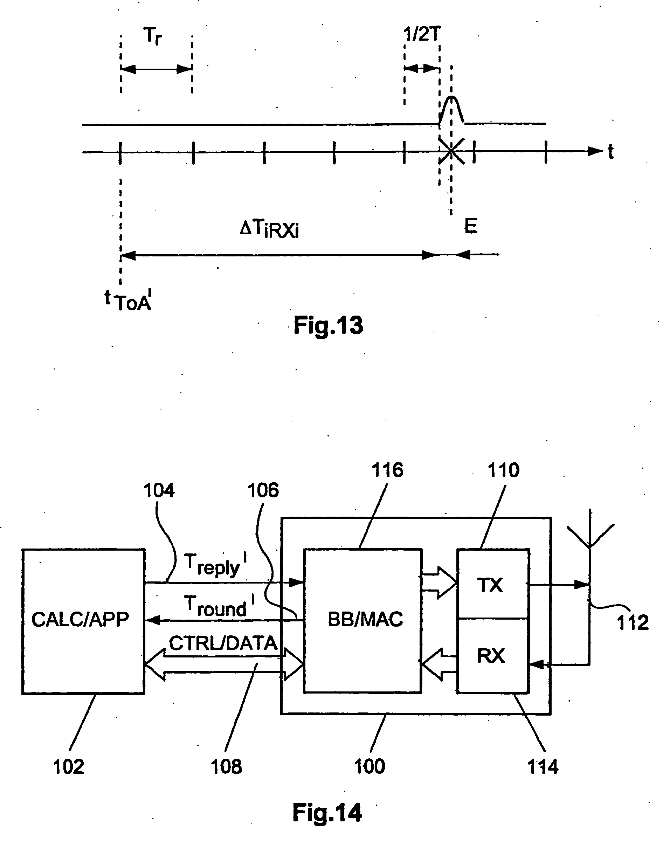

Da die Auflösung der einzelnen Messungen von $\Delta_{TiRXi}$, vgl. Fig. 13, in der Praxis durch die dafür zur Verfügung stehende Taktfrequenz technisch begrenzt ist, wird die Messung der einzelnen Impulse einem Fehler unterworfen.

Die Begrenzung ergibt sich aus der Notwendigkeit, die Machbarkeit einer Realisierung zu verbessern (z.B. durch maximal mögliche Taktfrequenzen abhängig vom Herstellungsprozess einer Realisierung), die Stromaufnahme zu reduzieren und die Kosten des Bauteils (z.B. Verwendung eines kostengünstigen Designs) gering zu halten. Da die Unsicherheit der Quantisierung statistisch ½ Tr beträgt, wird zum Messwert $\Delta T_{iRXi}$ dieser Betrag dazu addiert.

Bei einer endlichen Anzahl von Messwerten ($\Delta T_{iRXi}$) ergibt sich auf Grund der oben genannten Messfehler der absolute Fehler $E_{toA}$ der gemessenen Ankunftszeit (siehe Formel 39).

$$\text{Formel 39: } t_{ToA} + E_{ToA} = t_{ToA}' - \Delta T_{iRXAVG}$$

Dabei ist der Fehler $E_{ToA}$ bei angenommenen ideal gleichmäßig verteilten Abweichungen der Impulse, wie hinlänglich bekannt, in folgender Weise abhängig von der Anzahl der durchgeführten Messungen n und der Einzelmessauflösung $T_r$ (siehe Formel 40).

$$\text{Formel 40: } E_{ToA} \le \pm \frac{1}{n} T_r$$

Da in der Praxis die ideale Gleichverteilung der Abweichungen der detektierten Impulse sehr unwahrscheinlich bzw. nur mit aufwendigen Realisierungen erreichbar wäre, fällt der Fehler $E_{ToA}$ entsprechend größer als nach Formel 40 aus.

Nachfolgend werden weitere Ausführungsbeispiele beschrieben, deren zusätzliche Merkmale auf die oben beschriebenen verschiedenen Varianten des Verfahrens zur Abstandsbestimmung angewendet werden können, um dessen Genauigkeit, Sicherheit oder Protokolleinbettung zu verbessern.

6. Peak-Detektion

Die Genauigkeit der Bestimmung eines Empfangszeitpunktes kann durch geeignete Peak-Detektions-Verfahren verbessert werden. Nachfolgend wird zunächst ein digitales Korrelationsverfahren beschrieben. Anschließend wird ein analoges Kompressionsverfahren beschrieben.

6.1 Peak-Detektion durch digitale Korrelation

Bei diesem Verfahren wird der Impuls, von dem die Ankunftszeit gemessen wird, von einem digitalen Korrelator (sog. sliding correlator) detektiert. Dabei wird das empfangene Signal digital quantisiert und in der Regel über die Dauer eines Nachrichtensymbols gespeichert. Die gespeicherten Werte werden dann kontinuierlich mit einem zu erwartenden Muster verglichen. Das Ergebnis des Vergleichs wird als digitaler Zahlenwert dargestellt. Zur Detektierung eines Impulses kann dieser Zahlenwert gegen einen Schwellwert verglichen werden (fixed threshold), oder es wird der größte erreichte Zahlenwert in einem Zeitfenster ausgewählt. Die letztere Möglichkeit wird für die Messung des Empfangszeitpunkts herangezogen, da sie am genauesten den Zeitpunkt mit dem besten Signalgewinn ermittelt

6.2 Peak-Detektion durch analoge Kompression

Hier wird das Empfangssignal mit einer elektronischen oder mechanischen Schaltung (mechanischer Oberflächenwellefilter) analog so aufsummiert (komprimiert), dass zu einem bestimmten Zeitpunkt das empfangene Signal als analogen Impuls darstellt. Dabei ist die analoge Kompression so ausgelegt, dass sie mit der Spitze des analogen Impulses genau den Zeitpunkt (konstante Verzögerung kann eingeschlossen sein) mit dem besten Signalgewinn ermittelt. Die analoge Spannung kann mit einer Referenzspannung verglichen werden (Komparator). Durch Messung und Mittelung der Zeiten der Überschreitung und Unterschreitung des Schwellwertes des analogen Komparators kann die Spitze des analogen Impulses zeitlich am genauesten ermittelt werden, insofern der analoge Impuls ein symmetrische Form besitzt.

7. Qualifizierung und Identifizierung von Signalimpulsen

Nachfolgend werden Maßnahmen beschrieben, mit denen sichergestellt werden kann, dass empfängerseitig detektierte Signalimpulse für eine Abstandsbestimmung vorgesehen sind. Zu diesen Maßnahmen gehört ein Gating-Verfahren, eine Plausibilitätsprüfung, eine Integritätsprüfung sowie eine Identifikation empfangener Signalimpulse.

7.1 Gating

Die detektierten Impulse eines Datenrahmens erzeugen ein kurzzeitiges Signal welches sich mit der bekannten Impulsperiode für die nachfolgenden Impulse wiederholt. Da die Impulsperiode beim Empfänger bekannt ist, kann nach der Synchronisation auf einen beliebigen Impuls ein Raster mit der bekannten Impulsfrequenz festgelegt werden. An den Rasterpunkten (Zeitpunkt der nachfolgend zu erwartenden Impulse) lassen kurze Zeitfenster die detektierten Impulse zu der Messeinrichtung für die Ankunftszeit hindurch, während in den Zeiträumen zwischen den Fenstern die detektierten Impulse blockiert bzw. herausgefiltert werden. Somit können Impulse, die durch Störer, Rauschen und Mehrwegeausbreitung detektiert werden, ausgeblendet werden, was die Zuverlässigkeit und Genauigkeit der Entfernungsmessung weiter erhöht. Fallen mehrere Impulse in das Zeitfenster, wird immer der erste Impuls detektiert, die nachfolgenden Impulse werden ebenfalls ausgeblendet. Dabei betragen die Zeitfenster nur einen Bruchteil der Impulsperiode, um eine gute Filterwirkung gegen die genannten Störer zu erreichen. Sie müssen aber eine gewisse Mindestdauer aufweisen, da die Impulssynchronisation einem gewissen Fehler unterworfen ist und die einzelnen Impulsabstände auf Grund des verwendeten Dithering-Verfahrens nicht konstant sind.

7.2 Plausibilitätsprüfung

Die Prüfung der Ankunftszeit der Impulse von empfangenen Datenrahmen auf Plausibilität macht sich bekannte Einrichtungen und Verfahren vorhandener Nachrichtenprotokolle zu Nutzen und ist daher vorteilhaft ohne großen Aufwand realisierbar. Die Datenrahmen besitzen protokollbedingt bestimmte Datenfelder, die zur Prüfung der empfangenen Datenrahmen verwendet werden. Dabei erfolgt die Prüfung auf bestimmte Kodes, wodurch die Datenrahmen sowohl als zulässig und gültig eingestuft werden können, als auch klassifiziert werden können. Alternativ oder zusätzlich kann über Signaturen in den Nutzdatenbereichen (Payload) von Datenrahmen eine Prüfung der Gültigkeit auf der Anwendungsebene (höhere Protokollschichten oder Anwendungsschicht ) erfolgen. Ist die Plausibilitätsprüfung von Datenrahmen erfolgreich, können damit auch die Ankunftszeiten der einzelnen Impulse, die als Nachrichtensymbole verwendet werden, als plausibel betrachtet werden.

7.3 Integritätsprüfung

Die Prüfung, ob detektierte Impulse auch wirklich vom Sender ausgesendet wurden, kann durch Integritätsprüfung der Datenrahmen erfolgen. Dabei werden in vorhandenen Nachrichtenprotokollen über bestimmte Felder der Datenrahmen Prüfsummen erzeugt und an die Datenrahmen angehangen (CRC). Im Rahmendekoder des Empfängers wird dann beispielsweise die Prüfsumme für die tatsächlich empfangenen Felder neu berechnet und mit der empfangenen Prüfsumme verglichen. Bei Erfolg der Prüfung kann dann mit einer sehr hohen statistischen Sicherheit (besser als $10^{10}$ ) festgestellt werden, ob die Impulse unverfälscht empfangen wurden. Durch Mitbenutzung dieser hinlänglich bekannten Einrichtung von vorhandenen Nachrichtenprotokollen kann effizient die Zuverlässigkeit und Genauigkeit der Entfernungsmessung verbessert werden, da nur die wirklich gesendeten Impulse der Datenrahmen zur Bestimmung der Ankunftszeit herangezogen werden.

7.4 Identifikation der Signalimpulse

Die Zugerhörigkeit von Impulsen zu einem Senderempfänger und damit zu einer bestimmten Position kann über die eineindeutige Identifikation der Datenrahmen erfolgen. Dabei werden die Adressfelder (z.B. IEEE Stationsadressen) vorhandener Nachrichtenprotokolle mitverwendet, die eine eindeutige Zuordnung (Herkunft) einer Nachricht zu einem Senderempfänger gewährleisten. Die Ankunftszeiten der Impulse können somit eineindeutig einem bestimmten Senderempfänger zugeordnet werden und es wird somit die Zuverlässigkeit der Entfernungsmessung ohne zusätzlichen Aufwand verbessert

8. Austausch der Messdaten zur Abstandsbestimmung

Zur Berechnung der Impulslaufzeit und daraus der Entfernung müssen bestimmte Messwerte zwischen den kooperierenden Senderempfängern ausgetauscht werden.
Eine Möglichkeit ist der Austausch der Sende- und Empfangszeitpunkfe der Nachrichtenrahmen, aus denen dann die Rundlauf- und Antwortzeiten und daraus wiederum die Impulslaufzeiten und die Entfernungen berechnet werden können. Alternativ ist auch ein Austausch der bereits in den Senderempfängem ermittelten Rundlauf- und Antwortzeitabstände möglich.
Dabei können die Zeitmesswerte symmetrisch ausgetauscht werden, wodurch die Entfernung in beiden kooperierenden Senderempfängern berechnet werden kann oder es wird nur die einseitige Übertragung durchgeführt, wenn die Berechnung der Entfernung in einem der Senderempfänger ausreichend ist. Dabei können die Zeitmesswerte sowohl öffentlich (von jedem Senderempfänger in der Reichweite empfangbar) oder geheim (nur den beiden kooperierenden Senderempfängern verständlich) übertragen werden.

8.1 Austausch der Sende- und Empfangszeitpunkte (ToA)

Zur Berechnung der Rundlauf- und Antwortzeiten, aus denen anschließend die Impulslaufzeit bzw. Entfernung berechnet wird, können die gemessen Empfangs- und Sendezeitpunkte der Nachrichtenrahmen übermittelt werden. Dabei werden die Zeitwerte in einem vorher festgelegten oder später ausgehandelten Format übermittelt. Die Übermittlung hat den Vorteil, dass nicht jeder Senderempfänger für die Berechnung der Rundlauf- bzw. Antwortzeiten ausgerüstet sein muss. Ist die Kenntnis der Entfernung nicht nur zwischen den kooperierenden Senderempfängern sinnvoll und erwünscht, kann die Übermittlung der gemessen Empfangs- und Sendezeitpunkte zum Beispiel als Rundspruch (Broadcast) effizient (Einsparung von Bandbreite des Nachrichtenkanals, Einsparung von elektrischer Energie) erfolgen. Die gemessenen Zeiten können bereits auf Grund der Verfälschung durch äußere Einflüsse (z. B. Temperatur) vor der Übermittlung korrigiert werden. Alternativ kann die Korrektur auch in dem Senderempfänger vorgenommen werden, der die Berechnung der Rundlauf- und Antwortzeiten durchführt. Dazu müssen entweder die Korrekturwerte zusätzlich übertragen werden oder bereits bekannt sein. Die optionale Verwendung einer "ewigen" Zeitskala hat zudem den Vorteil, dass die Messwerte leicht eineindeutig zu den jeweiligen Nachrichtenrahmen zugeordnet werden können.

8.2 Übermittlung der Rundlauf- und Antwortzeitabstände

Zur Berechnung der Impulslaufzeit und daraus der Entfernung können alternativ die Rundlauf- und Antwortzeitabstände übermittelt werden. Dabei erfolgt die Übermittlung der Zeitwerte in einem vorher festgelegten oder später ausgehandelten Format.

Ist die Kenntnis der Entfernung nicht nur zwischen den kooperierenden Senderempfängern sinnvoll und erwünscht, kann die Übermittlung der Rundlauf- und Antwortzeiten zum Beispiel ebenfalls als Rundspruch erfolgen. Die Berechnung der Rundlauf- und Antwortzeiten aus den gemessen Empfangs- und Sendezeitpunkte der Nachrichtenrahmen muss bei dieser Variante nur einmalig durchgeführt werden. Die ermittelten Zeiten können ebenfalls auf Grund der Verfälschung durch äußere Einflüsse vor der Übermittlung korrigiert werden. Alternativ kann die Korrektur auch in dem Senderempfänger vorgenommen werden, der die Berechnung der Entfernung durchführt. Dazu müssen entweder zusätzlich die Korrekturwerte übertragen werden, oder diese sind bereits bekannt. Bei den übermittelten Zeiten ist allerdings die Zuordnung zu bestimmten Nachrichtenrahmen notwendig, die zusätzlich zu den Zeitwerten übermittelt werden muss (z. B. durch Nummerierung der Nachrichtenrahmen).

8.3 Übermittlung der Impulslaufzeit oder der Entfernung

Wird die Berechnung der Impulslaufzeit bzw. der Entfernung nur in einem von zwei kooperierenden Senderempfängern vorgenommen, ist es möglich, diese berechneten Ergebnisse zu übermitteln. Dies hat den Vorteil, dass der Rechenaufwand, wenngleich er relativ gering ist, nur einmalig ausgeführt werden muss. Zudem müssen nur bestimmte Senderempfänger entsprechend ausgerüstet sein. Ist die Kenntnis der Entfernung nicht nur zwischen den kooperierenden Senderempfängern sinnvoll und erwünscht, kann die Übermittlung der Entfernung zum Beispiel ebenfalls als Rundspruch erfolgen (siehe 5.3.1). Zudem muss die Berechnung der Entfernung nur einmalig durchgeführt werden.

9. Maßnahmen zum Schutz und zur Erhöhung der Sicherheit des Verfahrens

9.1 Autorisierung der Entfernungsmessung

Die Messung von Entfernungen setzt kooperierende Senderempfänger für den Nachrichtenaustausch voraus. Die Entfernungsmessung kann aber abhängig von einer bestimmten Situation erlaubt oder gesperrt werden. Eine Sperrung ist zum Beispiel notwendig, um die "Privatsphäre" einer bestimmten Benutzergruppe zu gewährleisten oder die Verkehrsdichte des Übertragungskanals steuern zu können. Das Prüfverfahren in einem Senderempfänger, welches die Erlaubnis zur Entfernungsmessung erteilt und somit in die Kooperation mit einem anderen Senderempfänger einwilligt, kann vorher ausgehandelt oder von vornherein festgelegt sein. Dabei werden im Prüfverfahren hinlänglich bekannte Verfahren der Authentifizierung verwendet. Die Authentifizierung kann beispielsweise über Stationsadressen, Signaturen, verschlüsselte Signaturen oder verschlüsselte Nachrichten erfolgen. Zur Erhöhung der Sicherheit des Verfahrens können Einmalsignaturen und/oder Einmalschlüssel verwendet werden. Nach erfolgreicher einseitiger oder auch gegenseitiger Authentifizierung kooperieren dann die Senderempfänger in den einzelnen Schritten, wie dem Nachrichtenaustausch und dem Austausch der Messdaten der Entfernungsmessung (z. B. Rundlauf- und Antwortzeiten). Eine einfache Möglichkeit, das Prüfverfahren in den Nachrichtenaustausch der Entfernungsmessung zu integrieren, ist die Verwendung von verschlüsselten Nachrichten, die einen geheimen, aber auf beiden Seiten bekannten Schlüssel verwenden. Nur wenn die Entschlüsselung eines ersten Datenrahmens bei einem Senderempfänger erfolgreich war, sendet dieser den zweiten (verschlüsselten) Datenrahmen usw. bis ein Nachrichtenaustausch beispielsweise nach einem der verwendeten Mehr-Wege-Verfahren zustande kommt

9.2 Verschlüsselte Übertragung im Rahmen der Abstandsbestimmung

Ebenfalls dem Schutz der Privatsphäre und dem Schutz vor Abhören der Daten der Entfernungsmessung dient der Einsatz eines entsprechenden Verschlüsselungsverfahrens mit hoher Sicherheit. Zum Beispiel können hinlänglich bekannte Substitutions- und Transpositionsverfahren sowie daraus kombinierten Verfahren verwendet werden. Lange Schlüssellängen (mind. 128 Bit) und der Einsatz von Einmalschlüsseln gewährleisten den entsprechenden Schutz des Verfahrens. Das vorhandene Verschlüsselungsverfahren eines für die Entfernungsmessung verwendeten Nachrichtenprotokolls kann dafür genutzt werden. Dabei können für die Entfernungsmessung folgende Daten ausgetauscht werden: Sende- und Empfangszeitpunkte, Antwort- und Rundlaufzeitabstände, berechnete Impulsverzögerungszeiten oder daraus errechnete Entfernungen. Die Daten können zwischen den kooperierenden Senderempfängern geheim ausgetauscht werden, oder in bestimmten Anwendungen auch öffentlich übertragen werden, um zum Beispiel einem beliebigen Senderempfänger die Möglichkeit zu geben, Kenntnisse über die Entfernungen zwischen verschiedenen anderen Senderempfängern zu sammeln. Dies ist zum Beispiel da sinnvoll, wo sich die Entferungsinformationen zwischen den Senderempfängern eines Netzwerkes möglichst schnell und effizient verbreiten sollen. Durch Verwenden eines geheimen aber gemeinsamen Schlüssels können beispielsweise alle "eingeweihten" Senderempfänger diese Informationen abhören. Ist keinerlei Schutz dieser Informationen notwendig, können diese auch optional unverschlüsselt übertragen werden.

### 9.3 Geheime Antwortzeitabstände

Wie in den Verfahren dieser Erfindung dargestellt, müssen die Antwortzeiten $T_{reply}$ zur Berechnung der Entfernung bekannt sein. Dazu werden die ermittelten, exakten Antwortzeiten oder nur die Abweichung von einer festgelegten Antwortzeit dem kooperierenden Senderempfänger für die Berechnung der Entfernung übermittelt. Die Abweichungen von der festgelegten Antwortzeit sind in praktischen Realisierungen nicht vermeidbar und daher in gewissen Toleranzgrenzen erlaubt. Die Festlegung der Toleranzen der Antwortzeit ist abhängig von der gewünschten Genauigkeit der Entfernungsmessung und diese wiederum von der Differenz der Antwortzeitabstände oder deren Mittelwerten. Dabei kann die Antwortzeit oder deren Abweichung verschlüsselt übertragen und somit einem dritten Senderempfängern unzugänglich gemacht werden, was einen gewissen Schutz der Entfernungsbestimmung bietet. Da die Antwortzeit aber in gewissen Toleranzgrenzen bekannt sein könnte, zum Beispiel durch eine bekannte allgemeingültige Festlegung in einer Realisierung, durch Vermessung von Realisierungen mit einer vorher unbekannten aber fest implementierten Antwortzeiten (z. B. dem gleichen Typ der integrierten Schaltung) oder durch Abhören von Nachrichten von Senderempfängern mit bekannter Entfernung und anschließender Korrelation oder Berechnung der Antwortzeit, könnte die Entfernung mit gewisser Genauigkeit erfolgreich bestimmt werden (z. B. entsprechen $\pm$ 100 ns Toleranz der Antwortzeit einer zu überwindenden Distanz eines Impulses von $\pm$ 30 m). Sind die Abweichungen zudem noch gleichmäßig verteilt, könnte durch Abhören des Nachrichtenaustauschs über einen längeren Zeitraum und anschließender Mittelung der zeitlichen Messungen die Entfernung wieder mit hoher Genauigkeit, bestimmt werden (Bei Kenntnis der Realisierung oder Abhören des Nachrichtenaustauschs über eine bekannte Entfernung wäre ebenfalls der Mittelwert der Antwortzeit bekannt). Daher wird mit diesem Verfahren die Antwortzeit zusätzlich in noch größeren Schritten, als die durch die Toleranzen bereits verursacht, vom Anwender derart verändert, dass die Streuung der Antwortzeitabweichungen ungleichmäßig (asymmetrisch zum Mittelwert) erfolgt. Es kann in einer geschlossenen Benutzergruppe eine geheime Antwortzeit festgelegt oder ausgehandelt und jederzeit abgeändert werden. Optional ist es möglich, die Antwortzeiten nach einem vorher vereinbarten Schema zu verändern. Zusätzlich können auch die Antwortzeiten nach einem zufälligen oder pseudozufälligen Muster geändert werden und diese dann der kooperierenden Station durch verschlüsselte Übermittlung bekannt gemacht werden. Dabei ist lediglich zu beachten, dass sich die Antwortzeitdifferenzen während einer Entfernungsmessung innerhalb der Toleranzgrenzen befinden.

### 10. Maßnahmen zur Verbesserung der Kompensation von Temperatur und Versorgungsspannungsvariationen

### 10.1 Komplementäre Signalimpulse

Abweichungen der Trägerfrequenz im Sender zu der Selektionsfrequenz im Empfänger können bei bestimmten Modulationsverfahren Abweichungen der Ankunftszeit der detektierten Symbole bewirken. Da die Senderempfänger in Phase und Frequenz nicht synchronisiert sind und für das Verfahren dieser Erfindung auch nicht synchronisiert bzw. gegenseitig aufeinander kalibriert werden müssen, sind Abweichungen der Frequenzen der Senderempfänger (Frequenzoffseteffekt) nicht auszuschließen. Zwar können die Mischfrequenzen, die aus den Träger- und Selektionsfrequenzen abgeleitet werden, in der Praxis mit guter Präzision von einer lokalen Referenzfrequenz (Quarzoszillator) abgeleitet und kalibriert werden, doch sind die Referenzfrequenzen ebenfalls Abweichungen (z. B. Quarztoleranzen) unterworfen. Ein Vorzug dieser Erfindung ist die geringe Auswirkung der Quarztoleranzen, so dass industriell verfügbare Quarztypen eingesetzt werden können. Dieser Vorteil darf auch durch den hier beschriebenen Effekt nicht aufgehoben werden. Des weiteren bewirken beispielsweise Temperaturänderungen in einer Schaltungsrealisierung (z. B. durch Veränderung der Umgebungstemperatur oder durch Eigenerwärmung) eine geringfügige Änderung der abgeleiteten bzw. kalibrierten Mischfrequenzen, die zu der signifikanten Änderungen der Ankunftszeit der detektierten Symbole führen können. Zur Kompensation dieses Effekts werden daher sogenannte komplementäre Impulse eingesetzt. Die komplementären Impulse haben die Eigenschaft, zeitliche Abweichungen der detektierten Impulse mit gleichem Betrag, jedoch mit zueinander entgegengesetztem Vorzeichen zu bewirken. Ats komplementäre Impulse können zum Beispiel monoton steigende und fallende Chirpimpulsen verwendet werden, die eine identische Mittenfrequenz und die gleiche Dauer aufweisen. Bei einer paritätischen Anzahl von detektierten komplementären Impulsen ist damit die Summe der zeitlichen Abweichungen immer Null. Da in der Regel die verschiedenen, komplementären Impulse als unterschiedliche Informationssymbole verwendet werden und mit den Informationssymbolen Daten dargestellt werden, hängt die Verteilung und das Mengenverhältnis der komplementären Impulse zueinander von der Dateninformation ab, die übertragen werden soll. Ein beliebiger Datenrahmen besteht daher aus einem unbestimmten Mengenverhältnis der komplementären Impulse mit unbekannter Verteilung. Bei Averaging-Verfahren dieser Erfindung erfolgt eine Mittelung der Ankunftszeiten einer bestimmten Anzahl von detektierten Impulsen. Beim Einsatz der komplementären Impulse muss zusätzlich gewährleistet werden, dass eine paritätische Mittelung (der Ankunftszeiten) der komplementären Impulse erfolgt. Dies wird bei dieser Erfindung dadurch erreicht, dass die verschiedenen Impulse identifiziert werden und die Ankunftszeiten den entsprechenden Impulsen zugeordnet werden. Durch Addition der gleichen Anzahl der jeweiligen Ankunftszeiten und Teilen durch die Gesamtanzahl der gemessenen Ankunftszeiten erfolgt die geforderte paritätische Mittelung und damit die Kompensation des Frequenzeffseteffekts. Da, wie bereits erklärt, die Verteilung und das Mengenverhältnis der komplementären Impulse von der Information selbst abhängen, kann diese für die paritätische Mittelung ungünstig ausfallen. Dies kann jedoch optional im Rahmen dieser Erfindung dadurch verbessert werden, dass die Daten vor dem Senden nach einem pseudozufälligen Muster substituiert werden und nach dem Empfangen diese Substitution wieder rückgängig gemacht wird (sog. Scrambling). Dadurch wird erfahrungsgemäß eine bessere Gleichverteilung von Informationssymbolen und damit unterschiedlichen Impulsen erreicht In der Regel ist das Scrambling bei existierenden Nachrichtenprotokollen bereits vorhanden, so dass es für diesen Zweck mitgenutzt werden kann. Zusätzlich kann die Anzahl der paritätisch zu messenden Empfangszeitpunkte auch während des Betriebs eines Senderempfängers angepasst werden, um eine hohe Erfolgsrate der paritätischen Mittelung zu erreichen. Dabei kann das Erreichen der erforderlichen Anzahl dem Benutzer nach Empfang eines Datenrahmens angezeigt werden, sodass eine neue erforderliche Anzahl für den Empfang des nächsten Datenrahmens neu eingestellt werden kann.

### 10.2 Charakterisierungstabellen und -funktionen

Wie hinlänglich bekannt haben Realisierungen von elektronischen Schaltungen die Eigenschaft, das zeitliche Verhalten elektrischer Signale abhängig von äußeren Bedingungen zu beeinflussen. Dabei kommen sowohl Einflüsse in Betracht, die während der Herstellung einer Schaltungsrealisierung (z. B. integrierte Schaltung) die Eigenschaften dieser beeinflussen, als auch sich ändernde Einflüsse während des Betriebes der Schaltungsrealisierung. Die Einflüsse während der Herstellung sind als toleranzbedingte Exemplarstreuungen bekannt, während sich die äußeren Einflüsse während des Betriebes sich als Temperatur- und Versorgungsspannungsabhängigkeit auswirken. Dadurch können bei einer bestimmten Temperatur und Versorgungsspannung konstante aber unterschiedliche zeitliche Verzögerungen in den einzelnen Geräteexemplaren auftreten, die zu signifikanten Abweichungen der Messung der Empfangszeitpunkte der Impulse führen und damit die Genauigkeit der Entfernungsmessung negativ beeinträchtigen.

Dieses Detail der Erfindung verwendet sogenannte Charakterisierungstabellen und/oder -funktionen, die die Einflüsse der Temperatur und Versorgungsspannung eines Exemplars auf das zeitliche Verhalten messen oder anderweitig bestimmen. Die Charakterisierungstabellen und/oder -funktionen werden dabei einem Exemplar fest zugeordnet und können z.B. in der Realisierung (z. B. im PROM/Flash-Speicher der integrierten Schaltung oder in der Steuersoftware des jeweiligen Gerätes) abgespeichert werden. Zusätzlich können die Temperatur und die Versorgungsspannung in der Realisierung gemessen werden und aus den abgespeicherten Charakterisierungsinformationen genaue schaltungsbedingte Verzögerungszeiten bei der Berechnung der Impulsverzögerungszeit und damit der Entfernung berücksichtigt werden. Dabei können die Charakterisierungsinformationen einmalig bei der Herstellung oder im Betrieb durch einen Kalibrierungsvorgang (z. B. durch bekannte Entfernung zweier Senderempfänger) der Schaltungsrealisierungen bzw. Geräte gewonnen und abgespeichert werden.

### 10.3 Verwendung von Senderempfänger-Paaren

Das Detail dieser Erfindung besteht in der Kompensation der Einflüsse von Temperatur und Versorgungsspannung durch Ermittlung dieser Einflüsse über eine bekannte Entfernung. Dabei werden in einem Gerät zur Entfernungsmessung zwei Senderempfänger mit jeweils separater Antenne installiert. Der Abstand der Antennen zueinander ist bekannt und aus der berechneten Impulslaufzeit zwischen den beiden Senderempfängern und der tatsächlichen Entfernung kann die Größe der schaltungsbedingten Verzögerungszeiten ermittelt werden. Dabei werden beide Senderempfänger im Gerät konstruktiv so angeordnet und das Gerät räumlich so installiert, dass sie der gleichen Umgebungstemperatur ausgesetzt sind. Zusätzlich werden beide Senderempfänger aus der gleichen Versorgungsspannungsquelle (z. B. Batterie) betrieben. Durch Mittelung der schaltungsbedingten Verzögerungszeiten, verursacht im Sender und im Empfänger der Übertragungsstrecke zwischen dem Senderempfängerpaar, und Berücksichtigung dieser Verzögerungszeiten bei der Ermittlung einer unbekannten Entfernung zu einem Senderempfängerpaar oder einzelnen Senderempfänger können die temperatur- und versorgungsspannungsabhängigen Verzögerungszeiten kompensiert werden und somit die Präzision der Entfernungsmessung weiter verbessert werden. Weiterhin eignet sich dieses Verfahren zur Kompensation der Effekte durch die Mehrwegeausbreitung unter der Annahme, dass die Einflüsse der Mehrwegeausbreitung auf die Entfernungsmessung zwischen den Senderempfängern des Paars mit bekannter Entfernung identisch zu Senderempfängern mit anderer, unbekannter Entfernung sind. Diese Möglichkeit der Kompensation der Mehrwegeausbreitung kann vorrangig da eingesetzt werden, wo die Ausbreitungseigenschaften des Mediums zwischen beliebigen Positionen der Senderempfänger nahezu identisch sind (z. B. in homogenen geschlossenen Räumen wie Röhren, Tunnels, Hallen, Hangars etc.).

11. Mehrfachmessungen

Alle dargestellten Verfahren können auch für Mehrfachmessungen der Rundlaufzeitabstände mit anschließender Mittelung eingesetzt werden. Dabei werden die ermittelten Impulslaufzeiten oder Entfernungen gesammelt und anschließend arithmetisch gemittelt.

$$\text{Formel 41: } T_{prop} = \frac{T_{prop1} + T_{prop2} + .. + T_{propn}}{n}$$

$$\text{Formel 42: } d = \frac{d_1 + d_2 + .. + d_n}{n}$$

Alternativ dazu können auch die Rundlauf- und Antwortzeiten akkumuliert und anschließend durch die Anzahl der Messungen geteilt werden. Formel 43 zeigt die Berechnung der akkumulierten Rundlauf- und Antwortzeiten zu einer arithmetisch gemittelten Impulslaufzeit an Hand des 3-Wege-Verfahrens.

**Formel 43:**

$$T_{prop} = \frac{T_{rundA1} + T_{rundB1} + T_{rundA2} + T_{rundB2} + .. + T_{rundAn} + T_{rundBn}}{4n}$$

$$\frac{T_{replyA1} + T_{replyB1} + T_{replyA2} + T_{replyB2} + .. + T_{replyAn} + T_{replyBn}}{4n}$$

12. Verwendung zur Abstandsbestimmung über größere Entfernungen

Das erfindungsgemäße Verfahren zielt auf eine Abstandsbestimmung im Bereich bis 10 km. Es kann jedoch auch im Rahmen eines Verfahrens zur Abstandsbestimmung über größere Entfernungen verwendet werden.

Die Reichweite einer Nachrichtenübertragung bzw. maximale Entfernung zwischen zwei Senderempfängern ist aus verschiedenen Gründen begrenzt, wodurch nur Entfernungen bis zu einer gewissen Grenze direkt bestimmt werden können. Die Begrenzung der Reichweite ergibt sich meist aus gesetzlichen Bestimmungen (z. B. maximale Ausgangsleistung des Senders) und aus technischen wie wirtschaftlichen Gründen (kostengünstige Senderempfänger).

Eine Erhöhung der Reichweite der Entfernungsmessung kann dadurch erreicht werden, dass in einem Netzwerk von Senderempfängern kürzere Zwischenentfernungen gemessen werden, die Zwischenentfernungen an den Senderempfänger eines Endpunktes einer längeren Entfernungsmessung, wo zwischen den Endpunkten keine direkte Nachrichtenübertragung möglich wäre, übermittelt werden und dort die Zwischenergebnisse mit einer Funktion zu der gesamten Entfernung berechnet werden.

Dabei können verschiedene Ansätze für die Umsetzung dieser Funktion verwendet werden. Eine erste einfache Möglichkeit ist die Bildung der Summe der Zwischenergebnisse für die Gesamtentfernung unter der Annahme, dass alle Senderempfänger sich auf einer Geraden befinden.

Eine Erweiterung dieser Möglichkeit ist die Ermittlung von mehreren Summen, die durch unterschiedliche Wegstrecken zwischen den Endpunkten entstehen können. Anschließend kann durch Vergleich der Summen die kleinste Entfernung als die genauest mögliche Schätzung ausgewählt werden. Dieses Verfahren ist in der Praxis besser geeignet, da sich die Senderempfänger sehr unwahrscheinlich alle auf einer Geraden befinden werden.

Die genaueste Möglichkeit zur Bestimmung der Entfernung über mehrere Senderempfänger hinweg, ist die Verwendung der an sich bekannten Lateration und Angulation zu Berechnung. Dabei werden die Entfernungen zwischen den Senderempfängern ermittelt, die eine eineindeutige geometrische Abbildung der räumlichen Anordnung der Endpunkte und von benötigten Zwischenpunkten erlauben. Dann kann mit Hilfe der Lateration und Angulation die direkte Entfernung zwischen den Endpunkten berechnet werden. Das Verfahren kann dabei sowohl für Anordnungen von Senderempfängern auf einer Fläche (zweidimensional) oder im Raum (dreidimensional) angewandt werden.

13. Nutzbarmachung standardisierter Nachrichtenprotokolle

Vorhandene Nachrichtenprotokolle können im Rahmen dieser Erfindung zur Verbesserung von Genauigkeit, Zuverlässigkeit und Sicherheit der Entfernungsmessung gezielt nutzbar gemacht werden.

Das erfindungsgemäße Verfahren ermöglicht die Übertragung von beliebigen Anwendungsdaten und die gleichzeitige Entfernungsmessung zwischen zwei Senderempfängem. Zum anderen sind die in den Nachrichtenprotokollen festgelegten Verfahren und Mechanismen zur Datenübertragung gleichzeitig der Verbesserung der Genauigkeit, Zuverlässigkeit und Sicherheit der Entfernungsmessung dienlich.

Die Nachrichtenprotokolle, die für das Verfahren eingesetzt werden können, sind zum Beispiel in öffentlichen Standards internationaler Organisationen (z. B. IE-EE), kommerzieller Interessenverbände (z. B. Bluetooth) oder als private Industriestandards (z. B. nanoNET) festgelegt. Die allgemeine Kenntnis, die Verbreitung und das Vorhandensein bewährter und leistungsstarker Verfahren und Mechanismen in vorhandenen Nachrichtenprotokollen erhöhen die Akzeptanz eines integrierten Verfahrens der Entfernungsmessung und vereinfachen die Verbreitung der Verfahren und deren Implementierung in praktische Realisierungen (Senderempfänger) wesentlich. Zum Teil werden für bestimmte Anwendungen durch Bestrebungen von Organisationen bestimmte Nachrichtenprotokollstandards vorgeschrieben. Durch die Erfindung kann die Entfernungsmessung leichter in diese Anwendungen integriert werden.

Die in den Standards festgelegten Vereinbarungen der Schicht ISO/OSI-1 (Bitübertragungsschicht, PHY) können, falls geeignet, weiterverwendet werden. Die Schicht ISO/OSI-2 (Sicherungsschicht, MAC/Data Link Layer) ist dem Verfahren sehr dienlich und es existieren genügend geeignete Nachrichtenprotokolle, die unverändert die integrierte Entfernungsmessung ermöglichen. Alle höheren Schichten nach dem ISO/OSI-Modell sind mit dem Verfahren einsetzbar, insbesondere die Schicht ISO/OSI-6 (Darstellungsschicht, Presentation Layer) ist dem Verfahren dienlich.

Es wird dadurch ein effizientes und integriertes Verfahren ermöglicht, welches keine zusätzliche Bandbreite des Übertragungskanals für die Entfernungsmessung erfordert. Zusätzlich werden die Schaltungsteile einer Realisierung, die zur Datenübertragung notwendig sind, für die Entfernungsmessung mitverwendet, was kostengünstige und stromsparende Senderempfänger ermöglicht.

Durch die Wiederverwendbarkeit der Schichten ISO/OSI-2 und aufwärts können zudem existierende Standards leicht erweitert werden. Dadurch wird ein effizienter Standardisierungsprozess ermöglicht, da unter Umständen nur die Bitübertragungsschicht neu festgelegt werden muss. Zusätzlich erlauben bereits vorhandenes Wissen und existierende Designs die kostengünstige und zeitsparende Erweiterung von Realisierungen mit diesem Verfahren (Design-Re-Use). Zur Optimierung des Verfahrens können bestimmte Schichten existierender Nachrichtenprotokolle derart erweitert werden, dass die Erweiterung nicht im Widerspruch zum bisherigen Standard steht (z. B. Erweiterung des Kommandosatzes des Link Protokoll Managers der Schicht ISO/OSI-2). Eine Abwärtskompatibilität zu den bereits existierenden Nachrichtenprotokollen bleibt erhalten.

Im Falle der uneingeschränkten Weiterverwendbarkeit eines Standards einschließlich der Bitübertragungsschicht (z.B. der private Industriestandard nanoNET) ist lediglich eine Erweiterung der Realisierungen (z.B. integrierte Schaltungen) erforderlich. Die bereits existierenden Realisierungen sind weiterhin zur ausschließlichen Datenübertragung einsetzbar.

13.1 Nutzbarmachung von Schicht-2-Protokollen

Der Nachrichtenaustausch nach dem Drei- oder und n-Wege-Verfahren kann mit einem Zeitschlitzverfahren (Time Division Multiple Access, TDMA) der Sicherungsschicht, also der Schicht 2 im ISO/OSI-Referenzmodell, durchgeführt werden. Dabei werden in äquidistanten Zeitabständen Nachrichtenrahmen zwischen zwei kooperierenden Senderempfängem ausgetauscht und die jeweiligen Sende- und Empfangszeitpunkte gemessen und daraus die Rundlauf- und Antwortzeitabstände bestimmt. Die äquidistanten Zeitabstände können zur Erfüllung der Symmetrieanforderung des erfindungsgemäßen Verfahrens im Hinblick auf die Antwortzeitabstände nutzbar gemacht werden.

Zwischen den Nachrichtenrahmen kann zusätzlicher Nachrichtenverkehr erlaubt sein, zum Beispiel die Übertragung von Bestätigungspaketen (Acknowledge-Packets) auf die für die Verfahren verwendeten Nachrichtenrahmen als Datenpakete.

Der Nachrichtenaustausch nach dem doppelseitigen und mehrfach-doppelseitigen Zwei-Wege-Verfahren kann mit dem vielfach verbreiteten Fehlerkorrekturprotokoll realisiert werden. Dabei werden als Bestätigung für korrekt empfangene Datenpakete Bestätigungspakete zurückgesendet, die in der Regel einen vorgegeben Abstand zu den Datenpaketen besitzen. Dabei fungieren beide Pakete als Nachrichtenrahmenpaar nach diesen Verfahren. Sind die Paketabstände während einer Messung konstant, wird auch die Symmetrieforderung dieses Verfahrens erfüllt.

13.2 Einsatz von Nachrichtenprotokollen zum Austausch der Messwerte

Für die Berechnung der Entfernung ist ein Austausch der Zeitmesswerte der Bitübertragungsschicht (z. B. ermittelte Rundlauf- und Verzögerungszeiten) mit dem kooperierenden Senderempfänger notwendig. Zusätzlich können die berechneten Entfernungen mit anderen Senderempfängern ausgetauscht werden.

Dabei kann der Austausch der Daten zwischen den Sicherungsschichten der Senderempfänger erfolgen oder aber die Zeitwerte werden als Daten der Anwendungsschicht übermittelt.

Bei der ersten Variante ist die Erweiterung oder Einführung eines Link-Protokoll-Managers der Sicherungsschicht notwendig. Der Link-Protokoll-Manager ermöglicht beispielsweise die Steuerung des Datenflusses der Anwendungsdaten auf der Ebene der Sicherungsschicht oder die Aushandlung des verwendeten Schlüssels für die chiffrierte Datenübertragung. Durch die Definition neuer Kommandos kann die Übertragung der Zeitmesswerte ausgehandelt werden, als auch die Übertragung der Zeitmesswerte selbst erfolgen.

Der Link Protokoll Manager kann unter Umständen in seinem Kommandosatz so erweitert werden, dass er abwärtskompatibel zum bestehenden Kommandosatz bleibt. Dadurch ist der Einsatz von Senderempfängem, die nicht den erweiterten Link-Protokoll-Manager besitzen, zur reinen Datenübertragung ohne Entfernungsmessung weiterhin möglich.

Bei der Variante der Übermittlung die Zeitwerte als Daten der Anwendungsschicht, kann die Sicherungsschicht unverändert eingesetzt werden, allerdings muss eine Zuordnung der Nachrichtenrahmen der Sicherungsschicht zu den Zeitmesswerten der Bitübertragungsschicht bis zur Anwendungsschicht hin erhalten bleiben. Da sich nach dem ISO/OSI-Modell zwischen der Anwendungsschicht und der Sicherungsschicht zusätzliche Schichten befinden und in diesen Schichten eine Pufferung und Fragmentierung von Nachrichtenrahmen vorgenommen werden kann, ist die Zuordnung von Zeitmesswerten zu den Nachrichtenrahmen der Anwendungsschicht nicht immer eineindeutig. Dieses Problem kann dadurch umgangen werden, dass die Anwendungsschicht sich direkt auf der Sicherungsschicht befindet und damit eine eineindeutige Zuordnung erhalten bleibt Diese Möglichkeit ist vor allen sehr einfachen Systemen vorbehalten, die zum Beispiel keine Netzwerk- (ISO/OSI-3, Network Layer) und keine Transportschicht (ISO/OSI-4, Transport Layer) verwenden oder wo bestimmte Eigenschaften dieser Schichten in einer nicht ISO/OSI-konformen Sicherungsschicht mit integriert sind.

Alternativ kann die Zuordnung auch über sogenannte Service-Interfaces hergestellt werden, die eine direkte und zeitlich eineindeutige Verknüpfung zwischen der Anwendungsschicht und der Sicherungsschicht ermöglichen.

13.3 Nutzbarmachung von Nachrichtenprotokollen zum Schutz und zur Sicherung der Abstandsmessung

Zum Schutz und zur Sicherheit des Verfahrens können die Verschlüsselung als auch deren unterstützende Mechanismen (z. B. Schlüsselaushandlung) vorhandener Nachrichtenprotokolle verwendet werden. Dies umfasst den Schutz vor Abhören durch Verschlüsselung der Daten, die zur Entfernungsmessung mit Senderempfängern ausgetauscht werden, und den Schutz vor unautorisierter Nutzung der Entfernungsmessung. Die Autorisierung der Nutzung der Entfernungsmessung kann mit den Autorisierungs- und Authentifizierungsmechanismen der verwendeten Nachrichtenprotokolle erfolgen.

Die Verschlüsselung kann in den unterschiedlichen Schichten nach dem ISO/OSI-Modell durchgeführt werden. In der Praxis erfolgt die Verschlüsselung meist in der Sicherungsschicht, in der Darstellungsschicht oder in beiden Schichten gleichzeitig. In den meisten vorhandenen Nachrichtenprotokollen ist die Verschlüsselung in der Sicherungsschicht (z. B. IEEE 802.11, WEP) vorgesehen. In der Regel sind in den existierenden Standards sehr leistungsfähige Verschlüsselungsverfahren vorgesehen.

Die Autorisierungs- und Authentifizierungsmechanismen sind meist in der Darstellungsschicht oder Sicherungsschicht vorhanden. Sie können zusätzlich oder alternativ in jeder anderen Schicht des verwendeten Nachrichtenprotokolls als auch in der Anwendungsschicht vorhanden sein.

Der Einsatz der Verschlüsselung und der Autorisierungsmechanismen für die Entfernungsmessung benötigen in der Regel keine zusätzliche Bandbreite des Übertragungskanals. Die Einrichtungen müssen in praktischen Realisierungen nicht zusätzlich eingebaut werden, da sie für die Übertragung der Anwendungsdaten bereits vorhanden sind.

14. Ausführungsbeispiele von Senderempfängem

Anhand der nachfolgend beschriebenen Figuren werden verschiedene Ausführungsbeispiele für erfindungsgemäße Senderempfänger und deren Komponenten beschrieben.

14.1 Baustein mit externem Abstandsberechnungs- und Anwendungsmodul

In einer in Fig. 14 dargestellten ersten Ausführungsvariante eines erfindungsgemäßen Senderempfängers sind in einem integrierten Schaltungsbaustein 100 (Integrated Circuit Device), auch kurz als Baustein bezeichnet, mehre Module zusammengefasst und als integrierte Schaltung realisiert. Ein externes CALC/APP-Modul 102 ist mit dem integrierten Baustein 100 über logische Anschlüsse $T_{reply'}$, $T_{round}'$ und CTRL/DATA 104, 106 und 108 verbunden. Dabei können die logischen Anschlüsse in einer gemeinsamen seriellen oder parallelen Benutzerschnittstelle zusammengefasst sein.

Ein analoger Sender 110 (TX) moduliert die zu sendenden Signalimpulse auf eine Trägerfrequenz und gibt sie verstärkt auf eine externe Antenne 112. Ein analoger Empfänger 114 führt eine Verstärkung, Demodulation und Detektion von auf die Antenne 112 eingestrahlten Funkimpulsen durch.

Ein Basisband/MAC-Modul 116 (MAC = Medium Access Controller) führt eine Kodierung von zu sendenden und eine Dekodierung von empfangenen Datenrahmen durch, welche aus einer Sequenz von Funk-Signalimpulsen bestehen.

Das Basisband/MAC-Modul 116 prüft auch empfangene Datenrahmen. Durch die Prüfung der Datenrahmen im Basisband/MAC-Modul 116 wird die physikalische Zuordnung der empfangenen Impulse zu bestimmten Senderempfängem gesichert und ein Referenzpunkt für die Messung der Rundlaufzeitabstände und Generierung der Antwortzeit festgelegt, beispielsweise ein Impuls am Rahmenende. Weiterhin erfolgt die Prüfung an Hand von den durch die Impulse dargestellten Daten, von denen wiederum die Plausibilität an Hand von Signaturen geprüft, die Integrität der Daten mittels Prüfsummen gesichert und die Identifikation an Hand von eineindeutigen Senderempfängeradressen sichergestellt wird.

Optional werden zur sicheren Übermittlung der Protokoll- und Nutzdaten, einschließlich der auszutauschenden Informationen der Entfernungsmessung zwischen Senderempfängem, die Daten im Basisband/MAC-Modul 116 verschlüsselt bzw. entschlüsselt. Das Basisband/MAC-Modul 116 steuert zusätzlich den Zugriff auf den verwendeten Nachrichtenkanal nach einem vereinbarten Schema. Dabei können existierende Nachrichtenprotokolle eingesetzt werden, wie z.B. öffentliche oder private Standards.

Im Basisband/MAC-Modul 116 erfolgt nach erfolgreicher Prüfung eines empfangen ersten Datenrahmens weiterhin auch die Generierung eines zu sendenden zweiten Datenrahmens, der auch als Folgedatenrahmen bezeichnet wird. Dabei wird der Folgedatenrahmen nach einer genau definierten zeitlichen Verzögerung, dem Antwortzeitabstand, relativ zum Empfangszeitpunkt des ersten Datenrahmens gesendet. Der Antwortzeitabstand ist über einen am Anschluss $T_{reply'}$ 104 anliegenden Wert einstellbar und veränderbar.

Weiterhin wird der Rundlaufzeitabstand zwischen dem Sendezeitpunkt eines ersten Datenrahmens und dem Empfangszeitpunkt des Folgedatenrahmens gemessen und ein Wert für diese Zeit über den Anschluss $T_{round'}$ 106 ausgegeben.

Das externe CALC/APP-Modul 102 tauscht über den Anschluss CTRUDATA 108 Steuerinformationen mit dem Basisband/MAC-Controller 116 aus, überträgt über diesen Anschluss die zu sendenden und empfangenen Protokoll- und Nutzdaten und berechnet aus den Werten für die Rundlaufzeitabstände ($T_{round}'$) und die Antwortzeiten ($T_{reply}$) die Impulslaufzeiten, woraus wiederum die Entfernungen zwischen zwei kommunizierenden Senderempfängem berechnet werden können. In diesem Modul 102 können zusätzlich Anwendungen der drahtlosen Datenübertragung und Entfernungsmessung integriert sein.

14.2 Integriertes Abstandsberechnungsmodul

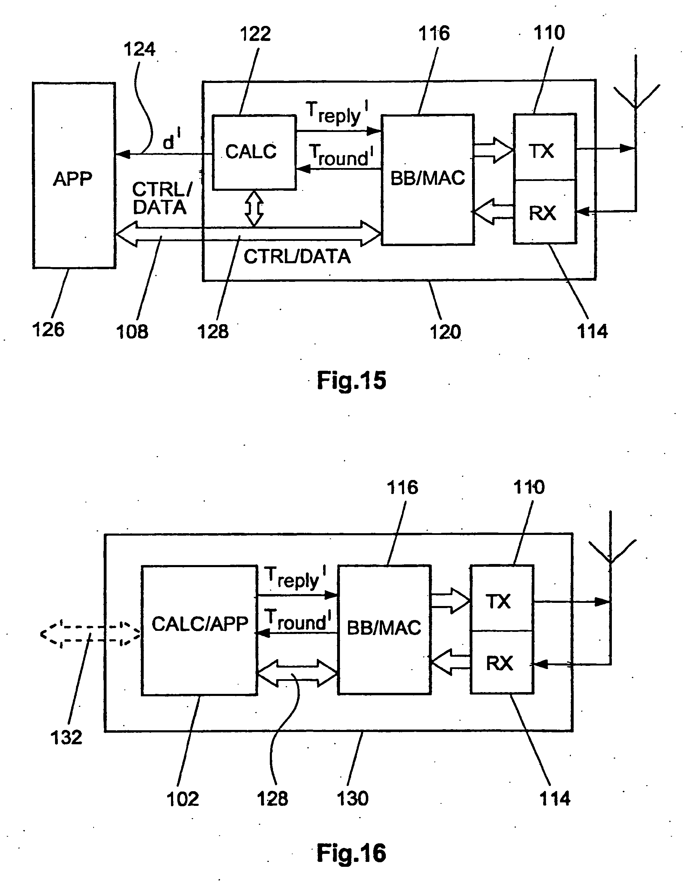

Fig. 15 zeigt ein weiteres Ausführungsbeispiel eines Senderempfängers, der sich durch ein integriertes Abstandsberechnungsmodul auszeichnet. Die nachfolgende Darstellung konzentriert sich auf Unterschiede des Senderempfängers der Fig. 15 gegenüber dem der Fig. 14. Dabei werden für gegenüber dem Ausführungsbeispiel der Fig. 14 funktionell gleichwertige Module gleiche Bezugszeichen verwendet.

In der in Fig. 15 dargestellten Ausführungsvariante ist in einem Baustein 120 als integrierte Schaltung zusätzlich zum Basisband/MAC-Modul 116 , dem analogen Sender 110 und dem analogen Empfänger 114 ein CALC-Modul 122 für die Berechnung der Entfernung vorgesehen. Im Unterschied zur ersten Variante ist die Abstandsberechnung in der vorliegenden Variante also in Baustein 120 integriert.

Die Funktion der analogen Sender- und Empfängermodule und des Basisband/MAC-Moduls ist identisch zur ersten Ausführungsvariante. Nachfolgend werden die Unterschiede zur ersten Variante näher erläutert.

Über einen Anschluss d' 124 werden im CALC-Modul 122 berechnete Werte für die Entfernung an ein externes Anwendungs-(APP-)Modul 126 übermittelt. Das APP-Modul 126 tauscht über den Anschluss CTRL/DATA 108 Steuerinformationen sowie Protokoll- und Nutzdaten mit dem Basisband/MAC-Modul 116 aus. Zusätzlich kann das APP-Modul 126 die Abstandsberechnung im CALC-Modul 122 über den Anschluss CTRUDATA 108 initiieren, oder die Entfernungsberechnung kann mit dem internen Basisband/MAC-Modul 116 über einen internen Bus CTRL/DATA 128 synchronisiert werden.

Im APP-Modul 126 können wiederum zusätzlich Anwendungen der drahtlosen Datenübertragung und Entfernungsmessung integriert sein. Auch in der vorliegenden zweiten Ausführungsvariante können die logischen Anschlüsse d' 124 und CTRL/DATA 108 in einer gemeinsamen seriellen oder parallelen Benutzerschnittstelle zusammengefasst sein.

14.3 Integriertes Abstandsberechnungs- und Anwendungsmodul

Fig. 16 zeigt ein weiteres Ausführungsbeispiel eines Senderempfängers, der sich durch ein integriertes Abstandsberechnungs- und Anwendungsmodul auszeichnet. Die nachfolgende Darstellung konzentriert sich auf Unterschiede des Senderempfängers der Fig. 16 gegenüber dem der Fig. 14 und 15. Dabei werden für gegenüber dem Ausführungsbeispielen der Fig. 14 und 15 funktionell gleichwertige Module gleiche Bezugszeichen verwendet.

In der Ausführungsvariante der Fig. 16 ist das CALC/APP-Modul 102 (Fig. 14) zusätzlich zum Basisband/MAC-Modul 120, dem analogen Sender 110 und dem analogen Empfänger 114 in einem Baustein als integrierte Schaltung 130 realisiert.

Optional ist ein externer Anschluss 132 für die Anwendungssteuerung und die Anwendungsdaten vorhanden (z. B. Mensch-Maschine-Benutzerschnittstelle, Anschluss für Sensoren und Aktoren). Die Funktion der analogen Sender- und Empfängermodule 110 und 114 und des Basisband/MAC-Moduls 116 ist auch in dieser Variante identisch zur ersten Ausführungsvariante. Die Funktion des integrierten CALC/APP-Moduls 102 ist ebenfalls identisch zur ersten Ausführungsvariante.

15. Implementierung der Messung des Rundlaufzeitabstandes und des Antwortzeitabstandes

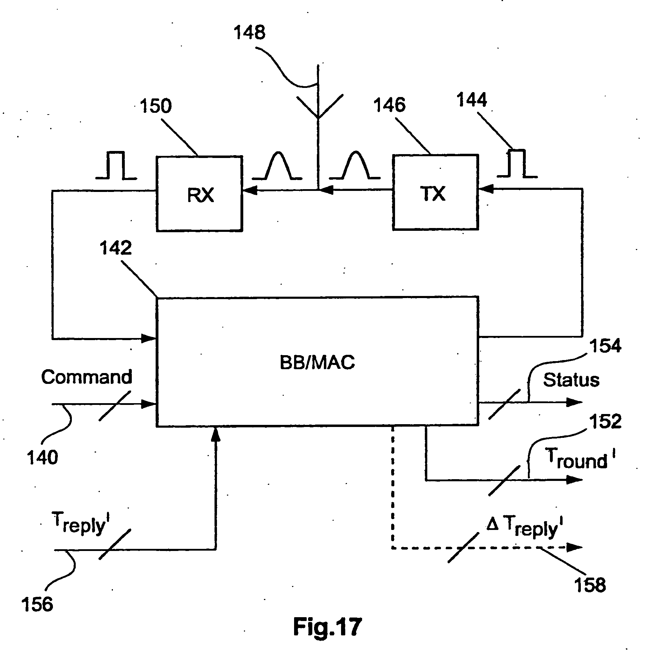

In einer in Fig. 17 dargestellten allgemeinen Ausführungsvariante eines Senderempfängers wird über einen Steuereingang Command 140 die Generierung eines Nachrichtenpakets durch Kodierung von Protokoll- und Nutzdaten im Basisband/MAC-Modul 142 zu einer Sequenz von digitalen Impulsen 144 initiiert. Im Sendermodul 146 werden die Impulse moduliert, verstärkt und über die Antenne 148 abgestrahlt

Ebenfalls über die Antenne 148 werden empfangene Impulse zum Empfängermodul 150 weitergeleitet, dort verstärkt, demoduliert und zum Zeitpunkt des stärksten Signals der Impulse detektiert.

Eine Sequenz von digitalen Impulsen 144 wird im Basisband/MAC-Modul 142 als Datenrahmen durch Dekodierung der Protokoll- und Nutzdaten detektiert. Dabei werden im Basisband/MAC-Modul 142 die Rundlaufzeitabstände von einem jeweiligen gesendeten ersten Datenrahmen zu einem jeweiligen empfangenen Folgedatenrahmen gemessen und über einen Anschluss $T_{round}$, 152 Werte für diese Zeit ausgegeben.

Ein Status-Steuerausgang 154 zeigt die Gültigkeit der Werte für den $T_{round}$-Anschluss 152 an.

Der Antwortzeitabstand von einem Empfangszeitpunkt eines ersten Datenrahmens bis zum Sendezeitpunkt eines Folgedatenrahmens wird über einen $T_{reply}$-Anschluss 156 als Wert festgelegt.

In einer speziellen Ausführungsvariante wird zusätzlich eine Zeitdifferenz zwischen einem tatsächlichen Antwortzeitabstand und einem eingestellten Antwortzeitabstand über den am $T_{reply}$-Anschluss 154 angelegten Wert gemessen. Diese Zeitdifferenz ist bei der speziellen Ausführung durch den Abtastfehler der detektierten Impulse zwischen Empfängermodul 150 und Basisband/MAC-Modul 142 bedingt Werte für die Zeitdifferenzen werden an einem in dieser speziellen Ausführungsvariante zusätzlich vorgesehenen $\Delta T_{reply}$'-Anschluss 158 ausgegeben und die Gültigkeit wird über den Status-Steuerausgang 154 angezeigt.

16. Implementierung einer Steuerung der Rundlaufzeitmessung

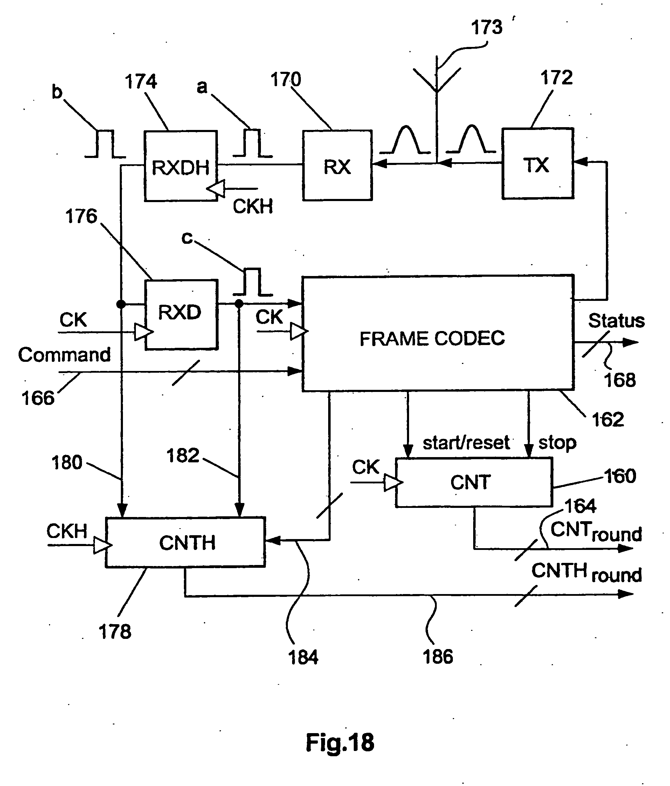

Fig. 18 zeigt in einem vereinfachten Blockschaltbild einen Senderempfänger, der eine Messung des Rundlaufzeitabstandes implementiert. Der Senderzweig des Senderempfängers der Fig. 18 umfasst ein Sendermodul (TX) 172, das eingangsseitig mit einem Modul FRAME-CODEC 162 und ausgangsseitig mit einer Antenne 173 verbunden ist. Das Modul FRAME-CODEC 162 ist Bestandteil des oben beschriebenen Basisband/MAC-Moduls 116. Der Empfängerzweig des Senderempfängers der Fig. 18 umfasst ein eingangsseitig mit der Antenne 173 verbundenes analoges Empfangsmodul (RX) 170, dem im Signalfluss digitale Module RXDH 174 und RXD 176 nachgeschaltet sind. Das Modul RXD 176 ist ausgangsseitig mit einem Eingang des Moduls FRAME-CODEC 162 verbunden.

Nachfolgend wird die Funktionsweise des Senderempfängers der Fig. 18 bei der Steuerung einer Rundlaufzeitmessung näher beschrieben. Hier erfolgt die Messung des Rundlauflaufzeitabstandes mit einem Zählermodul 160, das auch als CNT-Modul 160 bezeichnet wird. Das CNT-Modul 160 ist ebenfalls Bestandteil des oben beschriebenen Basisband/MAC-Moduls 116.

Das Zählermodul 160 wird beim Aussenden eines ersten Nachrichtentrahmens zum Beginn eines Signalrundlaufs vom FRAME-CODEC-Modul 162 zurückgesetzt und gestartet. Das FRAME-CODEC-Modul 162 führt ebenfalls die Kodierung der Datenrahmen zu einer Sequenz von digitalen Impulsen durch.

Nach Aussenden des Datenrahmens erwartet das FRAME-CODEC-Modul 162 einen empfängerseitig einen auch als Folgedatenrahmen bezeichneten zweiten Datenrahmen in Form einer Sequenz von digitalen Impulsen. Das Zählermodul 160 wird nach der Detektion eines Folgedatenrahmens gestoppt und der beim Stoppen erreichte Zählwert liegt danach unverändert an einem CNTround-Anschluss 164 des Zählermoduls 160 an.

Während oder nach dem Empfang des Folgedatenrahmens erfolgt die Dekodierung und Prüfung des Folgedatenrahmens durch das FRAME-CODEC-Modul 162.

Das Modul FRAME-CODEC 162 detektiert dabei sowohl für das Rücksetzen und Starten als auch das Stoppen des Zählermoduls 160 einen Referenzzeitpunkt anhand eines vorbestimmten Referenzpunktes im Datenrahmen. Der Zeitpunkt, an dem die Rundlaufzeit-Messung beginnt wird von einem Referenzpunkt in Form eines bestimmten Impulses oder einer bestimmten Position im Nachrichtenrahmen abgeleitet. Dies kann eine beliebige, aber in allen Nachrichtenrahmen einheitliche Position sein. Es bietet sich an, den Detektionszeitpunkt der Rahmensynchronisation zu verwenden, der vom FRAME-CODEC-Modul 162 erzeugt wird. Dieser Referenzpunkt ist in allen Nachrichtenrahmen verfügbar und eineindeutig, sowohl beim Senden, als auch beim Empfang. Daher wird dieser Referenzpunkt auch zum Beenden der Rundlaufzeitmessung verwendet.

Die Synchronisation mit der Entfernungsberechnungseinheit erfolgt über die Steueranschlüsse Command 166 und Status 168. Über den Command-Steuer-anschluss 166 wird dabei eine neue Rundlaufzeitmessung aktiviert, und der Status-Steueranschluss 168 signalisiert das Vorhandensein und die Gültigkeit des Folgedatenrahmens und eines neuen Messwertes für einen Rundlaufzeitabstand CNTround.

In der vorliegenden Realisierung werden die Module FRAME-CODEC 162 und CNT 160 mit einem gemeinsamen Takt CK versorgt und arbeiten somit synchron.

Nachfolgend wird näher erläutert, wie mit der beschriebenen Schaltung die Auflösung der Messung des Rundlaufzeitabstandes durch Messung und Berücksichtigung eines Abtastfehlers verbessert wird. Ein vom analogen Empfangsmodul (RX) 170 detektierter Impuls (a) wird im RXDH-Modul 174 mit einem Takt CKH abgetastet. Der Abtastfehler entspricht im statistischen Mittel der halben Periodendauer des an CKH anliegenden Takts. Durch eine Abtastung des detektierten und abgetasteten Impulses (b) im RXD-Modul 176 entsteht ein weiterer, allerdings wesentlich größerer zeitlicher Fehler, da der Takt CK eine wesentlich größere Periodendauer als der Takt CKH besitzt. Durch Messung und Berücksichtigung dieser Zeit wird eine bessere Auflösung des Rundlaufzeitabstandes erreicht. In der Praxis sind Taktfrequenzen von ca. 100 -200 MHz mit einer Genauigkeit von $\pm 200$ ppm ausreichend, da diese Präzision aufgrund des speziellen Mehrwegeverfahren der vorliegenden Erfindung genügt. Die Auflösung kann durch oben beschriebene Dithering- und Averagingverfahren weiter erhöht werden.

Es gibt bei der Realisierung der Messung des Abtastfehlers zwei Ausführungsvarianten. In einer ersten Ausführungsvariante wird ein zweites Zählermodul (CNTH) 178 durch einen mit dem Takt CKH abgetasteten Impuls (b) über einen Anschluss 180 gestartet. Der mit dem Takt CK abgetastete und verzögerte Empfangsimpuls (c) bewirkt das Anhalten des zweiten Zählermoduls (CNTH) 178 über einen Anschluss 182, dessen Zählwert nach dem Anhalten un-verändert an einem $CNTH_{\Delta round}$ -Anschluss 184 anliegt.

In einer zweiten alternativen Ausführungsvariante wird das zweite Zählermodul (CNTH) 178 durch den abgetasteten und verzögerten Empfangsimpuls (c) über einen Anschluss 182 gestartet. Ein nachfolgender detektierter and mit dem Takt CKH abgetasteter Impuls (b) bewirkt das Anhalten des zweiten -Zählermoduls (CNTH) 178 über einen Anschluss 180, dessen Zählwert nach dem Anhalten ebenfalls unverändert an einem $CNTH_{\Delta round}$-Anschluss 186 anliegt.

Das Modul FRAME-CODEC 162 kann dabei die Messung des Abtastfehlers für einen bestimmten Impuls oder mehrere Impulse eines Datenrahmens oder eine bestimmte Position oder in einem bestimmten Zeitbereich des Datenrahmens über eine Steuerverbindung 184 aktivieren. Die Steuerverbindung 184 erlaubt zusätzlich das Rücksetzen des zweiten Zählermoduls 178.

Die Synchronisation mit der Entfernungsberechnungseinheit erfolgt dabei mit den Steueranschlüssen Command 166 und Status 168. Zusätzlich signalisiert der Status-Anschluss 168 das Vorhandensein und die Gültigkeit eines neuen Messwertes für den Abtastfehler $CNTH_{\Delta round}$ der Rundlaufzeit $T_{round}$. Die Berechnung der Rundlaufzeit $T_{round}$ erfolgt aus den Ausgabewerten, $CNTH_{\Delta round}$ und $CNT_{round}$, der Zählermodule und den Perioden der Taktfrequenzen an CK und CKH, wobei zusätzlichen schaltungsbedingten Verzögerungen berücksichtigt werden müssen.

17. Implementierung einer Steuerung zur Generierung des Antwortzeitabstandes

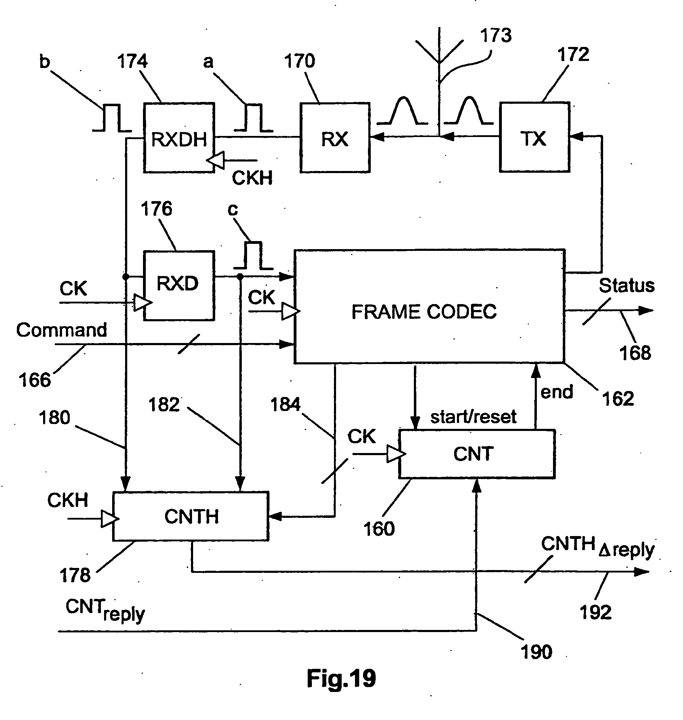

Fig. 19 zeigt einen Senderempfänger, der eine Steuerung zur Generierung des Antwortzeitabstandes implementiert. In seiner Struktur gleicht der Senderempfänger der Fig. 19 in vielen Elementen dem der Figur 18. Daher werden hier für gegenüber Fig. 18 gleiche Module gleiche Bezugszeichen verwendet.

Fig. 19 zeigt jedoch, wie nachfolgend näher erläutert wird, einige für die Steuerung der Generierung des Antwortzeitabstandes relevante Ein- und Ausgänge der Module des Senderempfängers, die in Fig. 18 nicht dargestellt sind. Umgekehrt zeigt Fig. 18 einige für die Steuerung der Rundlaufzeitmessung relevante Ein- und Ausgänge der Module des Senderempfängers, die in der vorliegenden Fig. 19 nicht dargestellt sind. Mit den jeweiligen Ein- und Ausgängen sind in den jeweiligen Modulen implementierte Funktionen verknüpft, die in der vorstehenden Beschreibung der Fig. 18 und in der nachfolgenden Beschreibung der Fig. 19 erläutert sind.

Da sich die Rundlaufzeitmessung und Antwortzeitgenerierung zeitlich nicht überlappen, können die Implementierungen der Fig. 18 und 19 zu einer gemeinsamen Schaltung kombiniert werden. Ein bevorzugtes Ausführungsbeispiel eines Senderempfängers implementiert daher eine Kombination der beiden Ausführungsbeispiele der Fig. 18 und 19 miteinander.

Beim Senderempfänger der Fig. 19 erfolgt die Generierung der Antwortzeit mit dem CNT- oder Zählermodul 160. Die Module CNT 160 und FRAME-CODEC 162 sind auch hier Bestandteil des oben schon erläuterten Basisband/MAC-Moduls 116.

Das Zählermodul 160 wird beim Empfang eines Anfragedatenrahmens zum Beginn eines Signalrundlaufs vom FRAME-CODEC-Modul 162 zurückgesetzt und gestartet. Dabei übernimmt das FRAME-CODEC-Modul 162 während oder nach dem Empfang die Dekodierung und Prüfung des aus einer Sequenz von digitalen Impulsen bestehenden Datenrahmens.

Das Zählermodul 160 wird nach Ablauf bzw. Erreichen eines über einen Anschluß $CNT_{reply}$ 190 angelegten Wertes für den Antwortzeitabstand gestoppt, und es erfolgt das Aussenden eines Antwortdatenrahmens, wobei das FRAME-CODEC-Modul 162 die Kodierung des Datenrahmens zu einer Sequenz von digitalen Impulsen übernimmt.

Das Modul FRAME-CODEC 162 detektiert für das Rücksetzen und Starten des Zählermoduls 160 nach Empfang eines Anfragedatenrahmens im Rahmen eines Signalrundlaufes von einem anderen Senderempfänger einen vorbestimmten Referenzpunkte im jeweiligen Datenrahmen. Dabei ist, wie bereits beschrieben, ein einheitlicher Referenzpunkt in den Datenrahmen festgelegt, an dem die Antwortzeit-Generierung beginnt

Wird, wie bereits beschrieben, der Zeitpunkt der Rahmensynchronisation für das Starten des Zählermoduls 160 verwendet, muss der Wert $CNT_{reply}$ für den Antwortzeitabstand entsprechend verkürzt werden, damit das Senden des Folgedatenrahmens rechtzeitig beginnen kann.

Die Dekodierung und Prüfung des empfangenen Anfragedatenrahmens muss in jedem Fall vor Beginn des Sendens des Folgedatenrahmens abgeschlossen sein. Dies wird durch eine angemessene Dimensionierung der Antwortzeit und den Einsatz entsprechend schneller Dekodier- und Prüfschaltungen gewährleistet. War die Prüfung erfolgreich, und signalisiert das Zählermodul 160 dem FRAME-CODEC-Modul 162 den Ablauf des Antwortzeitabstandes, wird ein Folgedatenrahmen als Sequenz von digitalen Impulsen generiert.

Die Synchronisation mit der Entfernungsberechnungseinheit erfolgt über die Steueranschlüsse Command 166 und Status 168. Über den Command-Steueranschluss 166 wird der Empfang eines Datenrahmens erlaubt und die Generierung von Folgedatenrahmen aktiviert. Der Status-Steueranschluss 168 signalisiert der Entfernungsberechnungseinheit, dass ein Datenrahmen empfangen wurde und dass, bei dessen erfolgreicher Prüfung, ein Folgedatenrahmen gesendet wurde.

In der vorliegenden Realisierung werden das Modul FRAME-CODEC 162 und das Zählermodul 160 von einem gemeinsamen Taktsignal CK versorgt und arbeiten somit synchron.

Nachfolgend wird näher erläutert, wie mit der beschriebenen Schaltung die Auflösung der Generierung des Antwortzeitabstandes durch Messung und Berücksichtigung eines Abtastfehlers verbessert wird. Ein von einem analogen Empfangsmodul (RX) 170 detektierter Impuls (a) wird in einem RXDH-Modul 174 mit einem Takt CKH abgetastet Der Abtastfehler entspricht im statistischen Mittel der halben Periodendauer des an CKH anliegenden Takts. Durch eine Abtastung des detektierten und abgetasteten Impulses (b) im RXD-Modul 176 entsteht ein weiterer, allerdings wesentlich größerer zeitlicher Fehler, da der Takt CK eine wesentlich größere Periodendauer als der Takt CKH besitzt. Durch Messung und Berücksichtigung dieser Zeit, wird eine bessere Auflösung des tatsächlichen Antwortzeitabstandes erreicht. In der Praxis sind Taktfrequenzen von ca. 100 - 200 MHz mit einer Genauigkeit von $\pm$ 200 ppm ausreichend, da diese Präzision aufgrund des speziellen Mehrwegeverfahren der vorliegenden Erfindung genügt. Die Auflösung kann durch oben beschriebene Dithering- und Averagingverfahren weiter erhöht werden

Wie im Ausführungsbeispiel der Fig. 18 gibt es bei der Realisierung der Messung des Abtastfehlers zwei Ausführungsvarianten. In einer ersten Ausführungsvariante wird ein zweites Zählermodul (CNTH) 178 durch einen mit dem Takt CKH abgetasteten Impuls (b) über einen Anschluss 180 gestartet. Der mit dem Takt CK abgetastete und verzögerte Empfangsimpuls (c) bewirkt das Anhalten des zweiten Zählermoduls (CNTH) 178 über einen Anschluss 182, dessen Zählwert nach dem Anhalten unverändert an einem $CNTH_{\Delta reply}$ -Anschluss 184 anliegt

In einer zweiten alternativen Ausführungsvariante wird das zweite Zählermodul (CNTH) 178 durch den abgetasteten und verzögerten Empfangsimpuls (c) über einen Anschluss 182 gestartet. Ein nachfolgender detektierter and mit dem Takt CKH abgetasteter Impuls (b) bewirkt das Anhalten des zweiten Zählermoduls (CNTH) 178 über einen Anschluss 180, dessen Zählwert nach dem Anhalten ebenfalls unverändert an einem $CNTH_{\Delta reply}$ -Anschluss 186 anliegt

Das Modul FRAME-CODEC 162 kann dabei die Messung des Abtastfehlers für einen bestimmten Impuls oder mehrere Impulse eines Datenrahmens oder eine bestimmte Position oder in einem bestimmten Zeitbereich des Datenrahmens über eine Steuerverbindung 184 aktivieren. Die Steuerverbindung 184 erlaubt zusätzlich das Rücksetzen des zweiten Zählermoduls 178.

Die Synchronisation mit der Entfernungsberechnungseinheit erfolgt dabei bei der Antwortzeitgenerierung mit den Steueranschlüssen Command 166 und Status 168. Zusätzlich signalisiert der Status-Anschluss 168 das Vorhandensein und die Gültigkeit eines neuen Messwertes für den Abtastfehler $CNTH_{\Delta reply}$ der Antwortzeit $T_{reply}$. Die Berechnung der Antwortzeit $T_{reply}$ erfolgt aus dem Ausgabewert $CNTH_{\Delta reply}$ des Zählermoduls, dem angelegten Wert für die Antwortzeit $CNT_{reply}$ und den Perioden der Taktfrequenzen an CK und CKH, wobei zusätzlichen schaltungsbedingten Verzögerungen berücksichtigt werden müssen.

18. Implementierung des Averaging

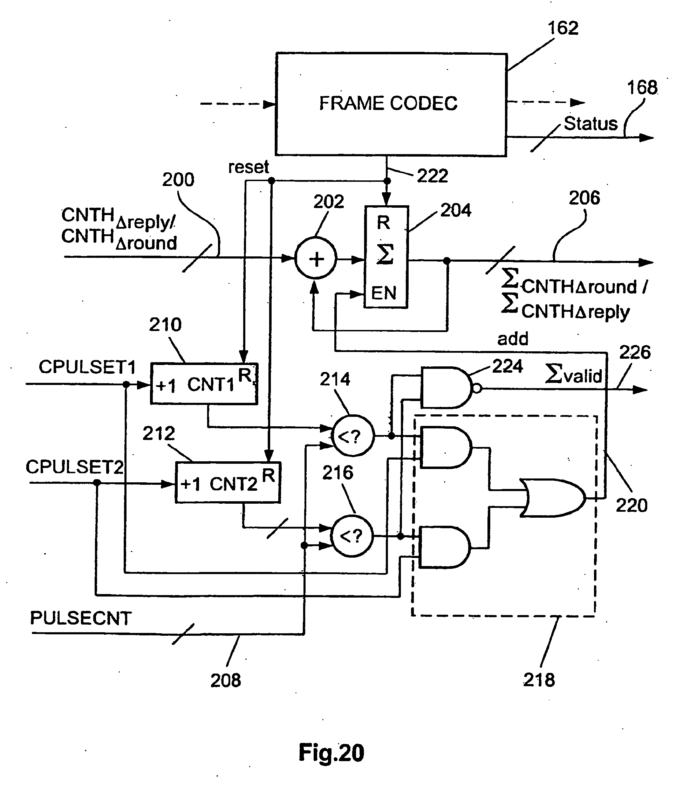

Fig. 20 zeigt ein vereinfachtes Blockdiagramm eines Ausführungsbeispiel eines Senderempfängers mit implementiertem Averaging. In der Figur sind nur die für das Averaging wesentlichen Module dargestellt.

Ein Averaging wird grundsätzlich durchgeführt, indem zunächst mehrere mit hoher Auflösung gemessene zeitliche Fehler addiert werden, die durch die Abtastung empfangener Impulse eines Datenrahmens im FRAME-CODEC-Modul 162 entstehen, und anschließend durch die Anzahl der addierten Fehlerwerte geteilt wird. Der so erhaltene Fehler-Mittelwert wird für eine präzise Messung des Rundlaufzeitabstandes und für eine exakte Bestimmung des Antwortzeitabstandes verwendet.

Bei der nachfolgenden Beschreibung wird davon ausgegangen, dass die übertragenen Datenrahmen komplementäre Chirpimpulse enthalten. Das Averaging wird für die zwei komplementären Impulstypen paritätisch ausgeführt, das heißt, es wird eine gleiche Anzahl der jeweiligen Impulstypen berücksichtigt. Dabei kann die Anzahl der zu addierenden zeitlichen Fehler vorgegeben werden. Die gesamte Schaltung ist nicht sehr zeitkritisch und kann damit kostengünstig realisiert werden, da die Addition lediglich mit der Impulsfrequenz (max. 10 MHz) durchgeführt werden muss.

Für mit hoher Auflösung gemessene zeitlichen Fehler detektierter Impulse eines empfangenen Datenrahmens werden die Zählerausgaben $CNTH_{\Delta round}$ 192 der Rundlaufzeitmessung (vgl. Fig. 18) oder $CNTH_{\Delta reply}$ 186 der Antwortzeitgenerierung (vgl. Fig. 19) verwendet. Je nach Situation wird entweder der Ausgang 192 oder der Ausgang 186 an einen ersten Eingang 200 eines Addieres 202 geleitet. Das Ergebnis der Addition wird in ein Summenregister 204 geschrieben und ist an einem $\Sigma_{CNTH\Delta round}/\Sigma_{CNTH\Delta reply}$-Ausgang 206 als Wert auslesbar.

Die Verfügbarkeit des im Summenregister 204 enthaltenen Wertes wird vom FRAME-CODEC-Modul 162 über dessen Status-Anschluss 168 angezeigt. Dafür kann die Statusinformation der Rundlaufzeitmessung und Antwortzeitgenerierung verwendet werden.

Die Anzahl der zu addierenden Werte wird über einen PULSECNT-Anschluss 208 vorgegeben. Die Anzahl der bereits berücksichtigten Werte wird über Zähler CNT1 210 und CNT2 212 erfasst und mit der zu berücksichtigenden Anzahl gemäß dem am PULSECNT-Anschluss anliegenden Wert in zwei Vergleichern 214 und 216 verglichen. Ist die erforderliche Anzahl noch nicht erreicht, bilden Signale CPULSET1 und CPULSET2 über eine Signallogik 218 ein an deren Ausgang 220 anliegendes Steuersignal (add) zum Aufsummieren neuer Zählerausgaben $CNTH_{\Delta round}$ bzw. $CNTH_{\Delta reply}$ der Rundlaufzeitmessung bzw. Antwortzeitabstandgenerierung.

Die Signale CPULSET1 (11) und CPULSET2 (12) entsprechen jeweils zwei detektierten unterschiedlichen, komplementären Impulsen und werden zeitlich verzögert, da die Zählerausgaben $CNTH_{\Delta round}$ 192 und $CNTH_{\Delta reply}$ 186 erst eine gewisse Zeit nach der Detektion der Impulse zur Verfügung stehen.

Die Signale CPULSET1 und CPULSET2 schließen sich gegenseitig aus, treten also nicht gleichzeitig auf. Da die Summenbildung für jeden Datenrahmen neu erfolgt, muss das FRAME-CODEC-Modul 162 die das Summenregister 204 und die Zähler 210 (CNT1) und 212 (CNT2) mit Beginn eines neuen Datenrahmens über einen Steuerausgang 222 mit einem Steuersignal (reset) zurücksetzen.

Eine Summenbildung über die Empfangszeitpunkte einer gleichen Anzahl der jeweiligen Impulstypen erfolgt durch die Berücksichtigung der jeweils identischen Anzahl der Impulse über die Zähler CNT1 und CNT2. Ob die erforderliche gleiche Anzahl komplementärer Impulstypen berücksichtigt wurde, wird mit Hilfe eines NAND-Gatters 224, an dessen Eingänge die Ausgänge der beiden Vergleicher 214 und 216 geleitet sind, über einen $\Sigma$valid-Anschluss 226 angezeigt.

Für die Berechnung der Rundlauf- und Antwortzeitabstände müssen die berechneten Summen am $\Sigma_{CNTH\Delta round}/\Sigma_{CNTH\Delta reply}$-Ausgang 206 vorher durch die Anzahl der addierten Werte geteilt werden. Die entsprechenden Berechnungsmittel sind in Fig. 20 nicht dargestellt. Sie können als Verarbeitungsmodul im Senderempfänger oder als externes Modul, z.B. in Form eines Softwaremodul eines an den Senderempfänger extern angeschlossenen Microcontrollers bereitgestellt sein. Die Berechnung des gemittelten Empfangszeitpunktes der Nachrichtenrahmen, die der Rundlauf- und Antwortzeit zu Grunde gelegt werden, erfolgt gemäß den nachstehenden Formeln:

$$\text{Formel 44: } \Delta T_{roundAVG} = \frac{1}{2 \cdot n_{PULSECNT} \cdot f_{CKH2}} \Sigma_{CNTH\Delta round}$$

$$\text{Formel 45: } \Delta T_{replyAVG} = \frac{1}{2 \cdot n_{PULSECNT} \cdot f_{CKH2}} \Sigma_{CNTH\Delta reply}$$

19. Berechnung der Rundlauf- und Antwortzeitabstände

Unter Bezugnahme auf die Fig. 18 bis 20 wird nachfolgend erläutert, wie Rundlauf- und Antwortzeitabstände berechnet werden.

Die Berechnung der Rundlaufzeitabstände erfolgt mit Hilfe der Zählerausgabe $CNT_{round}$ am Ausgang 164 des Zählers 160 und des gemittelten Abtastfehlers der Rundlaufzeit $\Delta T_{roundAVG}$, wobei schaltungsbedingte Verzögerungen der Sender- und Empfängerschaltungen, $T_{TX}$ und $T_{RX}$, zusätzlich berücksichtigt werden müssen. Abhängig von der verwendeten Realisierungsvariante muß der gemittelte Abtastfehler der Rundlaufzeit $\Delta T_{roundAVG}$ gemäß der folgenden Formel entweder addiert oder abgezogen werden.

$$\text{Formel 46: } T_{round} = \frac{1}{f_{CK}} CNT_{round} + k \Delta T_{roundAVG} + T_{TX} + T_{RX}; \quad k = -1,1$$

Die Berechnung der Antwortzeitabstände erfolgt mit dem angelegten Wert für $CNT_{reply}$ am Anschluss 190 und dem gemittelten Abtastfehler der Antwortzeit $\Delta T_{replyAVG}$, wobei die schaltungsbedingten Verzögerungen der Sender- und Empfängerschaltungen, $T_{TX}$ und $T_{RX}$ zusätzlich berücksichtigt werden müssen. Abhängig von der verwendeten Realisierungsvariante muss der gemittelte Abtastfehler der Antwortzeit $\Delta T_{replyAVG}$ addiert oder abgezogen werden.

$$\text{Formel 47: } T_{reply} = \frac{1}{f_{CK}} CNT_{reply} + k \Delta T_{replyAVG} + T_{TX} + T_{RX}; \quad k = -1,1$$

**Patentansprüche**

1. Verfahren zur Bestimmung des räumlichen Abstandes zwischen zwei Senderempfängern (A, B) innerhalb eines Abstandsbereiches der Größenordnung von 10 km,

   - bei dem beide Senderempfänger jeweils mindestens einen Signalrundlauf initiieren, wobei ein Signalrundlauf die folgenden Schritte umfasst:

      a) Senden mindestens eines Anfragedatenrahmens (30, 42, 52), der eine Sequenz von mindestens zwei Signalimpulsen mit vorbestimmtem Impulszeitabstand enthält, von einem den Signalrundlauf initiierenden ersten Senderempfänger zu einem zweiten Senderempfänger an einem Anfrage-Sendezeitpunkt ($T_{TA1}$, $T_{TB2}$),
      b) Empfangen des Anfragedatenrahmens (30, 40, 52) beim zweiten Senderempfänger an einem Anfrage-Empfangszeitpunkt ($T_{RB1}$, $T_{RA2}$),
      c) Dekodieren und Prüfen des empfangenen Anfragedatenrahmens und danach, bei Erfolg, Senden eines Antwortdatenrahmens (32, 44, 54), der eine Sequenz von mindestens zwei Signalimpulsen mit vorbestimmtem Impulszeitabstand enthält, vom zweiten Senderempfänger zum ersten Senderempfänger an einem Antwort-Sendezeitpunkt ($T_{TB1}$, $T_{TA2}$), der einen jeweiligen Antwortzeitabstand ($T_{replyB1}$, $T_{replyA2}$) vom Anfrage-Empfangszeitpunkt ($T_{RB1}$, $T_{RA2}$) hat, und Erfassen des jeweiligen Antwortzeitabstandes,
      d) Empfangen, Dekodieren und Prüfen des Antwortdatenrahmens (32, 44, 54) beim den Signalrundlauf initiierenden ersten Senderempfänger (A) und Erfassen eines dem Empfang des Antwortdatenrahmens zugeordneten Antwort-Empfangszeitpunktes ($T_{RA1}$, $T_{RB2}$) relativ zum Anfrage-Sendezeitpunkt ($T_{TA1}$, $T_{TB2}$),

   - bei dem eine Auswertung durchgeführt wird, die die folgenden Schritte umfasst:

      e) Ermitteln eines Rundlaufzeitabstandes ($T_{roundA1}$, $T_{roundB2}$) zwischen dem jeweiligen Anfrage-Sendezeitpunkt ($T_{TA1}$, $T_{TB2}$) und dem jeweiligen Antwort-Empfangszeitpunkt ($T_{RA1}$, $T_{RB2}$) für jeden Signalrundlauf, wobei dieser Schritt jederzeit nach dem betreffenden Signalrundlauf durchgeführt werden kann,
      f) Ermitteln einer Signallaufzeit ($T_{prop}$) zwischen den zwei Senderempfängern (A, B) anhand der ermittelten Rundlaufzeitabstände ($T_{roundA1}$, $T_{roundB2}$) und der Antwortzeitabstände ($T_{replyB1}$, $T_{replyA2}$) und
      g) Ermitteln des räumlichen Abstandes zwischen dem ersten und zweiten Senderempfänger durch Multi-plikation der Signallaufzeit ($T_{prop}$) mit einer vorbekannten Ausbreitungsgeschwindigkeit der Signalimpulse,

   - und bei dem die Signalrundläufe so durchgeführt werden, dass die Antwortzeitabstände ($T_{replyA2}$, $T_{replyB1}$)

entweder identisch sind oder eine Differenz, im Falle der Durchführung mehr als eines von jedem Senderempfänger initiierten Signalrundlaufes eine mittlere Differenz aufweisen, deren Betrag maximal 200 Mikrosekunden ist, wobei

- die jeweiligen Anfragedatenrahmen und Antwortdatenrahmen Protokollvorschriften eines Nachrichtenprotokolls entsprechen und Protokoll- und Nutzdaten enthalten.

2. Verfahren nach Anspruch 1, bei dem die Signalrundläufe so durchgeführt werden, dass die Antwortzeitabstände ($T_{replyA2}$, $T_{reokyB1}$) entweder identisch sind oder eine Differenz, im Falle der Durchführung mehr als eines von jedem Senderempfänger initiierten Signalrundlaufes eine mittlere Differenz aufweisen, deren Betrag maximal 20 Mikrosekunden ist.

3. Verfahren nach Anspruch 1 oder 2, bei dem der zweite Senderempfänger (B) einen Signalrundlauf erst initiiert, nachdem er den Antwortdatenrahmen an den ersten Senderempfänger (A) gesandt hat.

4. Verfahren nach Anspruch 1 oder 2, bei dem der zweite Senderempfänger (B) mit dem Senden des Antwortdatenrahmens zugleich einen Signalrundlauf initiiert, wobei der Antwortdatenrahmen, der einem vom ersten Senderempfänger initiierten ersten Signalrundlauf zugeordnet ist, zugleich den Anfragedatenrahmen eines vom zweiten Senderempfänger initiierten zweiten Signalrundlaufs bildet.

5. Verfahren nach Anspruch einem der vorstehenden Ansprüche, bei dem beide Senderempfänger (A, B) genau einen Signalrundlauf initiieren und die Signallaufzeit $T_{prop}$ gemäß der Formel

$$T_{prop} = \frac{T_{roundA1} - T_{replyB1} + T_{roundB2} - T_{replyA2}}{4}$$

bestimmt wird.

6. Verfahren nach Anspruch 3, bei dem

- jeder Senderempfänger mindestens zwei Signalrundläufe initiiert, bis der Abstand zwischen dem ersten und zweiten Senderempfänger von einer Anzahl Anfrage- und Antwortdatenrahmen durchlaufen worden ist, die mindestens acht und ein Vielfaches von vier ist,
- zu den vom vom ersten Senderempfänger initiierten Signalrundläufen zusätzliche Rundlaufzeitabstände $T_{roundAi}$ mit i= 3, 5, 7,.., (n-2) von $T_{roundA3}$ bis $T_{roundA(n-2)}$ ermittelt werden, wobei n>3 eine ungerade Zahl ist, und
- zu den vom zweiten Senderempfänger initiierten Signalrundläufen zusätzliche Rundlaufzeitabstände $T_{roundBk}$ mit k= 4, 6, 8,.., (n-1) von $T_{roundB4}$ bis $T_{roundB(n-1)}$ ermittelt werden,
- wobei Antwortzeitabstände $T_{replyAk}$, k= 2, 4, 6, 8, .., (n-1) von $T_{replyA2}$ bis $T_{replyA(n-1)}$), und $T_{replyBi}$, i = 1, 3, 5, 7, ..,(n-2) von $T_{replyB1}$ bis $T_{replyB(n-2)}$ auftreten, die eine mittlere Differenz gemäß der Formel

$$\Delta T_{\mathrm{Re}\, plyAVG} = \frac{T_{replyA2} - T_{replyB1} + .. + T_{replyA(n-1)} - T_{replyB(n-2)}}{\frac{n-1}{2}}$$

aufweisen, deren Betrag maximal 20 Mikrosekunden ist.

7. Verfahren nach Anspruch 4, bei dem

- jeder Senderempfänger (A, B) mindestens zwei Signalrundläufe initiiert, bis der Abstand zwischen dem ersten und zweiten Senderempfänger von einer ungeraden Anzahl n>3 Anfrage- und Antwortdatenrahmen durchlaufen worden ist, wobei alle zusätzlichen Rundlaufzeitabstände ermittelt und alle zusätzlichen Antwortzeitabstände erfasst werden,
- nach wiederholter Durchführung der ersten Signalrundlauf-Schrittfolge zusätzliche Rundlaufzeitabstände $T_{roundAi}$ mit i= 3, 5, 7,...,(n-2), von $T_{roundA3}$ bis $T_{roundA(n-2)}$ ermittelt werden und
- nach wiederholter Durchführung der zweiten Signalrundlauf-Schrittfolge zusätzliche Rundlaufzeitabstände $T_{roundBk}$, mit k = 4, 6, 8,..., (n-1), von $T_{roundB4}$ bis $T_{roundB(n-1)}$ ermittelt werden,
- wobei Antwortzeitabstände $T_{eplyAk}$, k= 2, 4, 6, 8,...,(n-1) von $T_{replyA2}$ bis $T_{replyA(n-1)}$, $T_{replyBi}$, i= 1, 3, 5, 7,..., (n-2) von $T_{replyB1}$ bis $T_{replyB(n-2)}$ auftreten, die eine mittlere Differenz gemäß der Formel

$$\Delta T_{\text{Re}plyAVG} = \frac{T_{replyA2} - T_{replyB1} + .. + T_{replyA(n-1)} - T_{replyB(n-2)}}{\frac{n-1}{2}}$$

aufweisen, deren Betrag maximal 20 Mikrosekunden ist.

**8.** Verfahren nach Anspruch 6 oder 7, bei dem die Signallaufzeit Tprop gemäß der Formel

$$T_{prop} = \frac{T_{roundA1} - T_{replyB1} + T_{roundB2} - T_{replyA2} + .. + T_{roundA(n-2)} - T_{replyB(n-2)} + T_{roundB(n-1)} - T_{replyA(n-1)}}{2(n-1)}$$

$$n = 2k+1, k \in N > 1$$

ermittelt wird.

**9.** Verfahren nach Anspruch 1 oder 2, bei dem im Rahmen der Auswertung entweder nur der erste oder nur der zweite Senderempfänger den räumlichen Abstand ermittelt und ihm der andere Senderempfänger zuvor den auf Seiten des anderen Senderempfängers ermittelten Rundlaufzeitabstand und den auf Seiten des anderen Senderempfängers aufgetretenen Antwortzeitabstand übermittelt.

**10.** Verfahren nach Anspruch 1 oder 2, bei dem beide Senderempfänger den räumlichen Abstand ermitteln und die jeweils ermittelten Rundlaufzeitabstände und aufgetretenen Antwortzeitabstände zuvor vom ersten zum zweiten Senderempfänger und vom zweiten zum ersten Senderempfänger übertragen werden.

**11.** Verfahren nach Anspruch 1 oder 2, bei dem ein dritter Senderempfänger den räumlichen Abstand zwischen dem ersten und zweiten Senderempfänger ermittelt, und der erste und zweite Senderempfänger die ermittelten Rundlaufzeitabstände und Antwortzeitabstände zuvor alternativ oder zusätzlich an den dritten Senderempfänger übertragen.

**12.** Verfahren nach Anspruch 1 oder 2, bei dem die übermittelten Anfragedatenrahmen und Antwortdatenrahmen mehr als zwei Signalimpulse (a1, a2, ..an, b1, b2, ..., bn) enthalten und auf Seiten eines jeweiligen Empfängers die Empfangszeitpunkte von mehr als zwei Signalimpulsen eines jeweiligen Anfrage- oder Antwortdatenrahmens erfasst werden.

**13.** Verfahren nach Anspruch 12, bei dem der jeweilige Sender eines Anfrage- oder Antwortdatenrahmens Signalimpulse (b1', b2') des Datenrahmens zu Sendezeitpunkten aussendet, die relativ zu einem Zeitraster, das durch den senderseitig vorbestimmten Impulszeitabstand im auszusendenden Datenrahmen definiert ist, derart verschoben sind, dass die Signalimpulse im Mittel zu den durch das Zeitraster vorgegebenen Rasterzeitpunkten ausgesendet werden.

**14.** Verfahren nach Anspruch 12 oder 13, bei dem der jeweilige Empfänger eines Anfrage- oder Antwortdatenrahmens Signalimpulse (b1', b2') des empfangenen Datenrahmens relativ zu einem Zeitraster, das durch den Impulszeitabstand der empfangenen Signalimpulse definiert ist, derart verschiebt, dass die verschobenen Signalimpulse im Mittel mit dem senderseitig vorbestimmten Impulszeitabstand empfangen werden.

**15.** Verfahren nach Anspruch 14, bei dem eine Streuung der Zeitverschiebung eines Signalimpulses des Datenrahmens auf Seiten des Senders oder des Empfängers, oder bei dem die Streuung der Summe der Zeitverschiebungen eines Signalimpulses auf Seiten des Senders und des Empfängers größer ist als die Genauigkeit einer Zeitmessung auf Seiten des Empfängers.

**16.** Verfahren nach Anspruch 14, bei dem beim jeweiligen Empfänger eines Datenrahmens die Empfangszeitpunkte ($t_{RB1}$) einer Mehrzahl in einem empfangenen Anfrage- oder Antwortdatenrahmen enthaltener Signalimpulse relativ zu einem durch den Impulszeitabstand der empfangenen Signalimpulse und einen vereinbarten Referenzpunkt im Anfrage- oder Antwortdatenrahmen definierten Zeitraster (R) erfasst und abgespeichert werden.

**17.** Verfahren nach Anspruch 16, bei dem der jeweils empfangende Senderempfänger nach Erfassung der Empfangszeitpunkte der Signalimpulse einen mittleren Empfangszeitpunkt bezüglich des Zeitrasters (R) ermittelt.

**18.** Verfahren nach Anspruch 1, 2 oder 12, bei dem der jeweils empfangende Senderemfänger eines Signalimpulses denjenigen Zeitpunkt ermittelt, bei dem ein detektierter Signalimpuls einen maximalen Signalgewinn oder einen maximalen Wert einer Korrelation mit einem vorbestimmten Signalmuster aufweist.

**19.** Verfahren nach Anspruch 14, bei dem der jeweilige Empfänger nach einer Bestimmung eines Anfrage- oder Antwort-Empfangszeitpunktes und vor einer nachfolgenden Bestimmung eines nächsten Anfrage- oder Antwort Empfangszeitpunktes einen von ihm zur Bestimmung von Empfangszeitpunkten verwendeten Taktgenerator oder Oszillator neu startet.

**20.** Verfahren nach Anspruch 19, bei dem der jeweilige Empfänger während des Empfangs eines Anfrage- oder Antwortdatenrahmens einen von ihm zur Bestimmung von Sende- und/oder Empfangszeitpunkten der Signalimpulse verwendeten Taktgenerator oder Oszillator in seiner Frequenz gemäß einer pseudozufälligen Sequenz moduliert.

**21.** Verfahren nach Anspruch 1 oder 2, bei dem der jeweilige Empfänger eines Anfrage- oder Antwortdatenrahmens bei Vorliegen einer auf eine Mehrwegeausbreitung eines einzelnen Signalimpulses zurückgehenden Impulsfolge im Empfangssignal als Empfangszeitpunkt des Signalimpulses den frühesten Zeitpunkt innerhalb eines vorbestimmten Zeitfensters ermittelt, bei dem das Empfangssignal einen maximalen Wert annimmt.

**22.** Verfahren nach Anspruch 1 oder 2, bei dem der erste und zweite Senderempfänger die Werte der Antwortzeitabstände ($T_{replyAk}$, $T_{replyBi}$) vor Aussendung eines Anfragedatenrahmens vereinbaren.

**23.** Verfahren nach Anspruch 1 oder 2, bei dem der erste und zweite Senderempfänger das Verfahren mehrfach durchführen und vor Aussendung des ersten Anfragedatenrahmens der ersten Durchführung eine Folge von unterschiedlichen Werten von Antwortzeitabständen vereinbaren und bei nachfolgenden Durchführungen jeweils den nächsten in der Folge vorgegebenen Antwortzeitabstand einhalten.

**24.** Verfahren nach Anspruch 22 oder 23, bei dem der erste und zweite Senderempfänger während der Vereinbarung der Antwortzeitabstände oder der Folge von Antwortzeitabständen einander geheim verschlüsselte Nachrichten übertragen.

**25.** Verfahren nach Anspruch 1 oder 2, bei dem der erste und zweite Senderempfänger den Antwortzeitabstand in Abhängigkeit von einer unbekannten pseudozufälligen Zahlenfolge variieren.

**26.** Verfahren nach Anspruch 1 oder 2, bei dem der erste und der zweite Senderempfänger den jeweils von ihnen verwendeten Antwortzeitabstand messen und die gemessenen Antwortzeitabstände bei der Auswertung zur Abstandsbestimmung herangezogen werden.

**27.** Verfahren nach Anspruch 1 oder 2, bei dem die zur Abstandsbestimmung verwendeten Signalimpulse zugleich als Informationssymbole verwendet werden.

**28.** Verfahren nach Anspruch 1 oder 2, bei dem die zwischen dem ersten und zweiten Senderempfänger übertragenen Anfragedatenrahmen und Antwortdatenrahmen einem Übertragungsprotokoll der Schicht 2 des OSI-Referenzmodells gehorchen.

**29.** Verfahren nach Anspruch 1 oder 2, bei dem die Signalimpulse Chirpimpulse sind.

**30.** Verfahren nach Anspruch 29, bei dem zwei komplementäre Typen von Chirpimpulse verwendet werden, die eine identische Mittenfrequenz und Impulsdauer, jedoch im Vergleich beiden komplementären Chirpimpuls-Typen einen gegenläufigen und um die Mittenfrequenz symmetrischen, beim einen Chirpimpuls-Typ steigenden und beim anderen Chirpimpuls-Typ fallenden Frequenzgang während der Impulsdauer aufweisen, wobei zur Abstandsbestimmung die komplementären Chirpimpuls-Typen in einem Anfrage- oder Antwortdatenrahmen in jeweils gleicher Anzahl verwendet werden.

**31.** Verfahren nach Anspruch 1 oder 2, bei dem ein Kalibrierungslauf durchgeführt wird, indem der erste oder der zweite oder beide Senderempfänger vor einem ersten Signalrundlauf im Rahmen der Abstandsbestimmung zum jeweils anderen Senderempfänger mindestens ein Signalrundlaufpaar zur Abstandsbestimmung von einem oder von je einem mit vorbekanntem Abstand zum jeweiligen Senderempfänger angeordneten Kalibrier-Sender-Empfänger durchführen, der zusätzlich einen dem jeweiligen Senderempfänger bekannten oder jeweils zu übermittelnden Antwortzeitabstand verwendet,

bei dem der so ermittelte und der vorbekannte räumliche Abstand zum Kalibrier-Sender-Empfänger verglichen werden und

bei dem das Vergleichsergebnis im Rahmen der nachfolgenden Abstandsbestimmung zur Fehlerkorrektur verwendet wird.

32. Verfahren nach Anspruch 31, bei dem während der Durchführung einer Abstandsbestimmung oder im Zeitabstand der Größenordnung einer Sekunde davor oder danach entweder eine aktuelle Temperatur am Ort eines jeweiligen Senderempfängers oder eine aktuelle Versorgungsspannung eines jeweiligen Senderempfängers oder sowohl die aktuelle Temperatur als auch die aktuelle Versorgungsspannung ermittelt werden.

33. Verfahren nach Anspruch 32, bei dem der erste oder der der zweite oder beide Senderempfänger vor oder während der Durchführung des Kalibrierungslaufes

- das Vergleichsergebnis zur Ermittlung von für den jeweiligen Senderempfänger charakteristischen Fehlerdaten als Funktion entweder der Temperatur am Ort eines jeweiligen Senderempfängers oder als Funktion der aktuellen Versorgungsspannung eines jeweiligen Senderempfängers oder als Funktion beider genannter Parametern abspeichern,
- die ermittelten Fehlerdaten zur Bestimmung einer für den jeweiligen Senderempfänger individuellen temperatur- und versorgungsspannungsabhängigen Fehlerkorrekturfunktion oder einer entsprechenden Fehlerkorrekturtabelle für Abstandswerte heranziehen, die im jeweiligen Senderempfänger abgespeichert wird,
- und bei dem im Rahmen einer nachfolgenden Abstandsbestimmung ermittelte Abstandswerte durch Anwendung der Fehlerkorrekturfunktion oder durch Heranziehung eines in der Fehlertabelle enthaltenen Korrekturwertes korrigiert werden.

34. Verfahren nach Anspruch 1 oder 2, bei dem

- die Abstandsbestimmung nach einem vorbestimmbaren oder dynamisch veränderbaren Messzeitabstand wiederholt wird und
- durch Bildung einer Abstandsdifferenz nach einander ermittelter Abstandswerte zwischen dem ersten und zweiten Senderempfänger und anschließende Bildung eines Quotienten aus der Abstandsdifferenz und dem Messzeitabstand die Geschwindigkeit der Senderempfänger relativ zu einander ermittelt wird.

35. Verfahren nach Anspruch 34, bei dem

- mit einem vorbestimmbaren oder dynamisch veränderbaren Geschwindigkeits-Messzeitabstand zwei Geschwindigkeitswerte ermittelt werden und
- durch Bildung einer Geschwindigkeitsdifferenz nach einander ermittelter Geschwindigkeitswerte und anschließende Bildung des Quotienten aus der Geschwindigkeitsdifferenz und dem Messzeitabstand die Beschleunigung der Senderempfänger relativ zu einander ermittelt wird.

36. Verfahren nach Anspruch 1 oder 2, bei dem die Anzahl der jeweils initiierten Signalrundläufe in Abhängigkeit von einer vorbestimmten Genauigkeit der Abstandsbestimmung gewählt wird.

37. Verfahren nach Anspruch 34, bei dem die Anzahl der initiierten Signalrundläufe in zusätzlicher Abhängigkeit von einer vorbestimmten Obergrenze der Zeitdauer der Durchführung der Abstandsbestimmung gewählt wird.

38. Verfahren zur Bestimmung der Position eines ersten Senderempfängers relativ zu mindestens einem weiteren Senderempfänger innerhalb eines Abstandsbereiches der Größenordnung von 10 km, bei zur Bestimmung des Abstandes zwischen dem ersten und dem oder jedem weiteren Senderempfänger ein Verfahren nach einem der vorstehenden Ansprüche verwendet wird.

39. Verfahren nach einem der vorstehenden Ansprüche,

- mit einem Schritt des Ermittelns eines Taktgeneratorfehlers beider Senderempfänger im Auswerteschritt,

- bei dem eine nachfolgende Abstandsbestimmung, die mindestens einen der beiden Senderempfänger betrifft, abweichend von der Verfahrensführung des Anspruchs 1 nur einen einzigen, von einem der Senderempfänger initiierten Signalrundlauf und einen Auswerteschritt umfasst,

- und bei dem im Auswerteschritt der nachfolgenden Abstandsbestimmung eine Verfälschung eines auf der Grundlage des einzigen Signalrundlaufes vorläufig ermittelten Abstandswertes aufgrund des zuvor ermittelten Taktgeneratorfehlers des betreffenden Senderempfängers für die endgültige Ermittlung des Abstandswertes herausgerechnet wird.

**40.** Senderempfänger zur Bestimmung des räumlichen Abstandes zu einem zweiten Senderempfänger innerhalb eines Abstandsbereiches der Größenordnung von 10 km mit dem Verfahren nach Anspruch 1,

- mit einer Sendeeinheit, die ausgebildet ist
mindestens einen ersten Signalrundlauf durch Aussenden eines jeweiligen ersten Anfragedatenrahmens, der eine Sequenz von mindestens zwei Signalimpulsen mit vorbestimmtem Impulszeitabstand enthält, an einem ersten Anfrage-Sendezeitpunkt ($T_{TA1}$, $T_{TB2}$) zu einem zweiten Senderempfänger zu initiieren,
- mit einer Empfangseinheit, die ausgebildet ist,
den Empfang eines in Antwort auf den ersten Anfragedatenrahmen vom zweiten Senderempfänger übersandten ersten Antwortdatenrahmens zu überwachen und einen dem Empfang des ersten Antwortdatenrahmens zugeordneten ersten Antwort-Empfangszeitpunkt ($T_{RA1}$,) relativ zum ersten Anfrage-Sendezeitpunkt ($T_{TA1}$,) zu erfassen,
- wobei die Sendeeinheit zusätzlich ausgebildet ist,
nach Empfang eines einen zweiten Signalrundlauf initiierenden zweiten Anfragedatenrahmens vom zweiten Senderempfänger einen zweiten Antwortdatenrahmen, der eine Sequenz von mindestens zwei Signalimpulsen mit vorbestimmtem Impulszeitabstand enthält, mit einem Antwortzeitabstand ($T_{replyA2}$) von einem zugeordneten zweiten Anfrage-Empfangszeitpunkt ($T_{RA2}$) des zweiten Anfragedatenrahmens an den zweiten Senderempfänger auszusenden,
nach Empfang eines einen ersten Signalrundlauf initiierenden ersten Anfragedatenrahmens von einem zweiten Senderempfänger einen ersten Antwortdatenrahmen, der eine Sequenz von mindestens zwei Signalimpulsen mit vorbestimmtem Impulszeitabstand enthält, mit einem Antwortzeitabstand ($T_{replyB1}$) relativ zu einem zugeordneten ersten Anfrage-Empfangszeitpunkt ($T_{RB1}$) des ersten Anfragedatenrahmens an den zweiten Senderempfänger auszusenden, und auf den Empfang des ersten Anfragedatenrahmens vom zweiten Senderempfänger hin einen zweiten Signalrundlauf durch Aussenden eines zweiten Anfragedatenrahmens, der eine Sequenz von mindestens zwei Signalimpulsen mit vorbestimmtem Impulszeitabstand enthält, an den zweiten Senderempfänger an einem zweiten Anfrage-Sendezeitpunkt ($T_{TB1}$) zu initiieren,
- wobei die Empfangseinheit zusätzlich ausgebildet ist,
den Empfang eines in Antwort auf den zweiten Anfragedatenrahmen vom zweiten Senderempfänger übersandten zweiten Antwortdatenrahmens zu überwachen und einen dem Empfang des zweiten Antwortdatenrahmens zugeordneten zweiten Antwort-Empfangszeitpunkt ($T_{RB2}$) relativ zum zweiten Anfrage-Sendezeitpunkt ($T_{TB2}$) zu erfassen,
- wobei der Senderempfänger ausgebildet ist, den ersten und den zweiten Antwortdatenrahmen nach Dekodieren und Prüfen des ersten beziehungsweise zweiten Anfragedatenrahmens bei Erfolg mit einem vorbestimmten Wert des Antwortzeitabstandes relativ zum jeweiligen Anfrage-Empfangszeitpunkt mit einer zeitlichen Präzision auszusenden, bei der die Antwortzeitabstände ($T_{replyA2}$, $T_{replyB1}$) auf Seiten des ersten und zweiten Senderempfängers in den Signalrundläufen entweder identisch sind oder eine Differenz, im Falle der Durchführung mehr als eines von jedem Senderempfänger initiieren Signalrundlaufes eine mittlere Differenz aufweisen, deren Betrag maximal 200 Mikrosekunden ist,
- und wobei die jeweiligen Anfragedatenrahmen und Antwortdatenrahmen Protokollvorschriften eines Nachrichtenprotokolls entsprechen und Protokoll- und Nutzdaten enthalten.

**41.** Senderempfänger nach Anspruch 40, wobei der Senderempfänger ausgebildet ist, den ersten und den zweiten Antwortdatenrahmen mit einem vorbestimmten Wert des Antwortzeitabstandes relativ zum jeweiligen Anfrage-Empfangszeitpunkt mit einer zeitlichen Präzision auszusenden, bei der die Antwortzeitabstände ($T_{replyA2}$, $T_{replyB1}$) auf Seiten des ersten und zweiten Senderempfängers in den Signalrundläufen entweder identisch sind oder eine Differenz, im Falle der Durchführung mehr als eines von jedem Senderempfänger initiieren Signalrundlaufes eine mittlere Differenz aufweisen, deren Betrag maximal 20 Mikrosekunden ist.

**42.** Senderempfänger nach Anspruch 40 oder 41, mit einer Auswerteeinheit, die mit der Sende- und der Empfangseinheit verbunden ist und ausgebildet ist zum Ermitteln eines Rundlaufzeitabstandes ($T_{roundA1}$, $T_{roundB2}$) zwischen dem Anfrage-Sendezeitpunkt ($T_{TA1}$,$T_{TB2}$) eines von der Sendeeinheit ausgesandten Anfragedatenrahmens und dem Antwort-Empfangszeitpunkt ($T_{RA1}$,$T_{RB2}$) eines vom zweiten Senderempfänger her empfangenen Antwortdatenrahmens.

43. Senderempfänger nach Anspruch 42,
bei dem die Auswerteeinheit eine Datenverbindung zum zweiten Senderempfänger hat und zusätzlich ausgebildet ist,
über die Sendeeinheit einen erfassten Antwortzeitabstand ($T_{replyA2}$, $T_{replyB1}$) und einen ermittelten Rundlaufzeitabstand ($T_{roundA1}$, $T_{roundB2}$) an den zweiten Senderempfänger zu übertragen, oder
über die Empfangseinheit einen erfassten Antwortzeitabstand ($T_{replyA2}$, $T_{replyB1}$) und einen ermittelten Rundlaufzeitabstand ($T_{roundA1}$, $T_{roundB2}$) auf Seiten des zweiten Senderempfängers zu empfangen, und
eine Signallaufzeit $T_{prop}$ zwischen dem ersten und dem zweiten Senderempfänger anhand des oder der ermittelten Rundlaufzeitabstände und der Antwortzeitabstände zu ermitteln, und
den räumlichen Abstand zwischen dem ersten und zweiten Senderempfänger durch Multiplikation der Signallaufzeit $T_{prop}$ mit einer vorbekannten Ausbreitungsgeschwindigkeit der Signalimpulse zu bestimmen.

44. Senderempfänger nach Anspruch 40 oder 41, bei dem die Sendeeinheit ausgebildet ist, den zweiten Anfragedatenrahmen zur Initiierung des zweiten Signalrundlaufes nach dem ersten Antwortdatenrahmen an den zweiten Senderempfänger zu senden.

45. Senderempfänger nach Anspruch 40 oder 41, bei dem die Sendeeinheit ausgebildet ist, am zweiten Anfrage-Sendezeitpunkt ($T_{TB1}$) mit dem vorbestimmten Antwortzeitabstand ($T_{replyB1}$, $T_{replyA2}$) relativ zum ersten Empfangszeitpunkt ($T_{RB1}$,) des ersten Anfragedatenrahmens an den zweiten Senderempfänger einen kombinierten Anfrage- und Antwortdatenrahmen auszusenden, der in einem einzigen Datenrahmen sowohl die Funktion eines ersten Antwortdatenrahmens als auch die Funktion eines zweiten Anfragedatenrahmens vereint,
und bei dem die Empfangseinheit ausgebildet ist, den Empfang eines in Antwort auf den kombinierten Anfrage- und Antwortdatenrahmen vom zweiten Senderempfänger übersandten zweiten Antwortdatenrahmens zu überwachen und einen dem Empfang des zweiten Antwortdatenrahmens zugeordneten zweiten Antwort-Empfangszeitpunkt ($T_{RB2}$) relativ zum zweiten Anfrage-Sendezeitpunkt ($T_{TB1}$) zu erfassen.

46. Senderempfänger nach Anspruch 40 oder 41, bei dem die Sendeeinheit ausgebildet ist, Anfragedatenrahmen und Antwortdatenrahmen mit jeweils mehr als zwei Signalimpulsen auszusenden, und bei dem die Empfangseinheit ausgebildet ist, die Empfangszeitpunkte von mehr als zwei Signalimpulsen eines jeweiligen Anfrage- oder Antwortdatenrahmens zu erfassen.

47. Senderempfänger nach Anspruch 46, bei dem die Sendeeinheit ausgebildet ist, Signalimpulse eines Anfrage- oder Antwort-Datenrahmens zu Sendezeitpunkten auszusenden, die relativ zu einem Zeitraster (R), das durch den senderseitig vorbestimmten Impulszeitabstand im auszusendenden Datenrahmen definiert ist, derart verschoben sind, dass die Signalimpulse im Mittel zu den durch das Zeitraster vorgegebenen Rasterzeitpunkten ausgesendet werden.

48. Senderempfänger nach Anspruch 46 oder 47, bei dem die Empfangseinheit ausgebildet ist, Signalimpulse eines empfangenen Anfrage- oder Antwort-Datenrahmens relativ zu einem Zeitraster (R), das durch den Impulszeitabstand der empfangenen Signalimpulse definiert ist, derart zu verschieben, dass die verschobenen Signalimpulse im Mittel mit dem senderseitig vorbestimmten Impulszeitabstand empfangen werden.

49. Senderempfänger nach Anspruch 48, bei dem die Empfangseinheit ausgebildet ist, nach Erfassung der Empfangszeitpunkte der Signalimpulse einen mittleren Empfangszeitpunkt bezüglich des Zeitrasters (R) zu ermitteln.

50. Senderempfänger nach Anspruch 40 oder 41, bei dem die Empfangseinheit ausgebildet ist, denjenigen Zeitpunkt zu ermitteln und als Empfangszeitpunkt eines Signalimpulses zu erfassen, bei dem ein detektierter Signalimpuls einen maximalen Signalgewinn oder einen maximalen Wert einer Korrelation mit einem vorbestimmten Signalmuster aufweist.

51. Senderempfänger nach Anspruch 40 oder 41, bei dem die Empfangseinheit ausgebildet ist, nach einer Bestimmung eines Anfrage- oder Antwort-Empfangszeitpunktes und vor einer nachfolgenden Bestimmung eines Anfrage- oder Antwort-Empfangszeitpunktes eines nächsten Anfrage- oder Antwortdatenrahmens einen zur Bestimmung von Sende- und Empfangszeitpunkten verwendeten Taktgenerator oder Oszillator neu zu starten.

**52.** Senderempfänger nach Anspruch 40 oder 41, bei dem die Empfangseinheit ausgebildet ist, ein Empfangssignal auf das Vorliegen einer auf eine Mehrwegeausbreitung eines einzelnen Signalimpulses zurückgehenden Impulsfolge zu prüfen und bei Vorliegen einer solchen Impulsfolge als Empfangszeitpunkt des Signalimpulses den frühesten Zeitpunkt innerhalb eines vorbestimmten Zeitfensters zu ermitteln, bei dem das Empfangssignal einen maximalen Wert annimmt.

**53.** Senderempfänger nach Anspruch 40 oder 41, der ausgebildet ist, mit dem zweiten Senderempfänger die Werte der Antwortzeitabstände ($T_{replyAk}$, $T_{replyBi}$) vor Aussendung eines Anfragedatenrahmens zu vereinbaren.

**54.** Senderempfänger nach Anspruch 40 oder 41, der ausgebildet ist, den Antwortzeitabstand zu messen.

**55.** Senderempfänger nach Anspruch 40 oder 41, der ausgebildet ist, mit dem zweiten Senderempfänger eine Folge von unterschiedlichen Werten von Antwortzeitabständen zu vereinbaren und bei Durchführung jeder nachfolgenden Abstandsbestimmung jeweils den nächsten in der Folge vorgegebenen Antwortzeitabstand einzuhalten.

**56.** Senderempfänger nach Anspruch 40 oder 41, bei dem die Sendeeinheit ausgebildet ist, die zur Abstandsbestimmung verwendeten Signalimpulse zugleich als Informationssymbole zu verwenden.

**57.** Senderempfänger nach Anspruch 40 oder 41, bei dem die Sendeeinheit ausgebildet ist, erzeugte Signalimpulse in Form von Chirpimpulsen auszusenden und die Empfangseinheit ausgebildet ist, aus empfangenen Chirpimpulsen senderseitig erzeugte Signalimpulse zu rekonstruieren.

**58.** Senderempfänger nach Anspruch 57, bei dem die Sendeeinheit ausgebildet ist, zwei komplementäre Typen von Chirpimpulsen auszusenden, die eine identische Mittenfrequenz und Impulsdauer, jedoch einen gegenläufigen und um die Mittenfrequenz symmetrischen, beim einen Chirpimpuls-Typ steigenden und beim anderen Chirpimpuls-Typ fallenden Frequenzgang während der Impulsdauer aufweisen, wobei zur Abstandsbestimmung die komplementären Chirpimpuls-Typen in einem Anfrage- oder Antwortdatenrahmen in jeweils gleicher Anzahl verwendet werden.

**59.** Senderempfänger nach Anspruch 42, der ausgebildet ist, die Abstandsbestimmung nach einem vorbestimmbaren oder dynamisch veränderbaren Messzeitabstand zu wiederholen, und bei dem die Auswerteeinheit ausgebildet ist, durch Bildung einer Abstandsdifferenz nach einander ermittelter Abstandswerte zwischen dem ersten und zweiten Senderempfänger und anschließende Bildung eines Quotienten aus der Abstandsdifferenz und dem Messzeitabstand die Geschwindigkeit der Senderempfänger relativ zu einander zu ermitteln.

**60.** Senderempfänger nach Anspruch 42, der ausgebildet ist, mit einem vorbestimmbaren oder dynamisch veränderbaren Geschwindigkeits-Messzeitabstand zwei Geschwindigkeitswerte zu ermitteln, und bei dem die Auswerteeinheit ausgebildet ist, durch Bildung einer Geschwindigkeitsdifferenz nach einander ermittelter Geschwindigkeitswerte und anschließende Bildung des Quotienten aus der Geschwindigkeitsdifferenz und dem Messzeitabstand die Beschleunigung der Senderempfänger relativ zu einander zu ermitteln.

**61.** Anordnung zur Bestimmung des räumlichen Abstandes zwischen einem ersten Senderempfänger nach Anspruch 40 oder 41 und einem zweiten Senderempfänger nach Anspruch 40 oder 41 innerhalb eines Abstandsbereiches der Größenordnung von 10 km.

**62.** Anordnung zur Bestimmung des räumlichen Abstandes zwischen einem ersten Senderempfänger nach Anspruch 42 und einem zweiten Senderempfänger nach Anspruch 42 innerhalb eines Abstandsbereiches der Größenordnung von 10 km.

**63.** Anordnung nach Anspruch 61, mit einem dritten Senderempfänger, der ausgebildet ist zum Aufbau einer Datenverbindung zum ersten und zum zweiten Senderempfänger zur Übertragung von Rundlaufzeitabständen und Antwortzeitabständen an den dritten Senderempfänger, und der eine Abstandsbestimmungseinheit aufweist, die ausgebildet ist zum Aufbau einer Datenverbindung zum ersten und zum zweiten Senderempfänger zur Übertragung von Rundlaufzeitabständen und Antwortzeitabständen an die Abstandsbestimmungseinheit,

- zum Ermitteln einer Signallaufzeit ($T_{prop}$) zwischen dem ersten und dem zweiten Senderempfänger anhand der vom ersten und zweiten Senderempfänger ermittelten Rundlaufzeitabstände und der vom ersten und zweiten Senderempfänger erfassten Antwortzeitabstände und

- zum Berechnen des räumlichen Abstandes zwischen dem ersten und zweiten Senderempfänger durch Multiplikation der Signallaufzeit ($T_{prop}$) mit einer vorbekannten Ausbreitungsgeschwindigkeit der Signalimpulse.

**64.** Anordnung nach Anspruch 62, bei der der erste und zweite Senderempfänger ausgebildet sind, den ersten und zweiten Signalrundlauf mindestens zwei Mal durchzuführen, bis der Abstand zwischen dem ersten und zweiten Senderempfänger von einer Anzahl Anfrage- und Antwortdatenrahmen durchlaufen worden ist, die ein Vielfaches von vier ist, sowie alle zusätzlichen Rundlaufabstände zu ermitteln und Antwortzeitabstände zu erfassen, wobei der erste und zweite Senderempfänger ausgebildet sind, Antwortzeitabstände $T_{replyAk}$, k= 2, 4, 6, 8,..,(n-1) von $T_{replyA2}$ bis $T_{replyA(n-1)}$, und $T_{replyBi}$, i = 1, 3, 5, 7, ...,(n-2) von $T_{replyB1}$ bis $T_{replyB(n-2)}$ zu verwenden, die eine mittlere Differenz gemäß der Formel

$$\Delta T_{\text{Re}plyAVG} = \frac{T_{replyA2} - T_{replyB1} + .. + T_{replyA(n-1)} - T_{replyB(n-2)}}{\frac{n-1}{2}}$$

aufweisen, deren Betrag maximal 20 Mikrosekunden ist,
und bei der die Auswerteeinheit des ersten Senderempfängers ausgebildet ist, nach wiederholter Durchführung der ersten Signalrundlauf-Schrittfolge zusätzliche Rundlaufzeitabstände $T_{roundAi}$ mit i= 3, 5, 7,...,(n-2) von $T_{roudA3}$ bis $T_{roundA(n-2)}$ zu ermitteln, wobei n eine ungerade Zahl ist, und
und die Auswerteeinheit des zweiten Senderempfängers ausgebildet ist, nach wiederholter Durchführung der zweiten Signalrundlauf-Schrittfolge zusätzliche Rundlaufzeitabstände $T_{roundBk}$ mit k= 4, 6, 8,..., (n-1) von $T_{roundB4}$ bis $T_{roundB(n-1)}$ zu ermitteln.

**65.** Anordnung mit zwei Senderempfängern nach Anspruch 45, bei der jeder Senderempfänger ausgebildet ist, mindestens zwei Signalrundläufe zu initiieren, bis der Abstand zwischen dem ersten und zweiten Senderempfänger von einer ungeraden Anzahl n>3 Anfrage- und Antwortdatenrahmen durchlaufen worden ist, sowie alle zusätzlichen Rundlaufabstände zu ermitteln und Antwortzeitabstände zu erfassen, wobei der erste oder zweite Senderempfänger ausgebildet sind,

- nach wiederholter Durchführung der ersten Signalrundlauf-Schrittfolge zusätzliche Rundlaufzeitabstände $T_{roundAi}$ mit i= 3, 5, 7,...,(n-2), von $T_{roundA3}$ bis $T_{roundA(n-2)}$ zu ermitteln und
- nach wiederholter Durchführung der zweiten Signalrundlauf-Schrittfolge zusätzliche Rundlaufzeitabstände $T_{roundBk}$, mit k = 4, 6, 8,..., (n-1), von $T_{roundB4}$ bis $T_{roundB(n-1)}$ zu ermitteln,
- wobei der erste und zweite Senderempfänger ausgebildet sind, Antwortzeitabstände $T_{replyAk}$, k= 2, 4, 6, 8,...,(n-1) von $T_{replyA2}$ bis $T_{replyA(n-1)}$, $T_{replyBi}$, i= 1, 3, 5, 7,..., (n-2) von $T_{replyB1}$ bis $T_{replyB(n-2)}$ zu verwenden, die eine mittlere Differenz gemäß der Formel

$$\Delta T_{\text{Re}plyAVG} = \frac{T_{replyA2} - T_{replyB1} + .. + T_{replyA(n-1)} - T_{replyB(n-2)}}{\frac{n-1}{2}}$$

aufweisen, deren Betrag maximal 20 Mikrosekunden ist.

**66.** Anordnung nach Anspruch 62, mit mindestens einem zusätzlichen Kalibrier-Senderempfänger, der ein Senderempfänger nach Anspruch 42 ist und der mit vorbekanntem Abstand zum ersten oder zweiten Senderempfänger angeordnet ist und der einen dem ersten oder zweiten Senderempfänger bekannten oder jeweils zu übermittelnden Antwortzeitabstand verwendet,
bei der erste oder der zweite oder beide Senderempfänger ausgebildet sind, vor einem ersten Signalrundlauf im Rahmen der Abstandsbestimmung zum jeweils anderen Senderempfänger mindestens ein Signalrundlaufpaar zur Abstandsbestimmung vom Kalibrier-Sender-Empfänger durchführen,
und bei dem der erste oder zweite Senderempfänger ausgebildet ist, den so ermittelten und den vorbekannten räumlichen Abstand zum Kalibrier-Sender-Empfänger zu vergleichen und das Vergleichsergebnis im Rahmen der nachfolgenden Abstandsbestimmung zur Fehlerkorrektur des dort ermittelten Abstandswertes zu verwenden.

**67.** Anordnung nach Anspruch 66, bei der erste oder der zweite Senderempfänger oder beide Senderempfänger ausgebildet sind, während der Durchführung einer Abstandsbestimmung oder im Zeitabstand der Größenordnung einer Sekunde davor oder danach entweder eine aktuelle Temperatur am Ort eines jeweiligen Senderempfängers oder eine aktuelle Versorgungsspannung eines jeweiligen Senderempfängers oder sowohl die aktuelle Temperatur als auch die aktuelle Versorgungsspannung zu messen.

**68.** Anordnung nach einem der vorstehenden Ansprüche 61 bis 67, bei der eine in einem Senderempfänger eine Datenbankeinheit vorgesehen ist, die ausgebildet ist, Taktgeneratorfehler von Senderempfängern anhand einer zuvor durchgeführten Abstandsbestimmung zu ermitteln und abzuspeichern,

- bei der der erste und der zweite Senderempfänger ausgebildet sind, nach Ermittlung ihrer Taktgeneratorfehler erfolgende Abstandsbestimmungen abweichend von der Verfahrensführung des Anspruchs 1 mit nur einem einzigen Signalrundlauf und einem Auswerteschritt durchzuführen,
- und bei der die Auswerteeinheit der Senderempfänger ausgebildet ist, im Auswerteschritt eine Verfälschung eines nach einem einzigen Signalrundlauf vorläufig ermittelten Abstandswertes unter Zugriff auf den zuvor von der Datenbankeinheit abgespeicherten Taktgeneratorfehler des beteiligten Senderempfängers für eine endgültige Ermittlung des Abstandswertes herauszurechnen.

**Claims**

**1.** Method for determining the spatial distance between two transceivers (A, B) within a distance range of the order of 10 km,

- wherein the two transceivers each initiate at least one signal round, a signal round comprising the following steps:

a) transmitting at least one request data frame (30, 42, 52) which contains a sequence of at least two signal pulses with a predetermined pulse time interval, from a first transceiver that initiates the signal round to a second transceiver at a request transmission time ($T_{TA1}$, $T_{TB2}$),
b) the second transceiver receiving the request data frame (30, 42, 52) at a request receiving time ($T_{RB1}$, $T_{RA2}$),
c) decoding and checking the received request data frame and subsequently, if successful, transmitting a reply data frame (32, 44, 54) which contains a sequence of at least two signal pulses with a predetermined pulse time interval, from the second transceiver to the first transceiver at a reply transmitting time ($T_{TB1}$, $T_{TA2}$) which has a respective reply time interval ($T_{replyB1}$, $T_{replyA2}$) from the request receiving time ($T_{RB1}$, $T_{RA2}$), and ascertaining the respective reply time interval,
d) receiving, decoding and checking the reply data frame (32, 44, 54) at the first transceiver (A) which initiates the signal round and determining a reply receiving time ($T_{RA1}$, $T_{RB2}$) associated with receiving the reply data frame, relative to the request transmission time ($T_{TA1}$, $T_{TB2}$),

- wherein an evaluation is carried out comprising the following steps:

e) determining a round time interval ($T_{roundA1}$, $T_{roundB2}$) between the respective request transmission time ($T_{TA1}$, $T_{TB2}$) and the respective reply receiving time ($T_{RA1}$, $T_{RB2}$) for each signal round, while this step may be carried out at any time after the signal round in question,
f) determining a signal propagation time ($T_{prop}$) between the two transceivers (A, B) by means of the round time intervals ($T_{roundA1}$, $T_{roundB2}$) ascertained and the reply time intervals ($T_{replyB1}$, $T_{replyA2}$) and
g) determining the spatial distance between the first and second transceivers by multiplying the signal propagation time ($T_{prop}$) by a known propagation velocity of the signal pulses,

- and wherein the signal rounds are carried out such that the reply time intervals ($T_{replyA2}$, $T_{replyB1}$) are either identical or have a difference, or an average distance, in the case of more than one signal round initiated by each transceiver being carried out, which amounts to at most 200 microseconds, while
- the respective request data frames and reply data frames comply with protocol rules of a messaging protocol and contain protocol and useful data.

**2.** Method according to claim 1, wherein the signal rounds are carried out such that the reply time intervals ($T_{replyA2}$, $T_{replyB1}$) are either identical or have a difference, or an average distance, in the case of more than one signal round initiated by each transceiver being carried out, which amounts to at most 20 microseconds.

3. Method according to claim 1 or 2, wherein the second transceiver (B) initiates a signal round only after it has sent the reply data frame to the first transceiver (A).

4. Method according to claim 1 or 2, wherein the second transceiver (B) by transmitting the reply data frame simultaneously initiates a signal round, while the reply data frame which is associated with a first signal round initiated by the first transceiver simultaneously forms the request data frame of a second signal round initiated by the second transceiver.

5. Method according to one of the preceding claims, wherein the two transceivers (A, B) initiate precisely one signal round and the signal propagation time $T_{prop}$ is determined according to the formula

$$T_{prop} = \frac{T_{roundA1} - T_{replyB1} + T_{roundB2} - T_{replyA2}}{4}$$

6. Method according to claim 3, wherein

- each transceiver initiates at least two signal rounds until the distance between the first and second transceivers has been travelled by a number of request and reply data frames which is at least eight and is a multiple of four,
- in addition to the signal rounds initiated by the first transceiver, round time intervals $T_{roundAi}$ wherein i = 3, 5, 7, ..., (n-2) from $T_{roundA3}$ to $T_{roundA(n-2)}$ are determined, wherein n>3 is an odd number, and
- in addition to the signal rounds initiated by the second transceiver, round time intervals $T_{roundBk}$ wherein k = 4, 6, 8, ..., (n-1) from $T_{roundB4}$ to $T_{roundB(n-1)}$ are determined,
- while reply time intervals $T_{replyAk}$, k = 2, 4, 6, 8, .., (n-1) from $T_{replyA2}$ to $T_{replyA(n-1)}$, and $T_{replyBi}$, i = 1, 3, 5, 7, .., (n-2) from $T_{replyB1}$ to $T_{replyB(n-2)}$ occur, which have an average difference according to the formula

$$\Delta T_{ReplyAVG} = \frac{T_{replyA2} - T_{replyB1} + .. + T_{replyA(n-1)} - T_{replyB(n-2)}}{\frac{n-1}{2}}$$

amounting to a maximum of 20 microseconds.

7. Method according to claim 4, wherein

- each transceiver (A, B) initiates at least two signal rounds until the distance between the first and second transceiver has been travelled by an odd number n>3 of request and reply data frames, wherein all the additional round time intervals are determined and all the additional reply time intervals are detected,
- after the first signal round sequence has been repeated, additional round time intervals $T_{roundAi}$ wherein i = 3, 5, 7, ..., (n-2), from $T_{roundA3}$ to $T_{roundA(n-2)}$ are determined and
- after the second signal round sequence has been repeated, additional round time intervals $T_{roundBk}$ wherein k = 4, 6, 8, ..., (n-1), from $T_{roundB4}$ to $T_{roundB(n-1)}$ are determined,
- while reply time intervals $T_{replyAk}$, k = 2, 4, 6, 8, ..., (n-1) from $T_{replyA2}$ to $T_{replyA(n-1)}$, $T_{replyBi}$, i = 1, 3, 5, 7, ..., (n-2) from $T_{replyB1}$ to $T_{replyB(n-2)}$ occur, which have an average difference according to the formula

$$\Delta T_{ReplyAVG} = \frac{T_{replyA2} - T_{replyB1} + .. + T_{replyA(n-1)} - T_{replyB(n-2)}}{\frac{n-1}{2}}$$

amounting to a maximum of 20 microseconds.

8. Method according to claim 6 or 7, wherein the signal propagation time $T_{prop}$ is determined according to the formula

$$T_{prop} = \frac{T_{roundA1} - T_{replyB1} + T_{roundB2} - T_{replyA2} + .. + T_{roundA(n-2)} - T_{replyB(n-2)} + T_{roundB(n-1)} - T_{replyA(n-1)}}{2(n-1)}$$

$$n = 2k + 1, k \in N > 1$$

**9.** Method according to claim 1 or 2, wherein, within the scope of the evaluation, either only the first or only the second transceiver determines the spatial distance and is notified beforehand, by the other transceiver, the round time interval determined at the other transceiver and the reply time interval which has occurred at the other transceiver.

**10.** Method according to claim 1 or 2, wherein the two transceivers determine the spatial distance, and the round time intervals which have been determined and the reply time intervals which have occurred previously are sent from the first transceiver to the second and from the second transceiver to the first.

**11.** Method according to claim 1 or 2, wherein a third transceiver determines the spatial distance between the first and second transceivers, and the first and second transceivers alternatively or additionally transmit the round time intervals and reply time intervals determined to the third transceiver beforehand.

**12.** Method according to claim 1 or 2, wherein the request data frames and reply data frames sent contain more than two signal pulses (a1, a2, ..an, b1, b2, ..., bn), and the receiving times of more than two signal pulses of a respective request or reply data frame are detected at a respective receiver.

**13.** Method according to claim 12, wherein the respective transmitter of a request or reply data frame emits signal pulses (b1', b2') of the data frame at transmission times which are delayed, relative to a time schedule defined by the pulse time interval predetermined at the transmitter end within the data frame which is to be emitted, so that the signal pulses are on average emitted at the schedule times predetermined by the time schedule.

**14.** Method according to claim 12 or 13, wherein the respective receiver of a request or reply data frame delays signal pulses (b1', b2') of the received data frame relative to a time schedule defined by the pulse time interval of the signal pulses received, so that the delayed signal pulses are on average received with the pulse time interval predetermined at the transmitter end.

**15.** Method according to claim 14, wherein a spread of the time delay of a signal pulse of the data frame at the transmitter or receiver end, or wherein the spread of the sum of the time delays of a signal pulse at the transmitter and receiver end, is greater than the accuracy of a time measurement at the receiver end.

**16.** Method according to claim 14, wherein, at the respective receiver of a data frame, the receiving times ($t_{RB1}$) of a plurality of signal pulses contained in a received request or reply data frame, relative to a time schedule (R) defined by the pulse time interval of the signal pulses received and an agreed reference point in the request or reply data frame, are detected and stored.

**17.** Method according to claim 16, wherein the particular transceiver which is receiving determines an average receiving time relative to the time schedule (R) after the receiving times of the signal pulses have been ascertained.

**18.** Method according to claim 1, 2 or 12, wherein the respective transceiver which is receiving a signal pulse determines the time at which a detected signal pulse has a maximum signal gain or a maximum value of a correlation with a predetermined signal pattern.

**19.** Method according to claim 14, wherein the respective receiver, after the determination of a request or reply receiving time and before the subsequent determination of the next request or response receiving time, restarts a clock generator or oscillator which it uses to determine receiving times.

**20.** Method according to claim 19, wherein, while receiving a request or reply data frame, the respective receiver modulates the frequency of a clock generator or oscillator which it uses to determine transmission and/or receiving times of the signal pulses, according to a pseudo-random sequence.

**21.** Method according to claim 1 or 2, wherein, in the event of a pulse sequence caused by a multipath propagation of an individual signal pulse being present in the received signal as the receiving time of the signal pulse, the respective receiver of a request or reply data frame determines the earliest time within a predetermined time window at which the received signal assumes a maximum value.

22. Method according to claim 1 or 2, wherein the first and second transceivers agree the values of the reply time intervals ($T_{replyAk}$, $T_{replyBi}$) before emitting a request data frame.

23. Method according to claim 1 or 2, wherein the first and second transceivers run the process repeatedly and before emitting the first request data frame of the first run they agree a sequence of different values of reply time intervals and in subsequent runs they each adhere to the next predetermined reply time interval in the sequence.

24. Method according to claim 22 or 23, wherein, during the process of agreeing the reply time intervals or the sequence of reply time intervals, the first and second transceivers transmit secretly encrypted messages to one another.

25. Method according to claim 1 or 2, wherein the first and second transceivers vary the reply time interval as a function of an unknown pseudo-random number sequence.

26. Method according to claim 1 or 2, wherein the first and second transceivers measure the reply time interval that they use and the reply time intervals measured are used during the evaluation to determine the distance.

27. Method according to claim 1 or 2, wherein the signal pulses used to determine the distance are simultaneously used as information symbols.

28. Method according to claim 1 or 2, wherein the request data frames and reply data frames transmitted between the first and second transceivers obey a transmission protocol of layer 2 of the OSI reference model.

29. Method according to claim 1 or 2, wherein the signal pulses are chirp pulses.

30. Method according to claim 29, wherein two complementary types of chirp pulses are used which have an identical centre frequency and pulse duration but, when compared, the two complementary types of chirp pulses have a contrary frequency path which is symmetrical about the centre frequency, rising in one type of chirp pulse and falling in the other type of chirp pulse during the pulse duration, the complementary types of chirp pulse being used in equal numbers in a request or reply data frame in order to determine distance.

31. Method according to claim 1 or 2, wherein a calibration run is carried out in which, before a first signal round, within the scope of determining distance from the other transceiver, the first or second or both transceivers carry out at least one pair of signal rounds to determine the distance from a calibrating transceiver or from each calibrating transceiver at a known distance from the respective transceiver, which additionally uses a reply time interval known to the respective transceiver or to be notified thereto,
wherein the spatial distance from the calibrating transceiver thus determined and the spatial distance which was previously known are compared and
wherein the comparison results are used within the scope of the subsequent distance determination for error correction.

32. Method according to claim 31, wherein, during the process of determining a distance, or at a time interval of the order of one second before or after, either a current temperature at the site of a respective transceiver or a current supply voltage of a respective transceiver is determined or both the current temperature and the current supply voltage are determined.

33. Method according to claim 32 wherein, before or during the calibration run, the first or the second or both transceivers

- store the comparison results for determining error data characteristic of the respective transceiver, either as a function of the temperature at the site of a respective transceiver or as a function of the current supply voltage of a respective transceiver or as a function of the two parameters mentioned,
- use the error data obtained in order to determine a temperature-dependent and supply voltage-dependent error correction function which is individual to the respective transceiver, or a corresponding error correction table for distance values which is stored in the respective transceiver,
- and wherein distance values obtained within the scope of a subsequent distance determination are corrected by applying the error correcting function or by using a correction value contained in the error table.

34. Method according to claim 1 or 2, wherein

- the distance measurement is repeated after a predeterminable or dynamically variable measuring time interval and
- by forming a difference in distance of consecutively determined distance values between the first and second transceivers and subsequently forming a quotient of the difference in distance and the measuring time interval, the velocity of the transceivers relative to one another is determined.

35. Method according to claim 34, wherein

- two velocity values are obtained with a predeterminable or dynamically variable velocity measurement time interval and
- by forming a difference in velocity of consecutively determined velocity values and subsequently forming the quotient of the difference in velocity and the measuring time interval, the acceleration of the transceivers relative to one another is determined.

36. Method according to claim 1 or 2, wherein the number of the respective signal rounds initiated is selected as a function of a predetermined accuracy of distance determination.

37. Method according to claim 34, wherein the number of initiated signal rounds additionally dependent on a predetermined upper limit of the duration of the distance determination is selected.

38. Method for determining the position of a first transceiver relative to at least one other transceiver within a distance range of the order of 10 km, wherein a method according to one of the preceding claims is used to determine the distance between the first and the or each additional transceiver.

39. Method according to one of the preceding claims,

- comprising a step of ascertaining a clock generator error of both transceivers in the evaluation step,
- wherein a subsequent distance determination relating to at least one of the two transceivers, in a departure from the method recited in claim 1, comprises only a single signal round initiated by one of the transceivers and an evaluation step,
- and wherein, in the evaluation step of the subsequent distance determination, falsification of a distance value provisionally obtained on the basis of the single signal round is computationally eliminated on the basis of the previously ascertained clock generator error of the relevant transceiver for finally determining the distance value.

40. Transceiver for determining the spatial distance from a second transceiver within a distance range of the order of 10 km using the method according to claim 1,

- having a transmitting unit which is configured to initiate at least a first signal round by sending a respective first request data frame which contains a sequence of at least two signal pulses with a predetermined pulse time interval, at a first request transmission time ($T_{TA1}$, $T_{TB2}$), to a second transceiver,
- having a receiver unit which is configured to monitor the receipt of a first reply data frame sent in response to the first request data frame by the second transceiver and to detect a first reply receiving time ($T_{RA1}$) associated with the receipt of the first reply data frame, relative to the first request transmitting time ($T_{TA1}$),
- the transmitting unit additionally being configured, after receiving a second request data frame initiating a second signal round from the second transceiver, to send out, to the second transceiver, a second reply data frame which contains a sequence of at least two signal pulses with a predetermined pulse time interval, with a reply time interval ($T_{replyA2}$) from an associated second request receiving time ($T_{RA2}$) of the second request data frame, after receiving a first request data frame from a second transceiver initiating a first signal round, to send out, to the second transceiver, a first reply data frame which contains a sequence of at least two signal pulses with a predetermined pulse time interval, with a reply time interval ($T_{replyB1}$) relative to an associated first request receiving time ($T_{RB1}$) of the first request data frame, and, on the first request data frame being received by the second transceiver, to initiate a second signal round by sending a second request data frame which contains a sequence of at least two signal pulses with a predetermined pulse time interval to the second transceiver at a second request transmitting time ($T_{TB1}$),
- the receiving unit additionally being configured to monitor the receipt of a second reply data frame in response to the second request data frame sent by the second transceiver and to detect a second reply receiving time

($T_{RB2}$) assigned to the receiving of the second reply data frame, relative to the second request transmitting time ($T_{TB2}$),

- the transceiver being configured to emit the first and second reply data frames, after decoding and checking the first or second request data frame, respectively, if successful, with a predetermined value of the reply time interval relative to the particular request receiving time with a time precision with which the reply time intervals ($T_{replyA2}$, $T_{replyB1}$) at the first and second transceivers in the signal rounds are either identical or have a difference, or an average difference, in the event of more than one signal round being initiated by each transceiver, amounting to not more than 200 microseconds,

- and wherein the respective request data frames and reply data frames conform to protocol rules of a messaging protocol and contain protocol and useful data.

41. Transceiver according to claim 40, wherein the transceiver is configured to emit the first and second reply data frames with a predetermined value of the reply time interval relative to the particular request receiving time with a time precision with which the reply time intervals ($T_{replyA2}$, $T_{replyB1}$) at the first and second transceivers in the signal rounds are either identical or have a difference, or an average difference, in the event of more than one signal round being initiated by each transceiver, amounting to not more than 20 microseconds.

42. Transceiver according to claim 40 or 41, having an evaluating unit which is connected to the transmitting and receiving unit and is configured to determine a round time interval ($T_{roundA1}$, $T_{roundB2}$) between the request transmission time ($T_{TA1}$, $T_{TB2}$) of a request data frame sent out by the transmitting unit and the reply receiving time ($T_{RA1}$, $T_{RB2}$) of a reply data frame received from the second transceiver.

43. Transceiver according to claim 42, wherein the evaluating unit has a data link to the second transceiver and is additionally configured to transmit to the second transceiver, through the transmitting unit, a reply time interval ($T_{replyA2}$, $T_{replyB1}$) that has been detected and a round time interval ($T_{roundA1}$, $T_{roundB2}$) that has been ascertained, or to receive, at the second transceiver, through the receiving unit, a reply time interval ($T_{replyA2}$, $T_{replyB1}$) that has been detected and a round time interval ($T_{roundA1}$, $T_{roundB2}$) that has been ascertained, and to ascertain a signal propagation time *Tprop* between the first and second transceivers by means of the round time interval(s) and the reply time interval(s) that have been ascertained, and to determine the spatial distance between the first and second transceivers by multiplying the signal propagation time *Tprop* by a known propagation velocity of the signal pulses.

44. Transceiver according to claim 40 or 41, wherein the transmitting unit is configured to transmit the second request data frame to the second transceiver to initiate the second signal round after the first reply data frame.

45. Transceiver according to claim 40 or 41, wherein the transmitting unit is configured to emit a combined request and reply data frame to the second transceiver at the second request transmission time ($T_{TB1}$) with the predetermined reply time interval ($T_{replyB1}$, $T_{replyA2}$) relative to the first receiving time ($T_{RB1}$) of the first request data frame, said combined request and reply data frame combining the function of a first reply data frame with the function of a second request data frame in a single data frame, and wherein the receiving unit is configured to monitor the receipt of a second reply data frame sent in response to the combined request and reply data frame by the second transceiver and to detect a second reply receiving time ($T_{RB2}$) associated with the receiving of the second reply data frame relative to the second request transmission time ($T_{TB1}$).

46. Transceiver according to claim 40 or 41, wherein the transmitting unit is configured to emit request data frames and reply data frames with more than two signal pulses in each case, and wherein the receiving unit is configured to detect the receiving times of more than two signal pulses of a particular request or reply data frame.

47. Transceiver according to claim 46, wherein the transmitting unit is configured to emit signal pulses of a request or reply data frame at transmission times which have been delayed, relative to a time schedule (R) defined by the pulse time interval predetermined at the transmitting end in the data frame that is to be emitted, such that the signal pulses are on average emitted at the schedule times preset by the time schedule.

48. Transceiver according to claim 46 or 47, wherein the receiving unit is configured to delay signal pulses of a request or reply data frame that has been received, relative to a time schedule (R) defined by the pulse time interval of the signal pulses received, such that the delayed signal pulses are on average received at the pulse time interval predetermined at the transmitting end.

49. Transceiver according to claim 48, wherein the receiving unit is configured to determine an average receiving time in relation to the time schedule (R) after detecting the receiving times of the signal pulses.

50. Transceiver according to claim 40 or 41, wherein the receiving unit is configured to determine the time when a detected signal pulse has a maximum signal gain or a maximum value for a correlation with a predetermined signal pattern, and ascertain this time as the receiving time of a signal pulse.

51. Transceiver according to claim 40 or 41, wherein the receiving unit is configured to restart a clock generator or oscillator used to determine transmitting and receiving times, after determining a request or reply receiving time and before subsequently determining a request or reply receiving time of the next request or reply data frame.

52. Transceiver according to claim 40 or 41, wherein the receiving unit is configured to test a received signal for the presence of a pulse sequence resulting from a multipath propagation of an individual signal pulse and, if such an pulse sequence is present, to determine the earliest time within a predetermined time window when the received signal takes on a maximum value as the receiving time for the signal pulse.

53. Transceiver according to claim 40 or 41, which is configured to agree the values of the reply time intervals ($T_{replyAk}$, $T_{replyBi}$) with the second transceiver before emitting a request data frame.

54. Transceiver according to claim 40 or 41, which is configured to measure the reply time interval.

55. Transceiver according to claim 40 or 41, which is configured to agree a sequence of different values of reply time intervals with the second transceiver and, when performing each successive distance determination, to adhere to the next predetermined reply time interval in the sequence.

56. Transceiver according to claim 40 or 41, wherein the transmitting unit is configured to use the signal pulses used for distance determination as information symbols at the same time.

57. Transceiver according to claim 40 or 41, wherein the transmitting unit is configured to emit generated signal pulses in the form of chirp pulses and the receiving unit is configured to reconstruct signal pulses generated at the transmitting end from the chirp pulses received.

58. Transceiver according to claim 57, wherein the transmitting unit is configured to emit two complementary types of chirp pulses which have an identical centre frequency and pulse duration but a reversed frequency path which is symmetrical about the centre frequency, rising in one type of chirp pulse and falling in the other type of chirp pulse during the pulse duration, the complementary types of chirp pulse being used in equal numbers in a request or reply data frame for determining distance.

59. Transceiver according to claim 42, which is configured to repeat the distance measurement after a predeterminable or dynamically variable measuring time interval, and wherein the evaluating unit is configured to ascertain the velocity of the transceivers relative to one another by forming a difference in distance of consecutively determined distance values between the first and second transceivers and subsequently forming a quotient of the difference in distance and the measuring time interval.

60. Transceiver according to claim 42, which is configured to obtain two velocity values with a predeterminable or dynamically variable velocity measuring time interval, and wherein the evaluating unit is configured to determine the acceleration of the transceivers relative to one another by forming a difference in velocity of consecutively determined velocity values and subsequently forming the quotient of the difference in velocity and the measuring time interval.

61. Arrangement for determining the spatial distance between a first transceiver according to claim 40 or 41 and a second transceiver according to claim 40 or 41 within a distance range of the order of 10 km.

62. Arrangement for determining the spatial distance between a first transceiver according to claim 42 and a second transceiver according to claim 42 within a distance range of the order of 10 km.

63. Arrangement according to claim 61, having a third transceiver which is configured to establish a data link to the first and second transceivers for transmitting round time intervals and reply time intervals to the third transceiver, and which comprises a distance determining unit which is configured to establish a data link to the first and second transceivers for transmitting round time intervals and reply time intervals to the distance determining unit,

- for determining a signal propagation time *(Tprop)* between the first and second transceivers by means of the round time intervals determined by the first and second transceivers and the reply time intervals detected by the first and second transceivers, and
- for calculating the spatial distance between the first and second transceivers by multiplying the signal propagation time *(Tprop)* by a known propagation velocity of the signal pulses.

64. Arrangement according to claim 62, wherein the first and second transceivers are configured to carry out the first and second signal rounds at least twice until the distance between the first and second transceiver has been travelled by a number of request and reply data frames which is a multiple of four, and to determine all the additional round time intervals and reply time intervals, the first and second transceivers being configured to use reply time intervals $T_{replyAk}$, k = 2, 4, 6, 8, .., (n-1) from $T_{replyA2}$ to $T_{replyA(n-1)}$ and $T_{replyBi}$, i = 1, 3, 5, 7, .., (n-2) from $T_{replyB1}$ to $T_{replyB(n-2)}$ which have an average difference according to the formula

$$\Delta T_{\mathrm{Re}plyAVG} = \frac{T_{replyA2} - T_{replyB1} + .. + T_{replyA(n-1)} - T_{replyB(n-2)}}{\frac{n-1}{2}}$$

amounting to a maximum of 20 microseconds, and wherein the evaluating unit of the first transceiver is configured to determine additional round time intervals $T_{roundA}i$ wherein i = 3, 5, 7, ..., (n-2) from $T_{roundA3}$ to $T_{roundA(n-2)}$, wherein n is an odd number, after the first signal round sequence has been repeated, and the evaluating unit of the second transceiver is configured to determine additional round time intervals $T_{roundBk}$ wherein k = 4, 6, 8, ..., (n-1) from $T_{roundB4}$ to $T_{roundB(n-1)}$, after the second signal round sequence has been repeated.

65. Arrangement comprising two transceivers according to claim 45, wherein each transceiver is configured to initiate at least two signal rounds until the distance between the first and second transceivers has been travelled by an odd number n>3 of request and reply data frames, and to ascertain all the additional round intervals and detect the reply time intervals, the first or second transceiver being configured

- to determine additional round time intervals $T_{roundAi}$ wherein i = 3, 5, 7, ..., (n-2), from $T_{roundA3}$ to $T_{roundA(n-2)}$, after the first signal round sequence has been repeated, and
- to determine additional round time intervals $T_{roundBk}$ wherein k = 4, 6, 8, ..., (n-1), from $T_{roundB4}$ to $T_{roundB(n-1)}$, after the second signal round sequence has been repeated,
- the first and second transceivers being configured to use reply time intervals $T_{replyAk}$, k = 2, 4, 6, 8, ..., (n-1) from $T_{replyA2}$ to $T_{replyA(n-1)}$, $T_{replyBi}$, i = 1, 3, 5, 7, ..., (n-2) from $T_{replyB1}$ to $T_{replyB(n-2)}$ which have an average difference according to the formula

$$\Delta T_{\mathrm{Re}plyAVG} = \frac{T_{replyA2} - T_{replyB1} + .. + T_{replyA(n-1)} - T_{replyB(n-2)}}{\frac{n-1}{2}}$$

amounting to a maximum of 20 microseconds.

66. Arrangement according to claim 62, having at least one additional calibrating transceiver which is a transceiver according to claim 42 and which is arranged at a pre-defined distance from the first or second transceiver and which uses a reply time interval known to the first or second transceiver or to be notified to them, wherein the first or second or both transceivers are configured to carry out at least one pair of signal rounds, before a first signal round, to determine the distance from the calibrating transceiver, within the scope of determining distance from the other transceiver in each case, and wherein the first or second transceiver is configured to compare the spatial distance from the calibrating transceiver thus determined with the distance from the calibrating transceiver that was previously known, and to use the comparison results within the scope of the subsequent distance determination for error correction of the spatial distance thus determined.

67. Arrangement according to claim 66, wherein the first or the second transceiver or both transceivers are configured to measure either a current temperature at the site of a respective transceiver or a current supply voltage of a respective transceiver or both the current temperature and the current supply voltage, during the process of determining a distance, or at a time interval of the order of one second before or after.

**68.** Arrangement according to one of the preceding claims 61 to 67, wherein a databank unit is provided in a transceiver which is configured to detect clock generator errors of transceivers using a distance measurement carried out previously and store these errors,

- wherein the first and second transceivers are configured, after ascertaining their clock generator errors, to carry out distance measurements with only a single signal round and an evaluating step, in a departure from the method recited in claim 1,
- and wherein the evaluating unit of the transceivers is configured to computationally eliminate, in the evaluating step, a falsification of a distance value provisionally obtained after a single signal round, using the clock generator error of the transceiver in question previously stored by the databank unit, to finally determine the distance value.

**Revendications**

**1.** Procédé de détermination de la distance spatiale entre deux émetteurs-récepteurs (A, B) dans une plage de distance de l'ordre de grandeur de 10 km,

- dans lequel les deux émetteurs-récepteurs déclenchent respectivement au moins une circulation de signal, une circulation de signal comprenant les stades suivants :

a) envoi d'au moins d'au moins une trame (30, 42, 52) de données de demande, qui contient une séquence d'au moins deux impulsions de signal ayant une distance temporelle entre les impulsions déterminée à l'avance par un premier émetteur-récepteur déclenchant la circulation d'un signal à un deuxième émetteur-récepteur à un instant ($T_{TA1}$, $T_{TB2}$) d'émission de demande,
b) réception de la trame (30, 40, 52) de données de demande chez un deuxième émetteur-récepteur à un instant ($T_{RB1}$, $T_{RA2}$) de réception de demande,
c) décodage et contrôle de la trame de données de demande reçue et ensuite, en cas de succès, émission d'une trame (32, 44, 54) de données de réponse, qui contient une séquence d'au moins deux impulsions de signal ayant une distance temporelle entre les impulsions déterminée à l'avance du deuxième émetteur-récepteur au premier émetteur-récepteur à un instant ($T_{TB1}$, $T_{TA2}$) d'émission d'une réponse, qui a une distance ($T_{replyB1}$, $T_{replyA2}$) temporelle de réponse respective à partir de l'instant ($T_{RB1}$, $T_{RA2}$) de réception d'une demande et détection de la distance temporelle de réponse respective,
d) réception, décodage et contrôle de la trame (32, 44, 54) de données de réponse chez le premier émetteur-récepteur (A) déclenchant la circulation du signal et détection d'un instant ($T_{RA1}$, $T_{RB2}$) de réception d'une réponse associée à la trame de données de réponse par rapport à l'instant ($T_{TA1}$, $T_{TB2}$) d'émission de demande,

- dans lequel on effectue une évaluation, qui comprend les stades suivants :

e) détermination d'une distance ($T_{roundA1}$, $T_{roundB2}$) temporelle de circulation entre l'instant ($T_{TA1}$, $T_{TB2}$) d'émission de demande respective et l'instant ($T_{RA1}$, $T_{rB2}$) de réception de réponse respective pour chaque circulation du signal, ce stade pouvant être effectué à tout instant après la circulation du signal concerné,
f) détermination d'un temps ($T_{prop}$) de parcours du signal entre les deux émetteurs-récepteurs (A, B) à l'aide des distances ($T_{roundA1}$, $T_{roundB2}$) temporelles de circulation déterminées et des distances ($T_{replyB1}$, $T_{replyA2}$) temporelles de réponse et
g) détermination de la distance spatiale entre le premier et le deuxième émetteurs-récepteurs en multipliant le temps ($T_{prop}$) de parcours du signal par une vitesse de propagation connue à l'avance des impulsions de signal,

- et dans lequel on effectue les circulations du signal de manière à ce que les distances ($T_{replyA2}$, $T_{replyB1}$) temporelles de réponse soient identiques ou aient une différence, dans le cas où on effectue plus d'une circulation du signal déclenchée par chaque émetteur-récepteur, une différence moyenne, se montant au maximum à 200 microsecondes, dans lequel
- les trames de données de demande et les trames de données de réponse respectives contiennent des données de protocole et des données utiles correspondant à des prescriptions d'un protocole de message.

2. Procédé suivant la revendication 1, dans lequel on effectue les circulations du signal de manière à ce que les distances ($T_{replyA21}$, $T_{replyB1}$) temporelles de réponse soient identiques ou aient une différence, dans le cas où on effectue plus d'une circulation du signal déclenchée par chaque émetteur-récepteur, une différence moyenne, qui se monte au maximum à 20 microsecondes.

3. Procédé suivant la revendication 1 ou 2, dans lequel le deuxième émetteur-récepteur (B) déclenche une circulation du signal seulement après qu'il a envoyé la trame de données de réponse au premier émetteur-récepteur (A).

4. Procédé suivant la revendication 1 ou 2, dans lequel le deuxième émetteur-récepteur (B) déclenche, en même temps que l'émission de la trame de données de réponse, une circulation du signal, la trame de données de réponse, qui est associée à une première circulation du signal déclenchée par le premier émetteur-récepteur, formant, en même temps, la trame de données de réponse d'une deuxième circulation du signal déclenchée par le deuxième émetteur-récepteur.

5. Procédé suivant l'une des revendications précédentes, dans lequel les deux émetteurs-récepteurs (A, B) déclenchent exactement une circulation du signal et le temps $T_{prop}$ de parcours du signal est déterminé suivant la formule

$$T_{prop} = \frac{T_{roundA1} - T_{replyB1} + T_{roundB2} - T_{replyA2}}{4}$$

6. Procédé suivant la revendication 3, dans lequel

- chaque émetteur-récepteur déclenche au moins deux circulations du signal jusqu'à ce que la distance entre le premier et le deuxième émetteurs-récepteurs ait été parcourue par un nombre de trames de données de demande et de trames de données de réponse, qui est d'au moins huit et un multiple de quatre,
- on détermine les distances $T_{roundAi}$ temporelles de circulation avec i = 3, 5, 7, ..., (n-2) de $T_{roundA3}$ à $T_{roundA(n-2)}$ supplémentaires aux circulations du signal déclenchées par le premier émetteur-récepteur, n>3 étant un nombre impair et
- on détermine les distances $T_{roundBk}$ temporelles de circulation avec k = 4, 6, 8, ..., (n-1) de $T_{roundB4}$ à $T_{roundB(n-1)}$ supplémentaires aux circulations du signal déclenchées par le deuxième émetteur-récepteur,
- dans lequel il apparaît des distances $T_{replyAk}$ temporelles de réponse avec k = 2, 4, 6, 8, ..., (n-1) de $T_{replyA2}$ à $T_{replyA(n-1)}$ et $T_{replyBi}$ avec i = 1, 3, 5, 7, ..., (n-2) de $T_{replyB1}$ à $T_{replyB(n-2)}$, qui ont une différence moyenne suivant la formule

$$\Delta T_{ReplyAVG} = \frac{T_{replyA2} - T_{replyB1} + .. + T_{replyA(n-1)} - T_{replyB(n-2)}}{\frac{n-1}{2}}$$

se montant au maximum à 20 microsecondes.

7. Procédé suivant la revendication 4, dans lequel

- chaque émetteur-récepteur (A, B) déclenche au moins deux circulations du signal jusqu'à ce que la distance entre le premier et le deuxième émetteurs-récepteurs ait été parcourue par un nombre impair n>3 de trames de données de demande et de trames de données de réponse, toutes les distances temporelles supplémentaires de circulation étant déterminées et toutes les distances temporelles supplémentaires de réponse étant détectées,
- après avoir effectué de manière répétée la première succession de circulations du signal, des distances $T_{roundAi}$ temporelles de circulation supplémentaires avec i = 3, 5, 7, ..., (n-2) sont déterminées de $T_{roundA3}$ à $T_{roundA(n-2)}$ et
- après avoir effectué de manière répétée la deuxième succession de stades de circulation du signal, des distances $T_{roundBk}$ temporelles de circulation supplémentaires avec k = 4, 6, 8, ..., (n-1) sont déterminées de $T_{roundB4}$ à $T_{roundB(n-1)}$,
- dans lequel il apparaît des distances temporelles de réponse $T_{replyAk}$ avec k = 2, 4, 6, 8, ..., (n-1) de $T_{replyA2}$ à $T_{replyA(n-1)}$ et $T_{replyBi}$ avec i = 1, 3, 5, 7, ..., (n-2) de $T_{replyB1}$ à $T_{replyB(n-2)}$, qui ont une différence moyenne suivant la formule

$$\Delta T_{\text{Re}plyAVG} = \frac{T_{replyA2} - T_{replyB1} + .. + T_{replyA(n-1)} - T_{replyB(n-2)}}{\frac{n-1}{2}}$$

se montant au maximum à 20 microsecondes.

8. Procédé suivant la revendication 6 ou 7, dans lequel on détermine le temps Tprop de parcours du signal suivant la formule

$$T_{prop} = \frac{T_{roundA1} - T_{replyB1} + T_{roundB2} - T_{replyA2} + .. + T_{roundA(n-2)} - T_{replyB(n-2)} + T_{roundB(n-1)} - T_{replyA(n-1)}}{2(n-1)}$$

$$n = 2k+1, k \in N > 1$$

9. Procédé suivant la revendication 1 ou 2, dans lequel, dans le cadre de l'évaluation, on détermine la distance spatiale, seulement du premier ou seulement du deuxième émetteur-récepteur, et l'autre émetteur-récepteur lui transmet d'abord la distance temporelle de circulation déterminée du côté de l'autre émetteur-récepteur et la distance temporelle de réponse apparue du côté de l'autre émetteur-récepteur.

10. Procédé suivant la revendication 1 ou 2, dans lequel les deux émetteurs-récepteurs déterminent la distance spatiale et les distances temporelles de circulation déterminées respectivement et les distances temporelles de réponse, qui sont apparues, sont transmises auparavant du premier au deuxième émetteur-récepteur et du deuxième au premier émetteur-récepteur.

11. Procédé suivant la revendication 1 ou 2, dans lequel un troisième émetteur-récepteur détermine la distance spatiale entre le premier et le deuxième émetteurs-récepteurs et le premier et le deuxième émetteurs-récepteurs transmettent les distances temporelles de circulation déterminées et les distances temporelles de réponse auparavant alternativement ou supplémentairement au troisième émetteur-récepteur.

12. Procédé suivant la revendication 1 ou 2, dans lequel les trames de données de demande et les trames de données de réponse transmises contiennent plus que deux impulsions (a1, a2, ...an, b1, b2, ...bn) de signal et, du côté d'un récepteur respectif, les instants de réception de plus de deux impulsions de signal d'une trame respective de données de demande ou de données de réponse sont détectés.

13. Procédé suivant la revendication 12, dans lequel l'émetteur respectif d'une trame de données de demande ou d'une trame de données de réponse émet des impulsions (b1', b2') de signal de la trame de données à des instants d'émission, qui, par rapport à une trame de temps définie par la distance temporelle entre les impulsions déterminées à l'avance du côté de l'émetteur dans la trame de données à émettre, sont décalées de manière à émettre des impulsions du signal en moyenne aux instants de trame donnés à l'avance par la trame de temps.

14. Procédé suivant la revendication 12 ou 13, dans lequel le récepteur respectif d'une trame de données de demande ou de données de réponse décale des impulsions (b1', b2') de signal de la trame de données reçues par rapport à une trame de temps, qui est définie par la distance temporelle entre les impulsions de signal reçues, de manière à ce que les impulsions de signal décalées soient reçues en moyenne à la distance temporelle entre les impulsions déterminées à l'avance du côté de l'émetteur.

15. Procédé suivant la revendication 14, dans lequel une dispersion du décalage temporel d'une impulsion du signal de la trame de données du côté de l'émetteur ou du récepteur ou dans lequel la dispersion de la somme des décalages temporels d'une impulsion du signal du côté de l'émetteur et du récepteur est plus grande que la précision d'une mesure de temps du côté du récepteur.

16. Procédé suivant la revendication 14, dans lequel, chez chaque récepteur d'une trame de données, les instants $(T_{RB1})$ de réception d'une multiplicité d'impulsions de signal contenues dans une trame reçue de données de demande ou de données de réponse sont détectées par rapport à une trame (R) de temps définie par la distance temporelle entre les impulsions du signal reçues et un point de référence convenu dans la trame de données de demande ou dans la trame de données de réponse et sont mémorisées.

**17.** Procédé suivant la revendication 16, dans lequel l'émetteur-récepteur, qui reçoit respectivement, détermine, après la détection des instants de réception des impulsions du signal, un instant de réception moyen par rapport à la trame (R) de temps.

**18.** Procédé suivant la revendication 1, 2 ou 12, dans lequel l'émetteur-récepteur d'une impulsion de signal recevant respectivement détermine l'instant où une impulsion du signal détectée a un gain de signal maximum ou une valeur maximum d'une corrélation avec un modèle de signal déterminé à l'avance.

**19.** Procédé suivant la revendication 14, dans lequel le récepteur respectif fait débuter à nouveau, après une détermination d'un instant de réception d'une demande ou d'une réponse et avant une détermination suivante d'un instant suivant de réception d'une demande ou d'une réponse, une horloge ou un oscillateur qu'il utilise pour la détermination d'instants de réception.

**20.** Procédé suivant la revendication 19, dans lequel le récepteur respectif module, pour la détermination d'instants d'émission et/ou de réception des impulsions du signal, suivant une séquence pseudo aléatoire, la fréquence de l'horloge ou de l'oscillateur qu'il utilise, pendant la réception d'une trame de données de demande ou de réponse.

**21.** Procédé suivant la revendication 1 ou 2, dans lequel le récepteur respectif d'une trame de données de demande ou de données de réponse détermine, en présence d'un train d'impulsions dans le signal de réception tenant à une propagation suivant plusieurs voies d'une impulsion individuelle de signal, comme instant de réception de l'impulsion du signal, l'instant le plus tôt dans une fenêtre de temps déterminée à l'avance, dans laquelle le signal de réception prend une valeur maximum.

**22.** Procédé suivant la revendication 1 ou 2, dans lequel le premier et le deuxième émetteurs-récepteurs s'accordent avant l'émission d'une trame de données de demande sur les valeurs des distances ($T_{replyAk}$, $T_{replyBi}$) temporelles de distance.

**23.** Procédé suivant la revendication 1 ou 2, dans lequel le premier et le deuxième émetteurs-récepteurs exécutent le procédé plusieurs fois et, avant l'émission de la première trame de données de demande de la première exécution, s'accordent sur une suite de valeurs différentes de distance temporelle de réponse et observent, lors d'exécutions venant ensuite, respectivement la distance temporelle de réponse prescrite venant ensuite dans la suite.

**24.** Procédé suivant la revendication 22 ou 23, dans lequel le premier et le deuxième émetteurs-récepteurs transmettent, pendant qu'ils conviennent des distances temporelles de réponse ou de la suite des distances temporelles de réponse, des messages chiffrés secrètement entre eux.

**25.** Procédé suivant la revendication 1 ou 2, dans lequel le premier et le deuxième émetteurs-récepteurs font varier la distance temporelle de réponse en fonction d'une suite de nombres pseudo aléatoire inconnue.

**26.** Procédé suivant la revendication 1 ou 2, dans lequel le premier et le deuxième émetteurs-récepteurs mesurent la distance temporelle de réponse qu'ils utilisent respectivement et les distances temporelles de réponse mesurées sont mises à profit lors de l'évaluation de la détermination de la distance.

**27.** Procédé suivant la revendication 1 ou 2, dans lequel les impulsions de signal utilisées pour la détermination de la distance sont utilisées en même temps comme symboles d'information.

**28.** Procédé suivant la revendication 1 ou 2, dans lequel les données de trame de demande et les données de trame de réponse transmises entre le premier et le deuxième émetteurs-récepteurs obéissent à un protocole de transmission de la couche 2 du modèle de référence OSI.

**29.** Procédé suivant la revendication 1 ou 2, dans lequel les impulsions de signal sont des impulsions chirp.

**30.** Procédé suivant la revendication 29, dans lequel on utilise deux types complémentaires d'impulsions chirp, qui ont une fréquence moyenne identique et une durée d'impulsions identique, mais qui, par rapport à deux types d'impulsions chirp complémentaires, ont, pendant la durée de l'impulsion, une réponse fréquentielle opposée et symétrique autour de la fréquence moyenne, croissante pour un type d'impulsions chirp et décroissante pour l'autre type d'impulsions chirp, dans lequel, pour déterminer la distance, on utilise en un même nombre les types d'impulsions chirp complémentaires dans une trame de données de demande ou dans une trame de données de réponse.

**31.** Procédé suivant la revendication 1 ou 2, dans lequel on effectue une circulation d'étalonnage par le fait que le premier ou le deuxième ou les deux émetteurs-récepteurs effectuent, avant une première circulation du signal dans le cadre de la détermination de la distance à respectivement l'autre émetteur-récepteur, au moins une paire de circulations de signal pour déterminer la distance à l'émetteur-récepteur respectif d'un émetteur-récepteur d'étalonnage ou d'un émetteur-récepteur d'étalonnage disposé à une distance connue à l'avance, émetteur-récepteur d'étalonnage qui utilise, en outre, une distance temporelle de réponse connue de l'émetteur-récepteur respectif ou à lui transmettre respectivement,

dans lequel on compare la distance spatiale à l'émetteur-récepteur d'étalonnage ainsi déterminée et celle connue à l'avance et

dans lequel on utilise le résultat de la comparaison dans le cadre de la détermination de distance qui suivra pour effectuer une correction d'erreur.

**32.** Procédé suivant la revendication 31, dans lequel, pendant qu'on effectue une détermination de distance ou, dans un laps de temps de l'ordre de grandeur d'une seconde avant ou après, on détermine une température présente à l'emplacement d'un émetteur-récepteur respectif ou une tension d'alimentation présente d'un émetteur-récepteur respectif ou à la fois la température présente et la tension d'alimentation présente.

**33.** Procédé suivant la revendication 32, dans lequel le premier ou le deuxième ou les deux émetteurs-récepteurs, avant d'effectuer la circulation d'étalonnage ou pendant qu'il l'effectue,

- mémorisent le résultat de la comparaison pour la détermination de données erronées caractéristiques pour l'émetteur-récepteur respectif en fonction de la température de l'emplacement d'un émetteur-récepteur respectif ou en fonction de la tension d'alimentation présente d'un émetteur-récepteur respectif ou en fonction des deux paramètres mentionnés,
- tirent parti des données d'erreur déterminées pour la détermination d'une fonction de correction d'erreur individuelle pour l'émetteur-récepteur respectif, qui dépend de la température et de la tension d'alimentation, ou pour la détermination d'une table de correction d'erreur correspondante pour des valeurs de distance, qui sont mémorisées dans l'émetteur-récepteur respectif,
- et dans lequel des valeurs de distance déterminées dans le cadre d'une détermination de distance venant ensuite sont corrigées en utilisant la fonction de correction d'erreur ou en tirant parti d'une valeur de correction contenue dans la table d'erreur.

**34.** Procédé suivant la revendication 1 ou 2, dans lequel

- on répète la détermination de distance suivant une distance temporelle de mesure pouvant être déterminée à l'avance ou pouvant être modifiée dynamiquement et
- en formant une différence de distance entre des valeurs de distance déterminées l'une après l'autre entre le premier et le deuxième émetteurs-récepteurs et en formant ensuite le quotient de la différence de distance par la distance temporelle de mesure, on détermine la vitesse des émetteurs-récepteurs l'un par rapport à l'autre.

**35.** Procédé suivant la revendication 34, dans lequel

- on détermine deux valeurs de vitesse par une distance temporelle de mesure de vitesse pouvant être déterminée à l'avance ou pouvant être modifiée dynamiquement et
- en formant une différence de vitesse entre des valeurs de vitesse déterminées l'une après l'autre et en formant ensuite le quotient de la différence de vitesse par la distance temporelle de mesure, on détermine l'accélération des émetteurs-récepteurs l'un par rapport à l'autre.

**36.** Procédé suivant la revendication 1 ou 2, dans lequel on choisit le nombre des circulations du signal déclenchées respectivement en fonction d'une précision déterminée à l'avance de la détermination de la distance.

**37.** Procédé suivant la revendication 34, dans lequel on choisit le nombre des circulations du signal déclenchées en fonction supplémentairement d'une limite supérieure déterminée à l'avance de la durée pendant laquelle on effectue la détermination de la distance.

**38.** Procédé de détermination de la position d'un premier émetteur-récepteur par rapport à au moins un autre émetteur-récepteur dans une plage de distances de l'ordre de grandeur de 10 km, dans lequel on utilise, pour la détermination de la distance entre le premier et le ou chaque autre émetteur-récepteur, un procédé suivant l'une des revendications précédentes.

**39.** Procédé suivant l'une des revendications précédentes,

- comprenant un stade de détermination d'une erreur d'horloge de deux émetteurs-récepteurs dans le stade d'évaluation,
- dans lequel une détermination de distance venant ensuite et concernant au moins l'un des deux émetteurs-récepteurs ne comprend, en s'écartant de l'exécution du procédé de la revendication 1, qu'une seule circulation du signal déclenchée par l'un des émetteurs-récepteurs et qu'un stade d'évaluation,
- et dans lequel, dans le stade d'évaluation de la détermination de distance venant ensuite, on calcule, pour la détermination définitive de la valeur de la distance, une altération d'une valeur de distance déterminée provisoirement sur la base de la circulation unique du signal, en raison de l'erreur d'horloge déterminée auparavant de l'émetteur-récepteur concerné.

**40.** Emetteur-récepteur de détermination de la distance spatiale à un deuxième émetteur-récepteur dans une plage de distance de l'ordre de grandeur de 10 km par le procédé suivant la revendication 1,

- comprenant une unité d'émission, qui est constituée pour déclencher, à un premier instant ($T_{TA1}$, $T_{TB2}$) d'émission de demande vers un deuxième émetteur-récepteur, au moins une première circulation du signal par émission d'une première trame de données de demande respective, qui contient une séquence d'au moins deux impulsions de signal ayant une distance temporelle entre les impulsions déterminées à l'avance,
- comprenant une unité de réception, qui est constituée pour contrôler la réception d'une première trame de données de réponse envoyée par le deuxième émetteur-récepteur en réponse à la première trame de données de demande et pour détecter, par rapport au premier instant ($T_{RA1}$) d'émission de demande, un premier instant ($T_{TA1}$) de réception de réponse associé à la réception de la première trame de données de réponse,
- dans lequel l'unité d'émission est constituée en outre
pour, après réception d'une deuxième trame de données demande, déclenchant une deuxième circulation du signal, par le deuxième émetteur-récepteur, émettre vers le deuxième émetteur-récepteur une deuxième trame de données de réponse, qui contient une séquence d'au moins deux impulsions de signal ayant une distance temporelle entre les impulsions déterminée à l'avance, à une distance ($T_{replyA2}$) temporelle de réponse d'un deuxième instant ($T_{RA2}$) de réception de demande associé de la deuxième trame de données de demande,
pour, après réception d'une première trame de données de demande, déclenchant une première circulation du signal, par un deuxième émetteur-récepteur, émettre, vers le deuxième émetteur-récepteur, une première trame de données de réponse, qui contient une séquence d'au moins deux impulsions de signal ayant une distance temporelle entre les impulsions déterminée à l'avance, à une distance ($T_{replyB1}$) temporelle de réponse par rapport à un premier instant ($T_{RB1}$) de réception de demande associé de la première trame de données de demande et, à la réception de la première trame de données de demande par le deuxième émetteur-récepteur, déclencher, vers le deuxième émetteur-récepteur, à un deuxième instant ($T_{TB1}$) d'émission de demande, une deuxième circulation du signal, en émettant une deuxième trame de données de demande, qui contient une séquence d'au moins deux impulsions de signal ayant une distance temporelle entre les impulsions déterminée à l'avance,
- dans lequel l'unité de réception est constituée en outre
pour contrôler la réception d'une deuxième trame de données de réponse envoyées par le deuxième émetteur-récepteur en réponse à la deuxième trame de données de demande et détecter, par rapport au deuxième instant ($T_{TB2}$) d'émission de demande, un deuxième instant ($T_{RB2}$) de réception de réponse associé à la réception de la deuxième trame de données de réponse,
- dans lequel l'émetteur-récepteur est constitué pour émettre avec une précision dans le temps la première et la deuxième trames de données de réponse après décodage et contrôle de la première ou de la deuxième trame de données de demande avec succès, avec une valeur déterminée à l'avance de la distance temporelle de réponse par rapport à l'instant de réception de demande respectif, dans lequel les distances ($T_{replyA2}$, $T_{replyB1}$) temporelles de réponse sont, du côté du premier et du deuxième émetteurs-récepteurs dans les circulations du signal, identiques ou ont une différence, une différence moyenne dans le cas de l'exécution de plus d'une circulation du signal déclenchée par chaque émetteur-récepteur, qui se monte au maximum à 200 microsecondes,
- et dans lequel les trames de données de demande respectives et les trames de données de réponse respectives contiennent des données de protocole et utiles correspondant à des prescriptions d'un protocole de message.

**41.** Emetteur-récepteur suivant la revendication 40, dans lequel l'émetteur-récepteur est constitué pour émettre avec une précision dans le temps la première et la deuxième trames de données de réponse avec une valeur déterminée à l'avance de la distance temporelle de réponse par rapport à l'instant de réception de demande respective, dans lequel les distances ($T_{replyA2}$, $T_{replyB1}$) temporelles de réponse sont, du côté du premier et du deuxième émetteurs-récepteurs dans les circulations du signal, identiques ou ont une différence, une différence moyenne dans le cas de l'exécution de plus d'une circulation du signal déclenchée par chaque émetteur-récepteur, qui se monte au maximum à 20 microsecondes.

**42.** Emetteur-récepteur suivant la revendication 40 ou 41, comprenant une unité d'évaluation, qui est reliée à l'unité d'émission et à l'unité de réception et qui est constituée pour déterminer une distance ($T_{roundA1}$, $T_{roundB2}$) temporelle de circulation entre l'instant ($T_{TA1}$, $T_{TB2}$) d'émission de demande d'une trame de demande envoyée par l'unité d'émission et l'instant ($T_{RA1}$, $T_{RB2}$) de réception de réponse d'une trame de données de réponse reçue par le deuxième émetteur-récepteur.

**43.** Emetteur-récepteur suivant la revendication 42,
dans lequel l'unité d'évaluation a une liaison de données vers le deuxième émetteur-récepteur et est constituée, en outre,
pour transmettre au deuxième émetteur-récepteur par l'unité d'émission une première distance ($T_{replyA2}$, $T_{replyB1}$) temporelle de réponse détectée et une distance ($T_{roundA1}$, $T_{roundB2}$) temporelle de circulation déterminée, ou
pour recevoir du côté du deuxième émetteur-récepteur par l'unité de réception une première distance ($T_{replyA2}$, $T_{replyB1}$) temporelle de réponse détectée et une distance ($T_{roundA1}$, $T_{roundB2}$) temporelle de circulation déterminée, et
pour déterminer un temps $T_{prop}$ de parcours du signal entre le premier et le deuxième émetteurs-récepteurs à l'aide de la ou des distances temporelles de circulation déterminées et des distances temporelles de réponse, et
pour déterminer la distance spatiale entre le premier et le deuxième émetteurs-récepteurs en multipliant le temps $T_{prop}$ de parcours du signal par une vitesse de propagation connue à l'avance des impulsions de signal.

**44.** Emetteur-récepteur suivant la revendication 40 ou 41, dans lequel l'unité d'émission est constituée pour envoyer au deuxième émetteur-récepteur la deuxième trame de données de demande en vue du déclenchement de la deuxième circulation du signal après la première trame de données de réponse.

**45.** Emetteur-récepteur suivant la revendication 40 ou 41, dans lequel l'unité d'émission est constituée pour, au deuxième instant ($T_{TB1}$) d'émission de demande à la distance ($T_{roundB1}$, $T_{roundA2}$) temporelle de réponse déterminée à l'avance par rapport au premier instant ($T_{RB1}$) de réception de la première trame de données de demande, envoyer au deuxième émetteur-récepteur une trame combinée de données de demande et de réponse, qui réunit dans une trame de données unique à la fois la fonction d'une première trame de données de réponse et la fonction d'une deuxième trame de données de demande,
et dans lequel l'unité de réception est constituée pour contrôler la réception d'une deuxième trame de données de réponse, envoyée en réponse à la trame combinée de données de demande et de réponse par le deuxième émetteur-récepteur, et pour détecter, par rapport au deuxième instant ($T_{TB1}$) d'émission de demande, un deuxième instant ($T_{RB2}$) de réception de réponse associé à la réception de la deuxième trame de données de réponse.

**46.** Emetteur-récepteur suivant la revendication 40 ou 41, dans lequel l'unité d'émission est constituée pour émettre des trames de données de demande et des trames de données de réponse ayant respectivement plus de deux impulsions de signal et dans lequel l'unité de réception est constituée pour détecter les instants de réception de plus de deux impulsions de signal d'une trame respective de données de demande ou de données de réponse.

**47.** Emetteur-récepteur suivant la revendication 46, dans lequel l'unité d'émission est constituée pour émettre une trame de données de demande ou de données de réponse à des instants d'émission, qui, par rapport à une trame (R) de temps, laquelle est définie par la distance temporelle d'impulsions déterminée à l'avance du côté de l'émetteur dans la trame de données envoyée, sont décalés de manière à ce que les impulsions de signal soient envoyées en moyenne aux instants de trame prescrits par la trame de temps.

**48.** Emetteur-récepteur suivant la revendication 46 ou 47, dans lequel l'unité de réception est constituée pour décaler des impulsions de signal d'une trame reçue de données de demande ou de données de réponse par rapport à une trame (R) de temps, qui est définie par la distance temporelle entre les impulsions de signal reçues, de manière à ce que les impulsions de signal décalées soient reçues en moyenne en ayant la distance temporelle entre les impulsions déterminée à l'avance du côté de l'émetteur.

**49.** Emetteur-récepteur suivant la revendication 48, dans lequel l'unité de réception est constituée pour, après la détermination des instants de réception des impulsions de signal, déterminer un instant de réception moyen par rapport à la trame (R) de temps.

**50.** Emetteur-récepteur suivant la revendication 40 ou 41, dans lequel l'unité de réception est constituée pour déterminer à l'instant et pour détecter comme instant de réception d'une impulsion de signal, dans lequel une impulsion de signal détectée a un gain de signal maximum ou une valeur maximum d'une corrélation avec un modèle de signal déterminé à l'avance.

**51.** Emetteur-récepteur suivant la revendication 40 ou 41, dans lequel l'unité de réception est constituée pour, après une détermination d'un instant de réception de demande ou de réponse et avant une détermination venant ensuite d'un instant de réception de demande ou de réponse d'une trame de données de demande ou de réponse venant immédiatement ensuite, relancer une horloge ou un oscillateur utilisé pour la détermination d'instants d'émission et de réception.

**52.** Emetteur-récepteur suivant la revendication 40 ou 41, dans lequel l'unité de réception est constituée pour contrôler dans un signal de réception la présence d'un train d'impulsions tenant à une propagation par voies multiples d'une impulsion de signal individuelle et, en présence d'un train d'impulsions de ce genre, pour déterminer comme instant de réception de l'impulsion du signal l'instant le plus tôt dans une fenêtre de temps déterminée à l'avance où le signal de réception prend une valeur maximum.

**53.** Emetteur-récepteur suivant la revendication 40 ou 41, qui est constitué pour convenir, avant l'émission d'une trame de données de demande avec le deuxième émetteur-récepteur, des valeurs des distances ($T_{replyA2}$, $T_{replyB1}$) temporelles de réponse.

**54.** Emetteur-récepteur suivant la revendication 40 ou 41, qui est constitué pour mesurer la distance temporelle de réponse.

**55.** Emetteur-récepteur suivant la revendication 40 ou 41, qui est constitué pour convenir avec le deuxième émetteur-récepteur d'une suite de valeurs différentes de distance temporelle de réponse et, lors de l'exécution de chaque détermination de distance venant ensuite, adopter respectivement la distance temporelle de réponse suivante donnée à l'avance dans la suite.

**56.** Emetteur-récepteur suivant la revendication 40 ou 41, dans lequel l'unité d'émission est constituée pour utiliser les impulsions de signal utilisées pour la détermination d'une distance en même temps comme symboles d'information.

**57.** Emetteur-récepteur suivant la revendication 40 ou 41, dans lequel l'unité d'émission est constituée pour émettre des impulsions de signal produites sous la forme d'impulsions chirp et l'unité de réception est constituée pour reconstruire, à partir des impulsions chirp reçues, des impulsions de signal produites du côté de l'émetteur.

**58.** Emetteur-récepteur suivant la revendication 57, dans lequel l'unité d'émission est constituée pour émettre deux types complémentaires d'impulsions chirp, qui ont, pendant la durée d'impulsions, une fréquence moyenne et une durée d'impulsion identiques, mais une réponse fréquentielle opposée et symétrique par rapport à la fréquence moyenne croissante pour un type d'impulsions chirp et décroissante pour l'autre type d'impulsions chirp, dans lequel, pour la détermination de la distance, on utilise en respectivement le même nombre les types d'impulsions chirp complémentaires dans une trame de données de demande ou une trame de données de réponse.

**59.** Emetteur-récepteur suivant la revendication 42, qui est constitué
pour répéter la détermination des distances, après une distance temporelle de mesure pouvant être déterminée à l'avance ou pouvant être modifiée dynamiquement, et dans lequel l'unité d'évaluation est constituée pour, en formant une différence de distances entre des valeurs des distances déterminées l'une après l'autre entre le premier et le deuxième émetteurs-récepteurs et ensuite en formant le quotient de la différence de distances par la différence temporelle de mesure, déterminer la vitesse des émetteurs-récepteurs l'un par rapport à l'autre.

**60.** Emetteur-récepteur suivant la revendication 42, qui est constitué
pour déterminer, par une distance temporelle de mesure de vitesse pouvant être déterminée à l'avance ou pouvant se modifier dynamiquement, deux valeurs de vitesse et dans lequel l'unité d'évaluation est constituée pour, en formant une différence de vitesse entre les valeurs de vitesse déterminées l'une après l'autre et ensuite en formant le quotient de la différence de vitesse par la distance temporelle de mesure, déterminer l'accélération des émetteurs-récepteurs l'un par rapport à l'autre.

**61.** Agencement de détermination de la distance spatiale entre un premier émetteur-récepteur suivant la revendication 40 ou 41 et un deuxième émetteur-récepteur suivant la revendication 40 ou 41 dans une plage de distances de l'ordre de grandeur de 10 km.

**62.** Agencement de détermination de la distance spatiale entre un premier émetteur-récepteur suivant la revendication 42 et un deuxième émetteur-récepteur suivant la revendication 42 dans une plage de distances de l'ordre de grandeur de 10 km.

**63.** Agencement suivant la revendication 61, comprenant un troisième émetteur-récepteur, qui est constitué pour l'établissement d'une liaison de données entre le premier et le deuxième émetteurs-récepteurs en vue de transmettre des distances temporelles de circulation et des distances temporelles de réponse au troisième émetteur-récepteur et qui a une unité de détermination de distance, qui est constituée pour l'établissement d'une liaison de données vers le premier et vers le deuxième émetteurs-récepteurs, afin de transmettre des distances temporelles de circulation et des distances temporelles de réponse à l'unité de détermination de distance,

- pour la détermination d'un temps ($T_{prop}$) de parcours du signal entre le premier et le deuxième émetteurs-récepteurs à l'aide des distances temporelles de circulation déterminées par le premier et le deuxième émetteurs-récepteurs et des distances temporelles de réponse détectées par le premier et par le deuxième émetteurs-récepteurs et
- pour le calcul de la distance spatiale entre le premier et le deuxième émetteurs-récepteurs en multipliant le temps ($T_{prop}$) de parcours du signal par une vitesse de propagation connue à l'avance des impulsions de signal.

**64.** Agencement suivant la revendication 62, dans lequel le premier et le deuxième émetteurs-récepteurs sont constitués pour effectuer au moins deux fois la première et la deuxième circulations du signal jusqu'à ce que la distance entre le premier et le deuxième émetteurs-récepteurs ait été parcourue par un nombre de trames de données de demande et de réponse, qui est un multiple de quatre, ainsi que pour déterminer toutes les distances de circulation supplémentaires et pour détecter des distances temporelles de réponse, le premier et le deuxième émetteurs-récepteurs étant constitués pour utiliser des distances temporelles de réponse $T_{replyAk}$ avec k = 2, 4, 6, 8, ..., (n-1) de $T_{replyA2}$ à $T_{replyA(n-1)}$ et $T_{replyBi}$ avec i = 1, 3, 5, 7, ..., (n-2) de $T_{replyB1}$ à $T_{replyB(n-2)}$, qui ont une différence moyenne suivant la formule

$$\Delta T_{ReplyAVG} = \frac{T_{replyA2} - T_{replyB1} + .. + T_{replyA(n-1)} - T_{replyB(n-2)}}{\frac{n-1}{2}}$$

se montant au maximum à 20 microsecondes,
et dans lequel l'unité d'évaluation du premier émetteur-récepteur est constituée
pour, après avoir effectué de manière répétée la première suite de stades de circulation du signal détermine des distances $T_{roundAi}$ temporelles de circulation avec i = 3, 5, 7, ..., (n-2) de $T_{roundA3}$ à $T_{roundA(n-2)}$, n étant un nombre impair et
l'unité d'évaluation du deuxième émetteur-récepteur est constituée pour, après avoir effectué de manière répétée la deuxième suite de stades de circulation du signal, déterminer supplémentairement des distances $T_{roundBk}$ temporelles de circulation supplémentaires avec k = 4, 6, 8, ..., (n-1) de $T_{roundB4}$ à $T_{roundB(n-1)}$.

**65.** Agencement ayant deux émetteurs-récepteurs suivant la revendication 45, dans lequel chaque émetteur-récepteur est constitué pour déclencher au moins deux circulations du signal jusqu'à ce que la distance entre le premier et le deuxième émetteurs-récepteurs ait été parcourue par un nombre impair n>3 de trames de données de demande et de données de réponse, ainsi que pour déterminer toutes les distances supplémentaires de circulation et des distances temporelles de réponse, le premier ou le deuxième émetteur-récepteur étant constitué

- pour déterminer, après avoir effectué de manière répétée la première suite de stades de circulation du signal, des distances $T_{roundAi}$ temporelles de circulation supplémentaires avec i = 3, 5, 7, ..., (n-2) de $T_{roundA3}$ à $T_{roundA(n-2)}$ et
- après avoir effectué de manière répétée la deuxième succession de stades de circulation du signal, pour déterminer des distances $T_{roundBk}$ temporelles de circulation supplémentaires avec k = 4, 6, 8, ..., (n-1) de $T_{roundB4}$ à $T_{roundB(n-1)}$,

- dans lequel le premier et le deuxième émetteurs-récepteurs sont constitués pour utiliser des distances temporelles de réponse $T_{replyAk}$ avec k = 2, 4, 6, 8, ..., (n-1) de $T_{replyA1}$ à $T_{replyA(n-1)}$, $T_{replyBi}$ avec i = 1, 3, 5, 7, ..., (n-2) de $T_{replyB1}$ à $T_{replyB(n-2)}$, qui ont une différence moyenne suivant la formule

$$\Delta T_{ReplyAVG} = \frac{T_{replyA2} - T_{replyB1} + .. + T_{replyA(n-1)} - T_{replyB(n-2)}}{\frac{n-1}{2}}$$

se montant au maximum à 20 microsecondes.

**66.** Agencement suivant la revendication 62, comprenant au moins un émetteur-récepteur supplémentaire d'étalonnage, qui est un émetteur-récepteur suivant la revendication 42 et qui est disposé à une distance connue à l'avance du premier ou du deuxième émetteur-récepteur et qui utilise une distance temporelle de réponse connue ou à transmettre respectivement au premier ou au deuxième émetteur-récepteur,

dans lequel le premier ou le deuxième ou les deux émetteurs-récepteurs sont constitués pour, avant une première circulation du signal, dans le cadre de la détermination de la distance à respectivement l'autre émetteur-récepteur, effectuer au moins une paire de circulations du signal pour la détermination de la distance à l'émetteur-récepteur d'étalonnage,

et dans lequel le premier ou le deuxième émetteur-récepteur est constitué pour comparer la distance spatiale ainsi déterminée et la distance spatiale connue à l'avance à l'émetteur-récepteur d'étalonnage et pour utiliser le résultat de la comparaison, dans le cadre de la détermination de distance venant ensuite, pour la correction d'erreur de la valeur de distance qui y est déterminée.

**67.** Agencement suivant la revendication 66, dans lequel le premier ou le deuxième émetteur-récepteur ou les deux émetteurs-récepteurs sont constitués pour, pendant l'exécution d'une détermination de distance ou dans le laps de temps de l'ordre de grandeur d'une seconde avant ou après, mesurer une température présente à l'emplacement d'un émetteur-récepteur respectif ou une tension d'alimentation présente d'un émetteur-récepteur respectif ou à la fois la température présente et la tension d'alimentation présente.

**68.** Agencement suivant l'une des revendications 61 à 67, dans lequel il est prévu dans un émetteur-récepteur une unité de base de données, qui est constituée pour déterminer des erreurs d'horloge d'émetteurs-récepteurs à l'aide d'une détermination de distance effectuée auparavant et pour les mémoriser,

- dans lequel le premier et le deuxième émetteurs-récepteurs sont constitués pour, après la détermination de leurs distances produisant des erreurs d'horloge, effectuer, en s'écartant de la manière d'effectuer le procédé de la revendication 1, le procédé avec seulement une circulation unique du signal et un stade d'évaluation,
- et dans lequel l'unité d'évaluation de l'émetteur-récepteur est constituée pour, dans le stade d'évaluation, calculer, pour une détermination définitive de la valeur de la distance, une altération d'une valeur de distance déterminée provisoirement après une circulation unique du signal, en accédant aux erreurs d'horloge de l'émetteur-récepteur concerné, mémorisées auparavant par l'unité de base de données.

**Fig.1**

**Fig.2**

**Fig.3**

**Fig.4**

**Fig.5**

**Fig.6**

**Fig.7**

$T_{roundA1}$

$T_{replyA2}$

$T_{roundA(n-2)}$

$T_{replyA(n-1)}$

52

54'

58'

60

64

66'

68'

70

$t_A$

52'

54

58'

60'

64'

66'

68

70'

$t_B$

$T_{replyB1}$

$T_{roundB2}$

$T_{replyB(n-2)}$

$T_{roundB(n-1)}$

**Fig.8**

**Fig.9**

**Fig.10**

**Fig.11**

**Fig.12**

$T_r$

1/2T

$\Delta T_{iRXi}$

E

$t_{ToA}{}^I$

**Fig.13**

104    106    116    110

$T_{reply}{}^I$

$T_{round}{}^I$

CTRL/DATA

CALC/APP    BB/MAC    TX

RX

112

102    108    100    114

**Fig.14**

**Fig.15**

**Fig.16**

**Fig.17**

**Fig.18**

**Fig.19**

**Fig.20**

**EP 1 815 267 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6483454 B1
- US 2001053174 A1